(19) Europäisches Patentamt
European Patent Office
Office européen des brevets

(11) EP 4 410 563 B1

(12) # EUROPEAN PATENT SPECIFICATION

(45) Date of publication and mention of the grant of the patent:
**04.03.2026 Bulletin 2026/10**

(21) Application number: **22872464.7**

(22) Date of filing: **27.05.2022**

(51) International Patent Classification (IPC):
***B41M 5/00*** *(2006.01)* ***B41J 2/01*** *(2006.01)*
***C09D 11/322*** *(2014.01)* ***C09D 11/54*** *(2014.01)*
***C09D 11/107*** *(2014.01)* ***C09D 11/38*** *(2014.01)*
***C09D 11/40*** *(2014.01)*

(52) Cooperative Patent Classification (CPC):
**C09D 11/322; B41J 2/01; C09D 11/107; C09D 11/38; C09D 11/40; C09D 11/54;**
B41M 5/0017; B41M 5/0064

(86) International application number:
**PCT/JP2022/021746**

(87) International publication number:
**WO 2023/047706 (30.03.2023 Gazette 2023/13)**

(54) **AQUEOUS RECORDING LIQUID SET AND METHOD FOR PRODUCING PRINTED MATTER**

WÄSSRIGER AUFZEICHNUNGSFLÜSSIGKEITSSATZ UND VERFAHREN ZUR HERSTELLUNG VON DRUCKSACHEN

ENSEMBLE DE LIQUIDE D'IMPRESSION AQUEUX, ET PROCÉDÉ DE FABRICATION D'OBJET IMPRIMÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2021 JP 2021156305**

(43) Date of publication of application:
**07.08.2024 Bulletin 2024/32**

(73) Proprietors:
- **artience Co., Ltd.**
  **Tokyo 104-8377 (JP)**
- **TOYOCOLOR CO., LTD.**
  **Tokyo 104-8381 (JP)**

(72) Inventors:
- **SUNAOSHI Kazushi**
  **Tokyo 104-8381 (JP)**
- **NOMURA Takanori**
  **Tokyo 104-8381 (JP)**
- **MORITA Riho**
  **Tokyo 104-8381 (JP)**
- **SUZUKI Norio**
  **Tokyo 104-8381 (JP)**

(74) Representative: **SSM Sandmair Patentanwälte Rechtsanwalt Partnerschaft mbB**
**Joseph-Wild-Straße 20**
**81829 München (DE)**

(56) References cited:
**EP-A2- 2 907 670**
**JP-A- 2014 076 619**
**JP-A- 2017 019 252**
**JP-A- 2019 111 687**
**JP-A- 2019 126 909**
**JP-A- 2019 156 995**
**JP-A- 2020 199 717**
**US-A1- 2018 016 384**
**US-A1- 2020 391 533**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

Embodiments of the present invention relate to an aqueous recording liquid set including a pretreatment liquid and an aqueous inkjet ink, and a method for producing printed matter using the aqueous recording liquid set.

BACKGROUND ART

Unlike conventional plate printing, digital printing does not require printing plates. Thus, with the adoption of digital printing, reduction in printing device size, reduction in costs, and the like become possible.

An inkjet printing method is a type of digital printing method. In the inkjet printing method, inkjet ink droplets are jetted from fine nozzles onto a recording medium and adhered to obtain text and/or images (hereinafter collectively referred to as "printed matter"). The inkjet printing method has advantages such as small size and low noise of printing devices and easy colorization. Thus, it is widely used in offices and homes. Further, the inkjet printing method is also increasingly used in industrial applications.

In industrial applications, printing using the inkjet printing method has been performed using solvent inks and ultraviolet (UV) curable inks. However, in recent years, from the viewpoint of safety, health, and environmental considerations, there has been an increasing demand for aqueous inks.

In the past, aqueous inks used in the inkjet printing method (hereinafter also referred to simply as "inkjet") were intended for highly permeable recording media such as plain paper or special paper (e.g., photo glossy paper). Aqueous inks used in printing on these recording media generally contain, as liquid components, water, and a water-soluble organic solvent having a high boiling point, such as glycerin. When an inkjet aqueous ink (hereinafter referred to as "aqueous inkjet ink", or simply "inkjet ink" or "ink") containing these liquid components is printed (applied) on a recording medium, the above liquid components penetrate into the recording medium and dry, and the ink is fixed on the recording medium.

In contrast, recording media used in the inkjet printing method include not only the above highly permeable recording media but also low permeable recording media such as coated paper and art paper, or non-permeable recording media such as film substrates and metal substrates. Until now, it has been possible to produce practically usable printed matter using aqueous inkjet inks for highly permeable recording media and low permeable recording media. In contrast, when aqueous inkjet inks are printed on non-permeable recording media, no liquid component penetrates into the recording media. Thus, drying due to the permeation does not occur, and droplets of aqueous inkjet ink coalesce into mixed color bleeding or color unevenness (non-uniformity of color in an area of the same color), resulting in poor image quality.

In addition, since the permeation of the aqueous inkjet ink into a recording medium does not occur, the adhesion of printed matter relative to the recording medium also deteriorates. The lack of adhesion leads to peeling of the layer of printed matter (printing layer) due to rubbing, and this becomes a practical issue. Furthermore, when printed matter with insufficient drying is bonded with another film or the like (lamination processing) through an adhesive (laminating adhesive), laminate strength is insufficient and a peeling phenomenon (delamination) between layers may occur.

As an example of consideration for the above-described issue, Patent Document 1 discloses an aqueous inkjet ink containing a resin having a specific property and an organic solvent having a specific structure. In Patent Document 1, the above aqueous inkjet ink can be favorably used for inkjet printing on a non-absorbent substrate such as a polyvinyl chloride sheet. However, when a recording medium such as a polypropylene film or a polyethylene terephthalate film, which is often used for producing laminated products, is used, there is an issue that printed matter is inferior in adhesion or image quality.

In contrast, in order to improve adhesion to a non-permeable recording medium and image quality, it is known to apply a pretreatment liquid to the recording medium before an aqueous inkjet ink is printed thereon. In particular, it becomes possible to improve the image quality of printed matter by using a pretreatment liquid containing a component that intentionally causes aggregation of solid components (pigment and resin) in the aqueous inkjet ink and/or thickening of the aqueous inkjet ink (hereinafter also referred to as "aggregation/thickening component").

Note that in the present application, "application of a pretreatment liquid" is used as a general term referring to printing of the pretreatment liquid in a non-contact manner and coating of the pretreatment liquid in contact with a substrate.

Polyvalent metal ions, cationic polymers, hydrogen ions derived from acids, and the like are known as the above aggregation/thickening component. Thus, a polyvalent metal salt, a cationic polymer, an organic acid, or the like containing the component is blended into the pretreatment liquid as a coagulant.

For example, Patent Document 2 discloses that the image quality of printed matter for non-permeable recording media can be improved by using a set of a pretreatment liquid containing a coagulant, resin particles, and a siloxane-based surfactant having a specific structure, and an aqueous inkjet ink containing a pigment, a pigment dispersant, and a water-soluble organic solvent. In an example of Patent Document 2, a pretreatment liquid containing, as a coagulant, one of malic

acid, calcium chloride, or a water-soluble cationic polymer containing a diallylammonium structural unit ("PAS-H-1L" manufactured by Nittobo Medical Co., Ltd.) is actually produced.

However, among the coagulants listed above, malic acid and calcium chloride are highly hygroscopic. Thus, when printed matter is stored for a long period of time, the layer of the pretreatment liquid (pretreatment liquid layer) absorbs moisture in the atmosphere and swells, which may deteriorate adhesion and lamination suitability. Further, the above water-soluble cationic polymer is slightly inferior to malic acid and calcium chloride in aggregation/thickening action. Thus, depending on printing conditions and compositions of aqueous inkjet inks to be combined, there has been an issue that printed matter has inferior image quality.

In addition, Patent Document 3 discloses that a water-based primer (pretreatment liquid) composition containing a water-soluble polyvalent metal salt and a polyester-based polyurethane emulsion (resin particles) can provide printed matter having excellent adhesion, image quality, water resistance, and lamination suitability. In an example of Patent Document 3, a pretreatment liquid containing, as a water-soluble polyvalent metal salt, one of calcium acetate, calcium chloride, or magnesium chloride is actually produced. Furthermore, a pretreatment liquid having a similar structure is also described in an example of Patent Document 4.

However, as will be described in detail later, it was found that when only a non-hydroxycarboxylic acid calcium salt such as calcium acetate is used, printed matter with inferior image quality may be obtained depending on use conditions of the pretreatment liquid, printing conditions, and compositions of aqueous inkjet inks to be combined. In addition, the pretreatment liquid containing calcium acetate emits acetic acid odor when dried, so it was not fully satisfactory in terms of the working environment. Furthermore, as in the case of Patent Document 2 described above, calcium chloride is highly hygroscopic, which may deteriorate the adhesion and lamination suitability of printed matter after long-term storage. Moreover, a magnesium ion contained in magnesium chloride is inferior to a calcium ion in aggregation/thickening action. Thus, it has been difficult to obtain printed matter having excellent image quality regardless of printing conditions, and compositions of aqueous inkjet inks to be combined.

Incidentally, the applicant has previously proposed a set of a pretreatment liquid and an aqueous inkjet ink for the purpose of achieving both image quality and adhesion of printed matter relative to non-permeable recording media. For example, Patent Document 5 discloses a pretreatment liquid containing resin particles having a specific 50% diameter (D50), a coagulant having a specific hygroscopicity, a hydrophobically modified water-soluble urethane resin (thickener), and a surfactant having a specific HLB value, and a set of the pretreatment liquid and an aqueous inkjet ink. In the pretreatment liquid containing all the components described above, it is possible to obtain printed matter having excellent image quality and adhesion by optimizing the viscoelasticity of the pretreatment liquid with the hydrophobically modified water-soluble urethane resin, homogenizing the resin particles with the coagulant, and chemically stabilizing the resin particles. In contrast, it was found that the adhesion and lamination suitability of printed matter are not always fully satisfactory depending on use conditions, for example, when the pretreatment liquid described in Patent Document 5 is used after aging. That is, further examination was necessary in order to obtain printed matter excellent in terms of all of image quality, adhesion, and lamination suitability regardless of use conditions and printing conditions.

As described above, there is still no set of a pretreatment liquid and an aqueous inkjet ink that is capable of obtaining printed matter excellent in terms of all of adhesion, image quality, and lamination suitability regardless of use conditions and printing conditions.

PRIOR ART DOCUMENTS

PATENT DOCUMENTS

Patent Document 1: JP 2013-159619 A
Patent Document 2: JP 2019-163349 A
Patent Document 3: JP 2020-75954 A
Patent Document 4: JP 2020-189439 A
Patent Document 5: JP 2020-75436 A

SUMMARY OF INVENTION

PROBLEMS INVENTION AIMS TO SOLVE

The present invention has been developed in light of the above issues, and an object thereof is to provide an aqueous recording liquid set capable of obtaining printed matter having excellent adhesion and image quality and further having good lamination suitability regardless of whether the printed matter is just after production or after aging.

## MEANS FOR SOLUTION OF THE PROBLEMS

As a result of intensive research aimed at achieving the above object, the inventors of the present invention discovered that excellent printed matter can be obtained by using a pretreatment liquid which contains resin particles and specific ions and has a specified blend ratio thereof, in combination with an aqueous inkjet ink containing a water-soluble organic solvent having a specific mixed SP value, thus completing the present invention.

That is, embodiments of the present invention relate to the following. However, the present invention is not limited to the following embodiments.

An embodiment of the present invention relates to an aqueous recording liquid set including a pretreatment liquid; and a first aqueous inkjet ink, wherein the above pretreatment liquid includes resin particles (A1), a calcium ion, a plurality of carboxylic acid ions, and water, one or more of the above plurality of carboxylic acid ions are a hydroxycarboxylic acid ion, when an amount of the above resin particles (A1) contained in 100 g of the above pretreatment liquid is set as R (g) and a millimolar amount of the above calcium ion contained in 100 g of the above pretreatment liquid is set as CA (mmol), a ratio (R/CA) between a value of R and a value of CA is within a range from 0.11 to 0.50, the above first aqueous inkjet ink contains a pigment, a plurality of water-soluble organic solvents (B2), and water, and when a mixed SP value of a carboxylic acid including the above plurality of carboxylic acid ions and a hydrogen ion is set as SPT and a mixed SP value of the above plurality of water-soluble organic solvents (B2) is set as SPB2, a difference between the SPT and the SPB2 (SPT - SPB2) is within a range from -1.0 to 1.0.

The embodiment relates to the above aqueous recording liquid set, wherein the R/CA is within a range from 0.20 to 0.40.

The embodiment relates to the above aqueous recording liquid set, wherein the above plurality of water-soluble organic solvents (B2) includes a diol-based solvent and a glycol monoalkyl ether-based solvent.

The embodiment relates to the above aqueous recording liquid set, further including a second aqueous inkjet ink, wherein the above second aqueous inkjet ink includes a pigment, a plurality of water-soluble organic solvents (B3), and water, when a mixed SP value of the above plurality of water-soluble organic solvents (B3) is set as SPB3, a difference between the SPT and the SPB3 (SPT - SPB3) is within a range from -0.7 to 1.5 and a difference between the SPB2 and the SPB3 (SPB2 - SPB3) is 0.3 or more.

The embodiment relates to the above aqueous recording liquid set, wherein the above plurality of water-soluble organic solvents (B3) includes a diol-based solvent and a glycol monoalkyl ether-based solvent.

The embodiment relates to the above aqueous recording liquid set, wherein the above first aqueous inkjet ink or the above second aqueous inkjet ink is a white ink.

Further, another embodiment of the present invention relates to a method for producing printed matter using the aqueous recording liquid set of the above embodiment, the above aqueous recording liquid set including the pretreatment liquid and the first aqueous inkjet ink, the method including, in this order, step 1 of applying the above pretreatment liquid on a recording medium, step 2 of printing the above first aqueous inkjet ink using an inkjet printing method on the recording medium on which the pretreatment liquid has been applied, obtained in the above step 1, in such a manner that at least part of the first aqueous inkjet ink overlaps an area on which the above pretreatment liquid has been applied, and step 3 of drying the recording medium on which the first aqueous inkjet ink has been printed, obtained in the above step 2.

Further, another embodiment of the present invention relates to a method for producing printed matter using the aqueous recording liquid set of the above embodiment, the above aqueous recording liquid set including the pretreatment liquid, the first aqueous inkjet ink, and the second aqueous inkjet ink, the method including, in this order, step 1 of applying the above pretreatment liquid on a recording medium, step 2 of printing the above first aqueous inkjet ink using an inkjet printing method on the recording medium to which the pretreatment liquid has been applied, obtained in the above step 1, in such a manner that at least a part of the first aqueous inkjet ink overlaps an area on which the above pretreatment liquid has been applied,

step 3 of printing the above second aqueous inkjet ink using an inkjet printing method on the recording medium on which the first aqueous inkjet ink has been printed, obtained in the above step 2, in such a manner that at least a part of the second aqueous inkjet ink overlaps an area on which the above first aqueous inkjet ink has been printed, and step 4 of drying the recording medium on which the second aqueous inkjet ink has been printed, obtained in the above step 3.

The disclosure of the present application relates to the subject matter described in Japanese Patent Application No. 2021-156305 filed on September 27, 2021, the entire content of which is incorporated herein by reference.

## EFFECTS OF THE INVENTION

The present invention has made it possible to provide an aqueous recording liquid set that provides printed matter having excellent adhesion and image quality and further having good lamination suitability regardless of whether the printed matter is just after production or after aging.

EMBODIMENTS FOR PERFORMING THE INVENTION

Examples of preferred embodiments of the present invention will be described below. Note that the present invention is not limited to the following embodiments and includes various modifications implemented to the extent that they do not deviate from the gist of the invention.

It is generally known that the addition of resin to a pretreatment liquid improves adhesion to recording media and lamination suitability. This is due to: an interaction between a functional group present in molecules of the resin and a functional group present on the surface of a recording medium; an affinity effect based on the structural similarity between molecules of the resin and a material contained in a laminate adhesive; an affinity effect based on the structural similarity between molecules of the resin and the recording medium when the recording medium is a resin substrate such as a plastic film; and the like.

Generally, there are two types of resin forms, water-soluble resin and resin particles, and they are used appropriately according to properties required for a pretreatment liquid and printed matter. In one embodiment, from the viewpoint of improving adhesion and lamination suitability by blending a certain amount or more of resin, resin particles can be favorably used which hardly increase the viscosity of the pretreatment liquid even when a large amount is blended. Further, resin particles are highly hydrophobic in general and once formed into a film, are unlikely to dissolve in and/or swell with water. Thus, by using a pretreatment liquid using resin particles, it is possible to obtain printed matter having excellent abrasion resistance, water resistance, blocking resistance, and the like. Note that the above "blocking" is a phenomenon in which when a substrate and the like that have stuck to the printing surface is removed, part of the ink is taken by the substrate.

Further, when an aqueous inkjet ink is printed on the layer of the pretreatment liquid, the aggregation/thickening component present in the pretreatment liquid is released and diffused into the aqueous inkjet ink. Then, the aggregation/thickening component diffused acts on solid components in the aqueous inkjet ink, causing the aggregation and/or thickening of the solid components, which suppresses mixed color bleeding and the like and provides printed matter having excellent image quality.

As described in the background art section, various materials are known as the aggregation/thickening component. In particular, a carboxylic acid calcium salt(a calcium salt of carboxylic acid) containing a calcium ion can be favorably used as the aggregation/thickening component. Since the above carboxylic acid calcium salt has small hygroscopicity and does not swell over time, it is possible to obtain printed matter having excellent adhesion, image quality, and lamination suitability over a long period of time.

However, the carboxylic acid calcium salt also generally has a small solubility in water. Thus, there is an issue that the carboxylic acid calcium salt is difficult to dissolve in a pretreatment liquid whose main component is water. Naturally, when the amount of the aggregation/thickening component in the pretreatment liquid is small, mixed color bleeding cannot be sufficiently suppressed, and the image quality of printed matter deteriorates.

Further, when used in combination with the above-described resin particles, there is an issue that the dispersed state of the resin particles is destroyed by the carboxylic acid calcium salt which functions as the aggregation/thickening component and thus the storage stability of the pretreatment liquid is reduced.

Note that a carboxylic acid ion making up the carboxylic acid calcium salt is classified into a hydroxycarboxylic acid ion having a hydroxyl group and a non-hydroxycarboxylic acid ion having no hydroxyl group. At this time, while the details are unclear, the non-hydroxycarboxylic acid calcium salt has generally a greater solubility relative to water than the hydroxycarboxylic acid calcium salt having a similar structure. Thus, from the viewpoint of improving the image quality of printed matter, it is thought that the non-hydroxycarboxylic acid calcium salt can be more favorably used. However, in this case, the above-described issue such as deterioration of the storage stability of the pretreatment liquid when combined with resin particles may occur. In addition to this issue, when an aqueous inkjet ink is printed on a dried pretreatment liquid layer, issues such as poor release of the calcium ion (aggregation/thickening component) and deterioration of image quality may occur due to reduction in the affinity between the pretreatment liquid layer and the aqueous inkjet ink.

Therefore, in view of the situation described above, as a result of intensive investigation, the present inventors discovered that the issues can be solved by an aqueous recording liquid set including: a pretreatment liquid containing resin particles and a specific ion, and having a specified blend ratio thereof; and an aqueous inkjet ink containing a water-soluble organic solvent having a specific mixed SP value. With the aqueous recording liquid set having the above configuration, it is possible to obtain printed matter having excellent adhesion and image quality and further having good lamination suitability, regardless of whether the printed matter is just after production or after aging. While the detailed mechanism by which the above-described issues can be favorably solved using the aqueous recording liquid set having the above configuration are unclear, the present inventors have the following speculation.

First, the pretreatment liquid making up the recording liquid set according to the embodiment of the present invention (hereinafter referred to simply as "pretreatment liquid of the present invention") includes resin particles (A1), and further includes a calcium ion and multiple carboxylic acid ions including at least one type of hydroxycarboxylic acid ions.

The resin particles (A1) are used to impart adhesion and lamination suitability to printed matter. Further, the

calcium ion is used as the aggregation/thickening component. However, as described above, simply using the resin particles (A1) in combination with the calcium ion may destroy the dispersed state of the resin particles (A1). Further, the pretreatment liquid of the present invention contains a hydroxycarboxylic acid ion. Thus, it is thought that the amount of the calcium ion that can exist in the pretreatment liquid is reduced in the first place.

However, as a result of investigation by the present inventors, it was found that the above issues can be solved by adding multiple carboxylic acid ions including a hydroxycarboxylic acid ion. The reason for this is considered to be that the presence of a large amount of multiple carboxylic acid ions in the system causes an effect similar to uncommon-ion effect, increasing the solubility of the calcium salt of each carboxylic acid ion. It is also considered that the increase in the amount of hydroxycarboxylic acid ions in the pretreatment liquid caused a sufficient amount of a hydrogen bond to be formed between a hydroxyl group present in the hydroxycarboxylic acid ions and the resin particles (A1), leading to the stabilization of the resin particles (A1).

In addition, the presence of a certain amount of hydroxycarboxylic acid ions may have a positive effect on the image quality and lamination suitability of printed matter. Specifically, due to the presence of a hydroxyl group in the pretreatment liquid, even when an aqueous inkjet ink is printed on a dried pretreatment liquid layer, the affinity with the aqueous inkjet ink is maintained in a favorable state. Thus, the release and diffusion of the calcium ion and the like are easy to proceed, and as a result, mixed color bleeding is suppressed and printed matter having excellent image quality is obtained. Furthermore, solid components in the aqueous inkjet ink form crosslinking through the above hydroxyl group and calcium ion, and printed matter can exhibit elastic behavior as a whole and has viscoelasticity, which is excellent in terms of lamination suitability.

Note that the combination of the calcium ion and carboxylic acid ions is favorably selected also from the viewpoint of the properties of printed matter after aging. With the above combination, the adhesion, image quality, and lamination suitability will not deteriorate even if the printed matter is aged.

The present inventors also found that the above-described effect can be further improved by setting the ratio between the amount of the resin particles (A1) and the millimolar amount of the calcium ion in a specific range. When the pretreatment liquid satisfies the requirement of the ratio in the above specific range, it is thought that, on the surface of the pretreatment liquid layer after drying, the resin particles (A1) necessary for achieving adhesion and lamination suitability and the calcium salt necessary for the aggregation and/or thickening of solid components in the aqueous inkjet ink are present in the optimum amounts necessary for achieving each function. Thus, if the requirement of the above ratio is satisfied, even when the aqueous inkjet ink is printed on a pretreatment liquid layer after drying, it is possible to optimize the release rate of the aggregation/thickening component and the spreading rate of droplets of the aqueous inkjet ink, and to obtain printed matter in which mixed color bleeding and voids are each suppressed. Here, voids refer to a phenomenon in which the aqueous inkjet ink is not present on printed matter where it should originally be present and the recording medium becomes visible. Further, when the pretreatment liquid satisfies the above ratio condition, it is also possible to improve adhesion and lamination suitability from the initial stage of production to after long-term storage.

In contrast, a first aqueous inkjet ink making up the recording liquid set according to the embodiment of the present invention (hereinafter referred to simply as "first aqueous inkjet ink of the present invention"), which is used in combination with the pretreatment liquid of the present invention, contains multiple water-soluble organic solvents (B2). In an embodiment of the present invention, the absolute value of the difference between a mixed SP value (SPB2) of the multiple water-soluble organic solvents (B2) and a mixed SP value (SPT) of the carboxylic acid that is contained in the pretreatment liquid and includes multiple carboxylic acid ions and a hydrogen ion is within 1. In such an embodiment, since the mixed SP values are close to each other, it is thought that carboxylic acid ions and a calcium ion which are considered to exist close to the carboxylic acid ions in the pretreatment liquid, and the first aqueous inkjet ink containing the multiple water-soluble organic solvents (B2) are easily compatible or miscible with each other. Consequently, it is thought that when the first aqueous inkjet ink comes into contact with the pretreatment liquid layer, the calcium ion is rapidly released and diffused into the first aqueous inkjet ink and functions as the aggregation/thickening component.

Note that as described above, hydroxycarboxylic acid ions are present in the pretreatment liquid of the present invention. Thus, it is thought that a hydrogen bond is formed between: a hydroxyl group in the hydroxycarboxylic acid ions; and the water-soluble organic solvent (B2) and water, thereby further facilitating the above compatibility or miscibility.

In addition, the first aqueous inkjet ink of the present invention is characterized in that it contains two or more types of water-soluble organic solvent (B2). By using multiple water-soluble organic solvents together in this manner, it is easy to control mixed SP values, dryness, and surface tension, and to improve the image quality of printed matter and the jetting stability of the aqueous inkjet ink. Furthermore, since it is possible to improve the wetting spreadability of the first aqueous inkjet ink on the treatment liquid layer, combined with the rapid release of the calcium ion described above, it is possible to obtain printed matter that has particularly excellent image quality and suppresses the occurrence of mixed color bleeding or voids.

As described above, with the aqueous recording liquid set having the above structure, it is possible to obtain printed matter having excellent adhesion and image quality and further having good lamination suitability, regardless of whether it is just after production or after aging.

Note that the above "SP value" is an abbreviation of a solubility parameter. The SP values of materials favorably used in the present invention will be described below in the detailed description of each material. In contrast, for a material for which the SP value is not described in this description, the SP value will be calculated using Fedor's estimation method represented by formula 1 below.

Formula 1:

$$(\text{SP value}) = (\Sigma Ecoh / \Sigma V)^{1/2}$$

In the above formula 1, Ecoh represents cohesive energy defined for each functional group, and V represents the molar molecular volume defined for each functional group. These Ecoh and V are described in R. F. Fedors, "Polymer Engineering & Science" (Vol. 14, No. 2, 1974, p.147-154).

The above "mixed SP value" represents the SP value of a mixture when two or more types of materials are used, and in the present invention, the weighted average of the SP values of respective materials is used as the mixed SP value. For example, when a component having an SP value of 8.0 is mixed with a component having an SP value of 10.0 at a mass ratio of 1:3, the mixed SP value of the mixture is $8.0 \times 1 \div (1 + 3) + 10.0 \times 3 \div (1 + 3) = 9.5$.

In the present invention, $(cal/cm^3)^{1/2}$ is used as the unit of the SP value.

Next, the constituent materials of the pretreatment liquid of the present invention will be described in detail.

<Resin particles (A1)>

The pretreatment liquid of the present invention contains resin particles (A1). Note that the term "resin particles" in the present invention represents a water-insoluble resin having a 50% diameter of 5 to 1,000 nm measured using a method described below. Further, the term "water-insoluble resin" in the present invention represents a resin that is not transparent to the naked eye in a 1% by mass aqueous solution at 25 °C of the resin in question.

As described above, the resin particles (A1) contribute to improving the adhesion and lamination suitability of printed matter. Further, by determining the blending amount based on the millimolar amount of the calcium ion and using together with the hydroxycarboxylic acid ion, adhesion and lamination suitability can be maintained in a good state, and further the storage stability of the pretreatment liquid can be improved.

The types of the above resin particles (A1) are not particularly limited. Examples used thereof include a urethane (urea) resin, urethane-(meth)acrylic resin, (meth)acrylic resin, styrene-(anhydrous)maleic acid resin, olefin-(anhydrous) maleic acid resin, rosin ester resin, rosin phenolic resin, terpene phenolic resin, amine resin, amide resin, amine-amide resin, amine-epihalohydrin resin, amine-amide-epihalohydrin resin, polyolefin resin, and polyester resin.

Among the above, from the viewpoint of adhesion to non-permeable substrates and lamination suitability, it is preferable to use particles of at least one type of resin selected from the group consisting of a urethane (urea) resin, urethane-(meth)acrylic resin, (meth)acrylic resin, and polyolefin resin, as the resin particle (A1). It is particularly preferable to use particles of at least one type of resin selected from the group consisting of urethane (urea) resin, urethane-(meth) acrylic resin, and (meth)acrylic resin.

In the present invention, "urethane (urea)" means urethane or urethane-urea, "(meth)acrylic" means acrylic or methacrylic, and "(anhydrous)maleic acid" means maleic acid or maleic anhydride. However, the (meth)acrylic resin may include a structure derived from a styrenic monomer, such as styrene, methoxystyrene, vinyltoluene, or divinylbenzene, as a constituent unit.

The pretreatment liquid of the present invention may contain only one type of resin particles (A1) or use two or more types of resin particles (A1) in combination. In one embodiment, the above pretreatment liquid favorably contains particles of two or more resins selected from the group consisting of urethane (urea) resin, (meth)acrylic resin, acrylic-urethane resin, and polyolefin resin. By using a combination of resin particles having different properties and types, it is possible to obtain printed matter favorably achieving all of the excellent adhesion, image quality, and lamination suitability together, as well as having excellent blocking resistance and abrasion resistance.

In particular, from the viewpoint of achieving the above properties together, it is favorable that different types of resin particles be contained as the resin particles (A1). For example, combinations of a urethane (urea) resin and a (meth) acrylic resin, a urethane (urea) resin and a polyolefin resin, a (meth)acrylic resin and a polyolefin resin, an acrylic-urethane resin and a polyolefin resin can be preferably selected. In particular, a combination including at least a polyolefin resin is particularly favorably selected because all of the above-described properties can be achieved together at a high level.

Furthermore, when the pretreatment liquid contains particles of a polyolefin resin and particles of at least one type of resin selected from the group consisting of urethane (urea) resin, (meth)acrylic resin, and acrylic-urethane resin, the amount of the particles of the polyolefin resin contained is, relative to the total mass of the resin particles (A1) contained in the pretreatment liquid, preferably within a range from 3% to 30% by mass and particularly preferably from 5% to 20% by mass.

Further, in the particles of at least one type of resin selected, as the resin particles (A1), from the group consisting of urethane (urea) resin, urethane-(meth)acrylic resin, and (meth)acrylic resin, these resin particles may contain an anionic functional group such as a carboxyl group, a sulfo group, or a phospho group. In this case, the acid value of the resin particles (A1) containing the anionic functional group is preferably within a range from 1 to 50 mgKOH/g from the viewpoint of achieving adhesion, image quality, and lamination suitability together. Further, in one embodiment, the acid value is more preferably within a range from 1 to 40 mgKOH/g, even more preferably from 3 to 30 mgKOH/g, and particularly preferably from 5 to 20 mgKOH/g. In the above embodiment, the storage stability of the pretreatment liquid can be easily improved. It is easy to maintain adhesion, image quality, and laminate strength in a favorable state even immediately after the coating of the pretreatment liquid or after a long period of time after the coating. Note that the acid value of resin particles is the number of mg of potassium hydroxide (KOH) required to neutralize an anionic functional group contained in 1 g of the resin particles. The acid value of the resin particles can be measured through a potentiometric titration method using a conventionally known device. Specifically, the value is calculated from the result of titration using a KOH solution in an ethanol/toluene mixed solvent using, for example, an "Automatic Potentiometric Titrator AT-610" manufactured by Kyoto Electronics Manufacturing Co., Ltd.

In contrast, the resin particles (A1) may have a cationic functional group such as an amino group, an ammonium group, an amide group, and a ureide group, from the viewpoint that by making the resin particles (A1) function as the aggregation/thickening component, image quality is particularly improved and printed matter having excellent adhesion can be obtained. In this case, the base number of the resin particles (A1) is preferably within a range from 0.5 to 40 mgKOH/g. Further, from the viewpoint of achieving storage stability of the pretreatment liquid, adhesion, and image quality together, the base number is more preferably within a range from 1 to 30 mgKOH/g, even more preferably from 2 to 25 mgKOH/g, and particularly preferably from 4 to 20 mgKOH/g. Note that the base number of the resin particles is the number of mg of KOH equivalent to the amount of hydrochloric acid necessary to neutralize the cationic functional group contained in 1 g of the resin particles, and can be measured using the same method as in the acid value described above. Specifically, the value is calculated from the result of titration using a hydrochloric acid solution in an ethanol/toluene mixed solvent using, for example, an "Automatic Potentiometric Titrator AT-610" manufactured by Kyoto Electronics Manufacturing Co., Ltd.

The 50% diameter (D50) of the resin particles (A1) is preferably within a range from 20 to 350 nm. In one embodiment, the above 50% diameter is more preferably within a range from 30 to 300 nm, and particularly preferably from 50 to 250 nm. In the above embodiment, excellent adhesion and laminate strength of printed matter and excellent storage stability of the pretreatment liquid can be easily obtained. Further, by forming a film quickly and uniformly, the shape of droplets of the aqueous inkjet ink to be printed later is prevented from becoming uneven, and printed matter also having excellent image quality can be easily obtained. Note that "50% diameter" is the cumulative 50% diameter (median diameter) measured using a dynamic light scattering method on a volume basis using a NANOTRAC UPA-EX150 manufactured by MicrotracBEL Corp.

As a result of intensive investigation, the inventors of the present invention discovered that when the 50% diameter of the resin particles (A1) is RD50 and the millimolar amount of the calcium ion contained in 100 g of the pretreatment liquid is CA, RD50/CA is preferably within a range from 2 to 10, more preferably from 3 to 7, and particularly preferably from 3.5 to 7. While the detailed factors are unclear, it is thought that the resin particles (A1) satisfying the above conditions can sufficiently cover the surface of the pretreatment liquid layer even in the presence of the calcium ion and as a result, it is possible to obtain printed matter achieving all of image quality, adhesion, and lamination suitability together.

When the pretreatment liquid contains two or more types of resin particles (A1), the 50% diameter is measured using a water-based solution in which the two or more types of resin particles (A1) are present, and is used as RD50 for the calculation of the above RD50/CA. Here, the above "water-based solution" means a solution containing an aqueous solvent and a component dispersed and/or dissolved in the aqueous solvent.

The amount of the resin particles (A1) contained in the pretreatment liquid of the present invention is determined in accordance with the millimolar amount of the calcium ion (details will be described below). Then, the amount of the resin particles (A1) contained relative to the total mass of the pretreatment liquid is, in terms of the solid fraction equivalent, preferably within a range from 2% to 30% by mass, more preferably from 3% to 25% by mass, and particularly preferably from 5% to 20% by mass, from the viewpoint of further improving the adhesion and laminate strength of printed matter, and from the viewpoint of blocking resistance, abrasion resistance, and the like.

<Calcium ion>

The pretreatment liquid of the present invention contains a calcium ion. The calcium ion functions as the aggregation/thickening component. Note that the term "calcium ion" in the present invention includes a calcium component solving in the pretreatment liquid, but does not include a calcium component contained in a precipitate from the pretreatment liquid.

The calcium ion is added to the pretreatment liquid in the form of a salt, for example. At this time, as a counter

anion combined with the calcium salt, a carboxylic acid ion, which will be described below, may be used, or another ion (for example, an organic acid ion, an inorganic ion, or the like) may be used.

Although the details will be described below, in one embodiment, it is preferable to select a counter anion for which a calcium salt having a solubility of 1 to 70 g relative to 100 g of water at 20 °C is formed. In such an embodiment, printed matter having excellent adhesion, image quality, and lamination suitability over time can be easily obtained. Further, a pretreatment liquid having excellent storage stability without forming precipitates can be easily obtained. Note that for the above solubility, a value in a calcium salt anhydride is used. Further, specific examples of the counter anion favorably used in the present invention will be described below.

In the pretreatment liquid of the present invention, when the millimolar amount of the calcium ion contained in 100 g of the pretreatment liquid is set as CA, the CA is preferably within a range from 10 to 60 mmol, more preferably from 15 to 50 mmol, and particularly preferably from 20 to 40 mmol. When the above CA is within the above ranges, the aggregation/thickening action can be sufficiently achieved, and printed matter having excellent image quality can be obtained. Further, since the action of resin particles (A1) present in the pretreatment liquid is not inhibited, the adhesion and lamination suitability of printed matter are also good.

Further, as described above, when the calcium ion, which is an aggregation/thickening component, and resin particles (A1), which contribute to adhesion and lamination suitability, coexist in the treatment liquid, adhesion, image quality, and lamination suitability can all be improved. From such a viewpoint, in the present invention, when the amount of resin particles (A1) contained in 100 g of the pretreatment liquid in terms of solid fraction equivalent is set as R (g), the value expressed by R/CA may be within a range from 0.11 to 0.50, is preferably from 0.15 to 0.45, and is particularly preferably from 0.20 to 0.40.

<Carboxylic acid ion>

The pretreatment liquid of the present invention contains multiple carboxylic acid ions, and one or more types of which is a hydroxycarboxylic acid ion.

As described above, by using two or more types of carboxylic acid ions containing at least one or more types of hydroxycarboxylic acids, the dispersed state of the resin particles (A) can be maintained even in the pretreatment liquid in which the calcium ion is present, thereby improving the storage stability of the pretreatment liquid. Further, the presence of the hydroxyl group enhances the affinity with an aqueous inkjet ink containing a water-soluble organic solvent and water, and facilitates the release of the calcium ion into the aqueous inkjet ink, thereby improving image quality. Furthermore, the solubility of each carboxylic acid ion in the presence of the calcium ion is improved by an effect similar to the uncommon-ion effect, and the amount of the calcium ion and carboxylic acid ions added to the pretreatment liquid can be increased, thereby further improving image quality.

The carboxylic acid ions are added to the pretreatment liquid, for example, in the form of a carboxylic acid or a salt. When the form added is a salt, a counter cation may be a calcium ion or may be another cation. Examples of another cation include an alkali metal ion, an alkaline earth metal ion (however, except for calcium ion), a trivalent metal ion, and a quaternary ammonium ion.

The carboxylic acid ions coexist with the calcium ion in the pretreatment liquid. Thus, regardless of the form in which they are added to the pretreatment liquid, from the viewpoint described above, it is preferable to select a carboxylic acid ion for which a calcium salt having a solubility of 1 to 70 g relative to 100 g of water at 20 °C is formed, and it is particularly preferable to select a carboxylic acid ion for which a calcium salt having a solubility of 3 to 40 g relative to 100 g of water at 20 °C is formed.

Specific examples include a formate ion (17 g), acetate ion (28 g), propionate ion (38 g), butyrate ion (17 g), benzoate ion (2 g), lactate ion (3 g), gluconate ion (3 g), and pantothenate ion (35 g). Here, the value given in parentheses is the solubility of a calcium salt relative to 100 g of water at 20 °C.

Further, in one embodiment, it is favorable to use a carboxylic acid ion in which a carboxylic acid including the carboxylic acid ion and a hydrogen ion has an SP value of 11 to 15, and it is particularly favorable to use a carboxylic acid ion in which a carboxylic acid including the carboxylic acid ion and a hydrogen ion has an SP value of 12 to 15. In such an embodiment, the absolute value of the difference with the mixed SP value (SPB2) of multiple water-soluble organic solvents (B2) contained in the first aqueous inkjet ink is easily made within 1. Thus, the calcium ion can quickly function as the aggregation/thickening component, and as a result, printed matter having excellent image quality can be easily obtained. Further, printed matter having excellent adhesion, image quality, and lamination suitability over time can be easily obtained.

Among the carboxylic acid ions listed above for which a calcium salt having a solubility of 1 to 70 g relative to 100 g of water at 20 °C is formed, those having an SP value of 11 to 15 include a formate ion (12.3), acetate ion (11.2), benzoate ion (11.9), lactate ion (14.9), and pantothenate ion (13.5). Here, the value given in parentheses is the SP value of a carboxylic acid including each carboxylic acid ion and a hydrogen ion.

Note that in the present invention, a formate ion, a lactate ion, and a pantothenate ion can be particularly favorably

selected from the viewpoint of the solubility relative to water and the SP value described above.

In the pretreatment liquid of the present invention, when the total millimolar equivalent of a carboxylic acid ion contained in 100 g of the pretreatment liquid is set as A, the A is preferably within a range from 20 to 120 millimolar equivalent, more preferably from 30 to 100 millimolar equivalent, and particularly preferably from 40 to 85 millimolar equivalent. Within these ranges, the storage stability and image quality of the pretreatment liquid described above can be easily realized together.

Further, from the viewpoint of obtaining a recording liquid set including a pretreatment liquid having particularly excellent storage stability and lamination suitability, the value represented by CA $\times$ 2 / A is preferably within a range from 0.8 to 1.1 and more preferably from 0.9 to 1.1.

<Non-carboxylic acid ion>

The pretreatment liquid of the present invention may contain a counter anion of the calcium ion, a counter anion of another polyvalent metal ion (details will be described below), and an ion other than the carboxylic acid ions (non-carboxylic acid ion) as a pH adjuster.

Examples of the non-carboxylic acid ion include an organic acid ion such as a phosphonate ion, a phosphate ion, a phosphite ion, and a phosphinate ion; and an inorganic ion such as a fluoride ion, a chloride ion, a bromide ion, an iodide ion, a sulfate ion, a nitrate ion, a carbonate ion, and a hydrogen carbonate ion. Among these, from the viewpoint described above, it is preferable to select a non-carboxylic acid ion for which a calcium salt having a solubility of 1 to 70 g relative to 100 g of water at 20 °C is formed. Specific examples include a dihydrogen phosphate ion (2 g), a glycerophosphate ion (5 g), a hydrogen carbonate ion (17 g), and an iodide ion (67 g)

In the pretreatment liquid of the present invention, from the viewpoint of favorably achieving the effect of the carboxylic acid ions described above, when the millimolar equivalent of the non-carboxylic acid ion contained in 100 g of the pretreatment liquid is set as B, the value represented by B / (A + B) is preferably within a range from 0 to 0.5, more preferably from 0 to 0.3, and particularly preferably from 0 to 0.1.

<Other aggregation/thickening component>

The pretreatment liquid of the present invention may contain an aggregation/thickening component other than the calcium ion (hereinafter also referred to as "other aggregation/thickening component"). Specific examples of another aggregation/thickening component include a polyvalent metal ion other than the calcium ion (hereinafter also referred to as "another polyvalent metal ion"), and a water-soluble cationic polymer.

(Other polyvalent metal ion)

When the pretreatment liquid contains another polyvalent metal ion, the another polyvalent metal ion is preferably a divalent metal ion. The divalent metal ion is rapidly released when the aqueous inkjet ink comes into contact therewith, and exhibits an excellent aggregation/thickening effect. Further, the rate of aggregation and/or thickening of the divalent metal ion is not too high compared with that of trivalent or higher valent metal ions, and the wet spreading of the aqueous inkjet ink on recording media can be moderately suppressed, thereby obtaining printed matter having excellent image quality.

Examples of the divalent metal ion favorably used in the pretreatment liquid of the present invention include a magnesium ion, a zinc (II) ion, and an iron (II) ion. Further, among these, the magnesium ion can be particularly preferably used. When the magnesium ion is used, printed matter having particularly excellent image quality can be easily obtained because the magnesium ion is rapidly released into an aqueous inkjet ink with which it comes into contact and the rate of aggregation and/or thickening is not too high.

Note that when another polyvalent metal ion is used, one type may be used alone or two or more types may be used in combination. However, from the viewpoint of sufficiently achieving the functions of resin particles (A), a calcium ion, and carboxylic acid ions described above, it is preferable that the following requirements be satisfied. That is, when the total amount of the millimolar content of another polyvalent metal ion contained in 100 g of the pretreatment liquid is set as OC (mmol), it is preferable that CA $\geq$ OC, more preferably CA $\geq$ OC $\times$ 2, even more preferably CA $\geq$ OC $\times$ 5, and particularly preferably CA $\geq$ OC $\times$ 10.

Further, another polyvalent metal ion is added to the pretreatment liquid in the form of a salt with the above-described carboxylic acid; the form of a salt or a complex salt with the above-described non-carboxylic acid ion and/or hydroxide ion; or the form of a hydroxide, for example.

(Water-soluble cationic polymer)

When the pretreatment liquid contains a water-soluble cationic polymer, it is preferable to use a polymer containing one or more structural units selected from the group consisting of a diallylamine structural unit, a diallylammonium structural unita, and an epihalohydrin structural unit. The use of the pretreatment liquid containing these polymers improves the adhesion and lamination suitability of printed matter.

As in the case of the calcium ion described above, it is preferable to select a water-soluble cationic polymer having a solubility of 5 g or more relative to 100 g of water at 20 °C from the viewpoint of obtaining a pretreatment liquid which can obtain printed matter having excellent adhesion, image quality, and lamination suitability over time and also has good storage stability.

Note that whether or not a water-soluble cationic polymer has a solubility of 5 g or more relative to 100 g of water at 20 °C is determined by whether or not a 50% diameter is measured in a sample obtained by allowing a mixture of 5 g of the water-soluble cationic polymer and 100 g of water to stand at 20 °C for 24 hours. At that time, if the water-soluble cationic polymer is available only in the form of an aqueous solution, such as a commercial product, water is added or removed through volatilization to make the sample so that the solid fraction is 5 g relative to 100 g of water. Further, "50% diameter" is the cumulative 50% diameter (median diameter) measured using a dynamic light scattering method on a volume basis, similar to the 50% diameter of the resin particles (A1) described above.

The types of the water-soluble cationic polymer are not particularly limited, and conventionally known cationic polymers can be optionally used. Further, those synthesized using conventionally known synthetic methods may be used, or commercially available products may be used. In particular, a polymer containing a diallylammonium structural unit is particularly favorably selected because it has a strong aggregation/thickening effect, which makes it possible to easily obtain printed matter having excellent image quality. Note that a hydrochloride salt or an ethyl sulfate salt of diallyldimethylammonium and/or diallylmethylethylammonium as the diallylammonium structural unit is favorably selected from the viewpoint of ease of availability.

Note that examples of commercially available water-soluble cationic polymers containing the diallylammonium structural unit include PAS-H-1L, PAS-H-5L, PAS-24, PAS-J-81L, PAS-J-81, PAS-J-41, and PAS-880 (manufactured by Nittobo Medical Co., Ltd.).; UNISENSE FPA1000L, FPA1001L, FPA1002L, FCA1000L, FCA1001L, and FCA5000L (manufactured by Senka Corporation).

For the water-soluble cationic polymer, one type may be used alone, or two or more types may be used in combination. However, from the viewpoint of sufficiently achieving the functions of resin particles (A), a calcium ion, and carboxylic acid ions described above, it is preferable that the following requirements be satisfied. That is, when the total amount of the content of a water-soluble cationic polymer contained in 100 g of the pretreatment liquid is set as PC (g), it is preferable that $R \geq PC$, more preferably $R \geq PC \times 2$, and particularly preferably $R \geq PC \times 5$.

<Water-soluble organic solvent (B1)>

The pretreatment liquid of the present invention may further contain a water-soluble organic solvent (B1). By combined use of the water-soluble organic solvent (B1), the affinity of a hydroxycarboxylic acid ion is improved, and the hydroxycarboxylic acid ion can be made uniformly present in the entirety of the pretreatment liquid layer. Thus, the dispersed state of the resin particles (A1) can be stabilized and the affinity with the aqueous inkjet ink can be improved, thereby improving the storage stability of the pretreatment liquid and the image quality of printed matter. Further, it becomes possible to adjust the wet spreadability and dryness of the pretreatment liquid, thereby facilitating the improvement of uniform applying on recording media and productivity, and the adhesion and image quality of printed matter.

Note that the term "water-soluble organic solvent" in the present invention represents an organic compound which is liquid at 25 °C and has a solubility of 1% by mass or more in water at 25 °C.

In the pretreatment liquid of the present invention, only one type of water-soluble organic solvent (B1) may be used, or two or more types thereof may be used in combination. Further, there is no limitation on the type of water-soluble organic solvent (B1) usable, and conventionally known one can be used optionally. In particular, it is favorable to use a water-soluble organic solvent having a static surface tension of 20 to 40 mN/m at 25 °C from the viewpoint of optimizing the wet spreadability and dryness of the pretreatment liquid and improving the adhesion and image quality of printed matter. It is more favorable to use a water-soluble organic solvent having a static surface tension described above of 20 to 35 mN/m, and it is particularly favorable to use a water-soluble organic solvent having a static surface tension described above of 20 to 30 mN/m. Further, from the same viewpoint, it is favorable to use a water-soluble organic solvent having a boiling point of 75 to 200 °C at 1 atmosphere. It is more favorable to use a water-soluble organic solvent having a boiling point described above of 75 to 190 °C, and it is particularly favorable to use a water-soluble organic solvent having a boiling point described above of 80 to 180 °C.

Note that the static surface tension of the water-soluble organic solvent (B1) is a value measured using the

Wilhelmy method in an environment of 25 °C. Specifically, the measurement can be performed using a platinum plate in an environment of 25 °C using, for example, a "DY-300" manufactured by Kyowa Interface Science Co., Ltd.

Further, from the viewpoint of improving the affinity of the hydroxycarboxylic acid ion, and improving the storage stability of the pretreatment liquid and the image quality and lamination suitability of printed matter, it is preferable to use a water-soluble organic solvent containing one or more hydroxyl groups in the molecular structure. In this case, from the viewpoint of achieving the above effects more favorably, the amount contained of the water-soluble organic solvent including one or more hydroxyl groups in the molecular structure is, relative to the total mass of the water-soluble organic solvent (B1), preferably within a range from 50% to 100% by mass, more preferably from 70% to 100% by mass, and particularly preferably from 90% to 100% by mass.

Note that specific examples of the water-soluble organic solvent containing one or more hydroxyl groups in the molecular structure are the same as those in the case of the aqueous inkjet ink described below.

Further, when not a hydroxycarboxylic acid ion (hereinafter also referred to as "non-hydroxycarboxylic acid ion") is used as a carboxylic acid ion, by also improving the affinity of the non-hydroxycarboxylic acid ion in the pretreatment liquid, the image quality and lamination suitability of printed matter can be improved regardless of whether it is just after production or after aging. From such a viewpoint, when the (mixed) SP value of the above non-hydroxycarboxylic acid ion is set as SPU and the (mixed) SP value of the water-soluble organic solvent (B1) is set as SPB1, SPU - SPB1 is preferably within a range from -1.5 to 1.5 and particularly preferably from -1.2 to 1.2.

Note that the term "(mixed) SP value" represents the SP value of a material when one type of target material is used. When two or more types exists, the weighted average value of the SP values of respective materials is represented.

The total amount of the water-soluble organic solvent (B1) contained in the pretreatment liquid is, relative to the total mass of the pretreatment liquid, preferably within a range from 1% to 50% by mass, more preferably from 2% to 40% by mass, and particularly preferably from 3% to 30% by mass. By keeping the amount contained of the water-soluble organic solvent (B1) within the above ranges, the improvement of the affinity of the hydroxycarboxylic acid ion described above can be achieved, and as a result, the storage stability of the pretreatment liquid and the image quality and lamination suitability of printed matter can be improved. Further, stable and uniform application without causing printing defects over a long period of time can be achieved regardless of the application method of the pretreatment liquid, and the adhesion of printed matter can be improved.

Note that in the pretreatment liquid of the present invention, the amount contained of a water-soluble organic solvent having a boiling point of 240 °C or more at 1 atmosphere is, relative to the total mass of the pretreatment liquid, preferably 5% by mass or less (may be 0% by mass), more preferably 2% by mass or less (may be 0% by mass), and particularly preferably 1% by mass or less (may be 0% by mass). By not containing the water-soluble organic solvent having a boiling point of 240 °C or more, or by keeping the blending amount of the water-soluble organic solvent within the above ranges even when it is included, printed matter having excellent adhesion, image quality, and lamination suitability can be obtained, and the dryness of the pretreatment liquid can be sufficiently satisfied.

Further, for the same reason as above, in addition to the amount contained of the water-soluble organic solvent having a boiling point of 240 °C or more at 1 atmosphere being less than 5% by mass relative to the total mass of the pretreatment liquid, the amount contained of a water-soluble organic solvent having a boiling point of 220 °C or more at 1 atmosphere is, relative to the total mass of the pretreatment liquid, preferably 10% by mass or less (may be 0% by mass), more preferably 5% by mass or less (may be 0% by mass), and particularly preferably 2% by mass or less (may be 0% by mass).

<Surfactant (C1)>

The pretreatment liquid of the present invention may contain a surfactant (C1) for stable and uniform application on recording media. The type of surfactant (C1) usable is not particularly limited, and conventionally known surfactants can be optionally used. In particular, it is more favorable to use an acetylene diol-based surfactant from the viewpoint of enhancing stable and uniform application on recording media and obtaining printed matter having excellent adhesion, image quality, and lamination suitability.

Note that specific examples of the acetylene diol-based surfactant is the same as those in the case of the aqueous inkjet ink described below.

Further, from the viewpoint of enhancing stable and uniform application on the recording media and obtaining printed matter having excellent adhesion, image quality, and lamination suitability, the (mixed) SP value of the surfactant (C1) is preferably within a range from 8 to 11, and particularly preferably from 9 to 10.5.

As the surfactant (C1), a single compound may be used or two or more types may be used in combination. Further, the amount of the surfactant (C1) contained in the pretreatment liquid of the present invention is, relative to the total mass of the pretreatment liquid, preferably within a range from 0.1% to 10% by mass, more preferably from 0.2% to 8% by mass, and particularly preferably from 0.5% to 5% by mass.

<Water>

The amount of water contained in the pretreatment liquid of the present invention is, relative to the total mass of the pretreatment liquid, preferably within a range from 50% to 95% by mass, more preferably from 60% to 92.5% by mass, and particularly preferably from 70% to 90% by mass. Water can enhance the mutual solubility of materials contained in the pretreatment liquid of the present invention such as resin particles (A1), a calcium ion, and carboxylic acid ions. Further, the storage stability of the pretreatment liquid can be improved by using water.

<Other materials>

Besides the above-described materials, the pretreatment liquid of the present invention may further include a material such as a pH adjuster, a colorant, a viscosity adjuster, and a preservative as necessary.

(pH adjuster)

For example, the pretreatment liquid of the present invention may include a pH adjuster from the viewpoints of reducing damage to the components included in the device used for applying the pretreatment liquid (device for applying the pretreatment liquid) and improving the storage stability of the pretreatment liquid by suppressing pH fluctuations over time. There are no limitations on materials usable as the pH adjuster, and one type may be used alone or two or more types may be used in combination.

Note that the above-described material, for example, a carboxylic acid, is a material that achieves the above-described function and is also a pH adjuster.

In addition, in the case of basification of the pretreatment liquid, examples used include alkanolamines such as dimethylethanolamine, diethanolamine, triethanolamine, and N-methyldiethanolamine; ammonia water; hydroxides of alkali metals such as lithium hydroxide, sodium hydroxide, and potassium hydroxide; carbonates of alkali metals such as lithium carbonate, sodium carbonate, sodium bicarbonate, and potassium carbonate. Further, in the case of acidification, inorganic acids such as hydrochloric acid, sulfuric acid, phosphoric acid, and boric acid can be used.

From the viewpoint of effectively achieving the above-described effects, the blending amount of the pH adjuster is, relative to the total mass of the pretreatment liquid, preferably within a range from 0.01% to 5% by mass and more preferably from 0.05% to 3% by mass.

<Colorant>

The pretreatment liquid of the present invention preferably contains substantially no colorant such as a pigment and dye. By using a pretreatment liquid that does not contain colorants and is substantially transparent, it is possible to obtain printed matters that take advantage of the color tones and transparency properties specific to recording media. Note that "contain substantially no" in the present invention means that the material is not allowed to be intentionally added to the extent that the effects of the present invention are prevented, and does not exclude, for example, unintentional contamination of impurities or by-products. Specifically, relative to the total mass of the pretreatment liquid, the material is not contained at 2.0% by mass or more, preferably not contained at 1.0% by mass or more, more preferably not contained at 0.5% by mass or more, and particularly preferably not contained at 0.1% by mass or more.

Meanwhile, in another preferred embodiment, the pretreatment liquid contains a white pigment as a colorant. By using a white pretreatment liquid on colored and/or transparent recording media, it is possible to obtain printed matter having particularly excellent clarity and visibility and good image quality. When the pretreatment liquid contains a white pigment, conventionally known materials can be optionally used as the white pigment. Specifically, the same materials can be used as in the case of the aqueous inkjet ink described below.

<Properties of pretreatment liquid >

The viscosity at 25 °C of the pretreatment liquid of the present invention is preferably within a range from 5 to 200 mPa·s, more preferably from 5 to 180 mPa·s, more preferably from 8 to 160 mPa·s, and particularly preferably from 10 to 150 mPa·s. The pretreatment liquid satisfying the above viscosity ranges can be evenly coated on non-permeable substrates, resulting in printed matter having excellent image quality, adhesion, and lamination suitability. The viscosity of the pretreatment liquid can be measured, according to the viscosity of the treatment liquid, using an E-type viscometer (a TVE25L type viscometer manufactured by Toki Sangyo Co., Ltd.) or a B-type viscometer (a TVB10 type viscometer manufactured by Toki Sangyo Co., Ltd), for example.

Further, by using the pretreatment liquid of the present invention to impart favorable wettability on non-permeable substrates and to form a pretreatment liquid layer that is uniform and has no unevenness, it is possible to obtain printed

matter having excellent image quality, adhesion, and lamination suitability. From such a viewpoint, in one embodiment, the static surface tension of the pretreatment liquid of the present invention is preferably within a range from 20 to 40 mN/m, more preferably from 21 to 37 mN/m, and particularly preferably from 22 to 35 mN/m. Note that the static surface tension in this description can be measured in the same manner as for the surface tension of the water-soluble organic solvent (B1) described above.

<Method for producing pretreatment liquid>

The pretreatment liquid of the present invention containing the above-described component can be produced by mixing, for example, resin particles (A1), a hydroxycarboxylic acid calcium salt, and, as necessary, materials described above such as a water-soluble organic solvent (B1), a surfactant (C1), and a pH modifie, followed by filtration as necessary. However, the method for producing the pretreatment liquid is not limited to the above method. For example, when a white pigment is used as a colorant, a white pigment dispersion containing the white pigment and water may be produced in advance and then mixed with the resin particles (A1) and hydroxycarboxylic acid calcium salt.

The mixing order of the above materials may be discretionary, and for example, the order described in the embodiment described below may be used. During stirring and mixing, the mixture may be heated within a range from 40 to 100 °C as necessary. At this time, the heating is preferably performed at a temperature no higher than the MFT (minimum filmforming temperature) of the resin particles (A1).

Next, regarding the first aqueous inkjet ink of the present invention, and a second aqueous inkjet ink included in the recording liquid set according to a preferred embodiment of the present invention (hereinafter referred to simply as "the second aqueous inkjet ink of the present invention"), constituent materials and the like will be described in detail below. Note that the first aqueous inkjet ink of the present invention and the second aqueous inkjet ink of the present invention will be collectively referred to as "aqueous inkjet ink of the present invention" below.

<Water-soluble organic solvent (B2), water-soluble organic solvent (B3)>

The first aqueous inkjet ink of the present invention includes multiple water-soluble organic solvents (B2). When the mixed SP value of the carboxylic acid which includes multiple carboxylic acid ions and a hydrogen ion and is contained in the pretreatment liquid used in combination with the first aqueous inkjet ink is set as SPT and the mixed SP value of the above multiple water-soluble organic solvents (B2) is set as SPB2, the difference between the SPT and the SPB2 (SPT - SPB2) is within a range from -1.0 to 1.0.

As described above, since the mixed SP value of the above multiple carboxylic acid ions and that of the above multiple water-soluble organic solvents (B2) are close, it is easy to promote compatibilization or miscibility among carboxylic acid ions, the calcium ion existing in close proximity to the carboxylic acid ions, and the first aqueous inkjet ink with each other. As a result, the calcium ion is rapidly released and diffused into the first aqueous inkjet ink, and it is possible to obtain printed matter having excellent image quality. Further, the use of multiple water-soluble organic solvents (B2) facilitates the improvement of the image quality of printed matter and the jetting stability of the aqueous inkjet ink. At the same time, since the wet spreadability of the first aqueous inkjet ink on the treatment liquid layer is improved, printed matter having particularly excellent image quality can also be obtained.

Further, when the aqueous recording liquid set of the present invention includes the second aqueous inkjet ink, the second aqueous inkjet ink includes multiple water-soluble organic solvents (B3). When the mixed SP value of the multiple water-soluble organic solvents (B3) is set as SPB3, the difference between SPT and SPB3 (SPT - SPB3) is within a range from -0.7 to 1.5, and the difference between SPB2 and SPB3 (SPB2 - SPB3) is 0.3 or more. Depending on images and text to be printed, the second aqueous inkjet ink may also be printed on the pretreatment liquid layer. Thus, for the same reason as in the case of the first aqueous inkjet ink described above, that is, from the viewpoint of obtaining printed matter having excellent image quality, it is favorable that the difference between SPT and SPB3 be small. Further, also in the case where the second aqueous inkjet ink is printed on the first aqueous inkjet ink, it is preferable to make adjustment considering that SPT - SPB2 is within a range from -1.0 to 1.0 and SPT - SPB3 is within a range from -0.7 to 1.5. Since the difference between SPB2 and SPB3 does not increase by performing the adjustment as described above, it is thought that the affinity between both aqueous inkjet inks is high as in the case of the pretreatment liquid and the first aqueous inkjet ink. Consequently, it is thought that the calcium ion is easily diffused into the second aqueous inkjet ink, and it becomes possible to obtain printed matter having excellent image quality as in the case of the first aqueous inkjet ink.

Furthermore, when the second aqueous inkjet ink is used, it is preferable that the difference between SPB2 and SPB3 be 0.3 or more. As described above, while the difference between SPB2 and SPB3 does not increase, it is preferable that the second aqueous inkjet ink have a slightly smaller mixed SP value, that is, slightly higher hydrophobicity. Thus, in particular, when the second aqueous inkjet ink is printed after the first aqueous inkjet ink, it is thought that when multiple water-soluble organic solvents (B3) become rich during the drying process of the second aqueous inkjet ink, it becomes possible to suppress moisture absorption in the atmosphere to a certain extent, and as a result, the deterioration of

adhesion and lamination suitability after aging can be prevented.

Conventionally known water-soluble organic solvents can be optionally used as water-soluble organic solvents (B2) and water-soluble organic solvents (B3). In particular, from the viewpoint of improving the affinity with the pretreatment liquid used in combination and improving the adhesion and image quality of printed matter, it is preferable to use a water-soluble organic solvent containing one or more hydroxyl groups in the molecular structure. Furthermore, from the viewpoint of improving the jetting stability of the aqueous inkjet ink and further improving the image quality of printed matter, it is particularly preferable to use a water-soluble organic solvent containing two hydroxyl groups in the molecular structure.

Note that, in terms of more favorably achieving the above effects, the amount contained of a water-soluble organic solvent containing one or more hydroxyl groups in the molecular structure is, relative to the total mass of the water-soluble organic solvents (B2) or the water-soluble organic solvents (B3), preferably within a range from 50% to 100% by mass, more preferably from 70% to 100% by mass, and particularly preferably from 90% to 100% by mass.

For the same reason, the amount contained of a water-soluble organic solvent containing two hydroxyl groups in the molecular structure is, relative to the total mass of the water-soluble organic solvents (B2) or the water-soluble organic solvents (B3), preferably within a range from 40% to 100% by mass, more preferably from 52.5% to 92.5% by mass, even more preferably from 65% to 88.8% by mass, and particularly preferably from 75% to 85% by mass.

Among water-soluble organic solvents favorably used in the present invention, examples of the water-soluble organic solvent containing one hydroxyl group in the molecular structure include: a monohydric alcohol-based solvent such as methanol, ethanol, 1-propanol, 2-propanol, 1-butanol, 2-butanol, 2-pentanol, and 2-hexanol; a glycol monoalkyl ether-based solvent such as ethylene glycol monoethyl ether, ethylene glycol monopropyl ether, ethylene glycol monobutyl ether, ethylene glycol monohexyl ether, ethylene glycol mono-2-ethylhexyl ether, diethylene glycol monomethyl ether, diethylene glycol monoethyl ether, diethylene glycol monopropyl ether, diethylene glycol isopropyl ether, diethylene glycol monobutyl ether, diethylene glycol isobutyl ether, diethylene glycol monohexyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monoethyl ether, propylene glycol monomethyl ether, propylene glycol monoethyl ether, propylene glycol monopropyl ether, propylene glycol isopropyl ether, propylene glycol monobutyl ether, propylene glycol isobutyl ether, propylene glycol monohexyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, 1,2-butylene glycol monomethyl ether, 3-methoxybutanol, and 3-methyl-3-methoxybutanol; and a hydroxyketone-based solvent such as monohydroxyacetone and diacetone alcohol.

Further, among water-soluble organic solvents favorably used in the present invention, examples of the water-soluble organic solvent containing two hydroxyl groups in the molecular structure include: an alkanediol-based solvent such as 1,2-ethanediol, 1,2-propanediol, 1,3-propanediol, 1,2-butanediol, 1,3-butanediol, 1,4-butanediol, 2,3-butanediol, 1,2-pentanediol, 1,5-pentanediol, 1,2-hexanediol, 1,6-hexanediol, 2-methyl-1,3-propanediol, 2,2-dimethyl-1, 3-propanediol, 2-ethyl-2-methyl-1, 3-propanediol, 2-methyl-2-propyl-1, 3-propanediol, 3-methyl-1,3-butanediol, 3-methyl-1, 5-pentanediol, 2-methyl-2, 4-pentanediol, 2-ethyl-1, 3-hexanediol; and a polyalkylene glycol-based solvent such as diethylene glycol, triethylene glycol, tetraethylene glycol, polyethylene glycol#200, polyethylene glycol#400, dipropylene glycol, tripropylene glycol, and dibutylene glycol.

Note that in the present disclosure, the above alkanediol-based solvent and the above polyalkylene glycol-based solvent are collectively referred to as "diol-based solvent".

Further, among the water-soluble organic solvents favorably used in the present invention, examples of water-soluble organic solvents containing three or more hydroxyl groups in the molecular structure include a chain-like polyol-based solvent such as glycerin, trimethylolpropane, 1,2,4-butanetriol, 1,2,6-hexanetriol, diglycerin, and polyglycerin.

Other examples of water-soluble organic solvents usable in the present invention include a glycol dialkyl ether-based solvent such as diethylene glycol dimethyl ether, diethylene glycol methyl ethyl ether, diethylene glycol butyl methyl ether, diethylene glycol diethyl ether, triethylene glycol dimethyl ether, triethylene glycol methyl ethyl ether, triethylene glycol butyl methyl ether, triethylene glycol diethyl ether, tetraethylene glycol dimethyl ether, tetraethylene glycol methyl ethyl ether, tetraethylene glycol butyl methyl ether, and tetraethylene glycol diethyl ether; a chain-like nitrogen-containing solvent such as N,N-dimethyl-β-methoxypropionamide, N,N-dimethyl-β-ethoxypropionamide, N,N-dimethyl-β-butoxypropionamide, N,N-dimethyl-β-pentoxypropionamide, N,N-dimethyl-β-hexoxypropionamide, N,N-dimethyl-β-heptoxypropionamide, N,N-dimethyl-β-2-ethylhexoxypropionamide, N,N-dimethyl-β-octoxypropionamide, N,N-diethyl-β-butoxypropionamide, N,N-diethyl-β-pentoxypropionamide, N,N-diethyl-β-hexoxypropionamide, N,N-diethyl-β-heptoxypropionamide, and N,N-diethyl-β-octoxypropionamide; and a heterocyclic solvent such as 2-pyrrolidone, N-methylpyrrolidone, N-ethylpyrrolidone, γ-butyrolactone, δ-valerolactone, ε-caprolactone, γ-butyrolactam, δ-valerolactam, ε-caprolactam, 3-methyl-2-oxazolidinone, and 3-ethyl-2-oxazolidinone.

For the first aqueous inkjet ink of the present invention and the second aqueous inkjet ink of the present invention, among the water-soluble organic solvents described above, it is preferable to use a diol-based solvent and/or a glycol monoalkyl ether-based solvent. Among the water-soluble organic solvents listed above, the diol-based solvent has a

relatively low boiling point but has high hydrophilicity, and it is easy to increase the affinity with the pretreatment liquid. Further, since the glycol monoalkyl ether-based solvent has a small surface tension, the wet spreadability of the aqueous inkjet ink on a pretreatment liquid layer is greatly improved. As a result, regardless of which water-soluble organic solvent is used, the adhesion and image quality of printed matter can be particularly improved.

Further, in particular, the combined use of a diol-based solvent and a glycol monoalkyl ether-based solvent is particularly favorable because it becomes possible to easily adjust: the surface tension and dryness of the aqueous inkjet ink; and the mixed SP values of the water-soluble organic solvents, and it becomes possible to particularly improve all of the adhesion, image quality, and lamination suitability of printed matter.

Note that in the case of the combined use of a diol-based solvent and a glycol monoalkyl ether-based solvent, from the viewpoint of effectively achieving the above-described effects and obtaining printed matter excellent in terms of all of the adhesion, image quality, and lamination suitability, the blending ratio is preferably within a range from 1 to 10, more preferably from 2 to 8, and particularly preferably from 3 to 6.

Furthermore, among the water-soluble organic solvents listed above, it is favorable to use one or more water-soluble organic solvents having the SP value of 10.5 to 14, from the viewpoint of easily keeping SPT - SPB2 (also, the value of SPT - SPB3 when the second aqueous inkjet ink is used) within the above-described ranges. Further, in the case of a diol-based solvent, from the viewpoint of improving the affinity with the above-described pretreatment liquid, it is particularly favorable to use one or more water-soluble organic solvents having high hydrophilicity, that is, having an SP value of 12.5 to 14.

Examples of the diol-based solvent and glycol monoalkyl ether-based solvent having the SP value of 10.5 to 14, which are particularly favorably used in the aqueous inkjet ink of the present invention, include 1, 2-propanediol (13.5), 1,3-propanediol (13.7), 1,2-butanediol (12.8), 1,3-butanediol (12.8), 1,4-butanediol (13.0), 2,3-butanediol (12.6), 1,2-pentanediol (12.2), 1,5-pentanediol (12.4), 1,2-hexanediol (11.8), 1,6-hexanediol (12.0), 2-methyl-1,3-propanediol (12.8), 2,2-dimethyl -1,3-propanediol (12.1), 2-ethyl-2-methyl-1,3-propanediol (11.7), 2-methyl-2-propyl-1.3-propanediol (11.3), 3-methyl-1,3-butanediol (12.1), 3-methyl-1,5-pentanediol (11.8), 2-methyl-2,4-pentanediol (11.5), and 2-ethyl-1,3-hexanediol (11.1); and

ethylene glycol monoethyl ether (11.5), ethylene glycol monopropyl ether (11.1), ethylene glycol monobutyl ether (10.8), diethylene glycol monomethyl ether (11.2), diethylene glycol monoethyl ether (10.9), diethylene glycol monopropyl ether (10.7), diethylene glycol isopropyl ether (10.6), diethylene glycol monobutyl ether (10.5), triethylene glycol monomethyl ether (10.8), triethylene glycol monoethyl ether (10.6), tetraethylene glycol monomethyl ether (10.6), propylene glycol monomethyl ether (11.3), propylene glycol monoethyl ether (10.9), propylene glycol monopropyl ether (10.7), 1,2-butylene glycol monomethyl ether (10.9), and 3-methoxybutanol (10.9). Here, the values listed in parentheses are SP values.

The total amount of the water-soluble organic solvents (B2) and the water-soluble organic solvents (B3) contained in the aqueous inkjet inks of the present invention is, relative to the total mass of the respective aqueous inkjet inks, preferably within a range from 2% to 50% by mass, more preferably from 3% to 45% by mass, and particularly preferably from 5% to 40% by mass. By keeping the amount contained of the water-soluble organic solvents within the above ranges, rapid release and diffusion of the calcium ion described above can be achieved, and it becomes possible to obtain printed matter free from mixed color bleeding. Further, in combination with the pretreatment liquid, sufficient wettability and dryness can be ensured, and printed matter is particularly excellent in image quality.

Note that in the aqueous inkjet ink of the present invention, the amount contained of the water-soluble organic solvent having a boiling point of 240 °C or more at 1 atmosphere is, relative to the total mass of the aqueous inkjet ink, preferably 5% by mass or less (may be 0% by mass), more preferably 2% by mass or less (may be 0% by mass), and particularly preferably 1% by mass or less (may be 0% by mass). When the water-soluble organic solvent having a boiling point of 240 °C or more is not contained or, even if it is contained, the blending amount is kept within the above ranges, printed matter free from mixed color bleeding and having excellent blocking property and lamination suitability can be obtained.

Furthermore, for the same reason as above, in addition to the amount contained of the water-soluble organic solvent having a boiling point of 240 °C or more at 1 atmosphere being less than 5% by mass relative to the total mass of the pretreatment liquid, the amount contained of the water-soluble organic solvent having a boiling point of 220 °C or more at 1 atmosphere is, relative to the total mass of the pretreatment liquid, preferably 10% by mass or less (may be 0% by mass), more preferably 5% by mass or less (may be 0% by mass), and particularly preferably 2% by mass or less (may be 0% by mass).

In one embodiment, the weighted average value of boiling points at 1 atmosphere of the water-soluble organic solvents contained in the aqueous inkjet ink of the present invention is preferably within a range from 145 to 215 °C, more preferably from 150 to 200 °C, and particularly preferably from 155 to 190 °C. By adjusting the weighted average value of boiling points of the water-soluble organic solvents within the above ranges, in combination with the pretreatment liquid of the present invention, it is possible to obtain printed matter having excellent image quality and lamination suitability even in high-speed printing, and also to have excellent jetting stability. Note that for the calculation of the weighted average value of boiling points, the above-described water-soluble organic solvent having a boiling point of 220 °C (or 240 °C) or higher at 1

atmosphere is also included. Further, the weighted average value of boiling points at 1 atmosphere is a value obtained by multiplying the boiling point at 1 atmosphere for each water-soluble organic solvent by the mass percentage of that water-soluble organic solvent relative to the total water-soluble organic solvents, and then adding the values calculated for the water-soluble organic solvents.

<Surfactant (C2), surfactant (C3)>

The first aqueous inkjet ink of the present invention preferably contains a surfactant (C2) for the purpose of adjusting surface tension and improving image quality. When the pretreatment liquid used in combination with the above first aqueous inkjet ink contains the surfactant (C1), it is preferable to satisfy the following relationship from the viewpoint of improving compatibility and affinity between the pretreatment liquid layer and the aqueous inkjet ink and obtaining printed matter excellent in terms of all of image quality, adhesion, and lamination suitability. That is, when the (mixed) SP value of the surfactant (C1) is set as SPC1 and the (mixed) SP value of the surfactant (C2) is set as SPC2, SPC1 - SPC2 is preferably within a range from -1.5 to 1.5 and particularly preferably from -1.3 to 1.3.

When the aqueous recording liquid set of the present invention includes a second aqueous inkjet ink, the second aqueous inkjet ink preferably includes a surfactant (C3). In this case, for the same reason as in the case of SPC1 - SPC2 described above, when the (mixed) SP value of the surfactant (C3) is set as SPC3, SPC1 - SPC3 is preferably within a range from -1.5 to 1.5 and particularly preferably from -1.3 to 1.3.

Furthermore, in one embodiment, SPC2 - SPC3 is preferably within a range from -1.5 to -0.02 or from 0.02 to 1.5, more preferably from -1.2 to -0.05 or from 0.05 to 1.2, and particularly preferably from -1 to -0.1 or from 0.1 to 1. According to such an embodiment, when the second aqueous inkjet ink is printed after the first aqueous inkjet ink, it is possible to improve the affinity between both and to easily obtain printed matter having excellent adhesion and lamination suitability without voids while it is easy to prevent complete mixing.

Further, from the viewpoints of easy adjustment to the SP value difference described above and obtaining printed matter having excellent adhesion, image quality, and lamination suitability, and further from the viewpoint of optimizing the jetting stability from nozzles, each of the (mixed) SP value of the surfactant (C2) and the (mixed) SP value of the surfactant (C3) is preferably within a range from 8 to 11, more preferably from 8.4 to 10.5, and particularly preferably from 8.7 to 10.

There is no limitation on the types of surfactants usable as the surfactant (C2) and the surfactant (C3), and conventionally known surfactants can be optionally used. In particular, from the viewpoint of easy adjustment to the SP value difference described above and from the viewpoint of optimization of jetting stability from nozzles, it is favorable to use an acetylene diol-based surfactant and/or a siloxane-based surfactant, and it is particularly favorable to contain at least an acetylene diol-based surfactant. Further, from the viewpoint of affinity with the pretreatment liquid layer, it is also favorable to use a surfactant similar to the surfactant (C1) in the pretreatment liquid. For example, when the surfactant (C1) contains an acetylenediol-based surfactant, it is preferable that the surfactant (C2) and the surfactant (C3) also contain an acetylenediol-based surfactant.

As the surfactant, one synthesized through a conventional method may be used, or a commercial product may be used. For example, commercial products of an acetylenediol surfactant include SURFYNOL 82 (11.3), 104 series (10.4), 420 (10.3), 440 (10.1), 465 (9.8), 485 (9.6), and DF-110D (10.2), and Dynol 604 (9.9) and 607 (9.8) (manufactured by Air Products Limited). Here, the values in parentheses are SP values.

Further, as the siloxane-based surfactant, a compound represented by the following general formula 2 can be favorably used.

[Chemical formula 1]

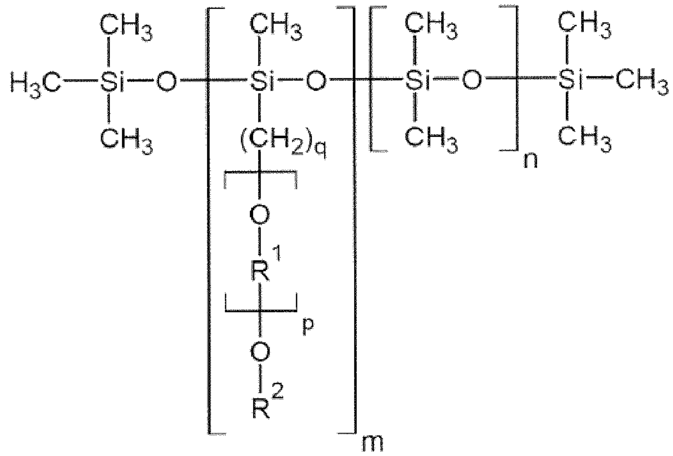

General formula 2

In general formula 2, m is an integer greater than or equal to 1, n is an integer greater than or equal to 0, p is an integer of 1 to 20, q is an integer of 1 to 6, and m+n is 1 to 8. Further, $R^1$ is an alkylene group having 2 to 4 carbon atoms, and $R^2$ is a hydrogen atom or an alkyl group having 1 to 6 carbon atoms.

As the surfactant (C2) and the surfactant (C3), a single compound may be used, or two or more types may be used together. Further, the total amounts of the contents are each, relative to the total mass of the aqueous inkjet ink, preferably within a range from 0.1% to 10% by mas, more preferably from 0.2% to 8% by mass, and particularly preferably from 0.5% to 5% by mass.

Further, when the aqueous recording liquid set of the present invention includes the second aqueous inkjet ink, in one embodiment, the total amount of the surfactant (C3) contained relative to the total mass of the second aqueous inkjet ink is preferably within a range from 0.1% to 2% by mass less and particularly preferably from 0.2% to 1.5% by mass less, than the total amount of the surfactant (C2) contained relative to the total mass of the first aqueous inkjet ink. In the above embodiment, it becomes easy to optimize: the wet spreadability of the second aqueous inkjet ink on the layer of the first aqueous inkjet ink; and jetting stability from nozzles.

<Colorant>

From the viewpoint of having blocking resistance, water resistance, light resistance, weather resistance, and the like, the aqueous inkjet ink of the present invention may contain a pigment. As the pigment, a conventionally known organic pigment and/or inorganic pigment can be optionally used. Further, one type of pigment may be used alone, or for example, for adjusting hue and color development, two or more types of pigments may be used together. Furthermore, a pigment and a conventionally known dye may be used together for the purpose of improving tinting strength.

Note that in the case of a configuration where the aqueous recording liquid set of the present invention includes the second aqueous inkjet ink, it is preferable that the colorant contained in the first aqueous inkjet ink be not the same as the colorant contained in the second aqueous inkjet ink.

From the viewpoints of obtaining printed matter having high color development and high clarity (concealability in the case of a white ink) and excellent image quality, and in addition improving the water resistance, light resistance, weather resistance, and the like of the printed matter, when the aqueous inkjet ink contains a pigment, it is favorable to blend a certain amount or more of the pigment. In this case, it is preferable to determine the blending amount of the pigment in consideration of the specific gravity of the pigment to be used.

Specifically, the value expressed by "the amount of the pigment relative to the total mass of the aqueous inkjet ink/the specific gravity of the pigment" (if two or more pigments are contained, the sum of the pigments) is favorably within a range from 0.2 to 6, more favorably from 0.5 to 5, and particularly favorably from 0.8 to 4.5. By making the blending amount of the above pigment within the ranges, not only printed matter excellent in terms of the above-described clarity (concealability), water resistance, light resistance, weather resistance, and the like can be obtained, but also the viscosity of the aqueous inkjet ink can be adjusted within a range appropriate for inkjet printing. Furthermore, since the storage stability of the aqueous inkjet ink is also improved, jetting stability can be ensured over a long period of time.

Examples of a cyan organic pigment usable in the aqueous inkjet ink of the present invention include C.I.Pigment Blue 1, 2, 3, 15:3, 15:4, 15:6, 16, 22, 60, 64, and 66. Thereamong, in terms of offering excellent color development and light resistance, one or more selected from the group consisting of C.I.Pigment Blue 15:3 and 15:4 can be preferably used.

Further, examples of a magenta organic pigment usable include C.I.Pigment Red 5, 7, 12, 22, 23, 31, 48, 49, 52, 53, 57 (Ca), 57:1, 112, 122, 146, 147, 150, 185, 202, 209, 238, 242, 254, 255, 266, 269, and 282, and C.I.Pigment Violet 19, 23, 29, 30, 37, 40, 43, and 50. Thereamong, in terms of offering excellent color development and light resistance, one or more selected from the group consisting of C.I.Pigment Red 122, 150, 166, 185, 202, 209, 266, 269, and 282, and C.I.Pigment Violet 19 can be preferably used.

Note that from the viewpoint of further enhancing color development and obtain printed matter having excellent image quality, it is also preferable to use a solid solution pigment containing a quinacridone pigment and/or naphthol pigment as a magenta organic pigment. Specific examples include a solid solution pigment containing C.I.Pigment Red 122 and C.I.Pigment Violet 19, a solid solution pigment containing C.I.Pigment Red 202 and C.I.Pigment Violet 19, a solid solution pigment containing C.I.Pigment Red 209 and C.I.Pigment Violet 19, a solid solution pigment containing C.I.Pigment Red 282 and C.I.Pigment Violet 19, a solid solution pigment containing C.I.Pigment Red 122 and C.I.Pigment Red 150, a solid solution pigment containing C.I.Pigment red 122 and C.I.Pigment Red 185, a solid solution pigment containing C.I.Pigment red 122 and C.I.Pigment Red 269, a solid solution pigment containing C.I.Pigment Red 150 and C.I.Pigment Red 185, a solid solution pigment containing C.I.Pigment Red 185 and C.I.Pigment Red 269, and a solid solution pigment containing C.I.Pigment Red 150 and C.I.Pigment Red 269.

Examples of a yellow organic pigment usable include C.I.Pigment Yellow 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185, and 213. Thereamong, in terms of offering excellent color development, one or more selected from the group consisting of C.I.Pigment Yellow 12, 13, 14, 74, 120, 180, 185, and 213.

Further, examples of a black organic pigment usable include aniline black, Lumogen Black, and azomethine azo black. Note that it is also possible to mix multiple chromatic pigments such as the above cyan pigment, magenta pigment, yellow pigment, and the following orange pigment, green pigment, brown pigment, and the like and to use as a black pigment.

Further, a special organic pigment such as an orange pigment, green pigment, brown pigment, and the like can also be used. Specific examples favorably usable include C.I.Pigment Orange 16, 36, 43, 51, 55, 59, 61, 64, 71, and C.I.Pigment Green 7, 36, 43, 58, and C.I.Pigment Brown 23, 25, and 26.

In contrast, there are also no particular limitations on an inorganic pigment usable in the aqueous inkjet ink of the present invention. For example, carbon black and/or iron oxide can be used as a black pigment, and titanium oxide and/or zinc oxide can be used as a white pigment.

Note that in the case where titanium oxide and/or zinc oxide is used as a white pigment, it is preferable that the surface thereof be treated with at least alumina from the viewpoints of increasing stability during dispersion and obtaining printed matter having high concealability and excellent image quality. Note that the amount of alumina relative to the amount of titanium oxide and/or zinc oxide is preferably within a range from 1% to 10% by mass, more preferably from 2% to 9% by mass, and particularly preferably from 3% to 8% by mass.

The 50% diameter of titanium oxide and/or zinc oxide is preferably within a range from 150 to 350 nm, more preferably from 180 to 300 nm, and particularly preferably from 200 to 250 nm, from the viewpoints of obtaining printed matter having high concealability and excellent image quality due to uniform existence in ink layers, and in addition, improving the storage stability of the aqueous inkjet ink.

<Pigment dispersing resin>

Examples of methods for stably dispersing and holding the above-described pigment in each of the inks include (1) a method for coating at least part of the pigment surface with a pigment dispersing resin, (2) a method for causing a water-soluble and/or water-dispersible surfactant to be adsorbed to the pigment surface, and (3) a method for chemically and/or physically introducing a hydrophilic functional group onto the pigment surface and dispersing the hydrophilic functional group in the ink without a pigment dispersing resin or surfactant (self-dispersing pigment).

For the aqueous inkjet ink of the present invention, the method (1) among those listed above, that is, the method using a pigment dispersing resin, is favorably selected. By selecting and examining the composition and molecular weight of a polymerizable monomer making up the resin, the coating ability of the pigment dispersing resin relative to the pigment and the charge of the pigment dispersing resin can be easily adjusted. Thus, even when a fine pigment is used, dispersion stability can be imparted, and printed matter having excellent jetting stability, color development, and color reproducibility can be obtained.

There are no particular limitations on the types of pigment dispersing resin usable in the aqueous inkjet ink of the present invention. Examples usable include a (meth)acrylic resin, a styrene-(anhydrous)maleic acid resin, a urethane (urea) resin, a urethane-(meth)acrylic resin, and a polyester resin (polycondensate of a polyvalent carboxylic acid with a polyhydric alcohol), but they are not limited to these. Thereamong, it is preferable to use one or more selected from the group consisting of a (meth)acrylic resin and a urethane (urea) resin from the viewpoint of wide material selectivity and ease of synthesis.

Further, the pigment dispersing resin may be synthesized using a known method, or a commercial product can be used. There are no particular limitations on the structure. For example, a resin having a random structure, a block structure, a comb structure, a star structure, or the like can be used. Furthermore, as the pigment dispersing resin, a water-soluble resin may be selected, or a water-insoluble resin may be selected.

When a water-soluble resin is used as the pigment dispersing resin, the acid value thereof is preferably within a range from 120 to 450 mgKOH/g, more preferably from 140 to 400 mgKOH/g, and particularly preferably from 150 to 350 mgKOH/g. By keeping the acid value within the above ranges, it becomes possible to maintain the dispersion stability of the pigment and to have stable jetting from inkjet heads. Further, excellent jetting stability can be maintained over a long period of time. Furthermore, this is preferable from the viewpoints of ensuring the solubility of the pigment dispersing resin relative to water, and easy aggregation/thickening due to the calcium ion released from the pretreatment liquid layer, thereby obtaining printed matter having excellent image quality.

In contrast, when a water-insoluble resin is used as the pigment dispersing resin, the acid value is preferably within a range from 0 to 100 mgKOH/g, more preferably from 5 to 90 mgKOH/g, and even more preferably from 10 to 80 mgKOH/g. When the acid value is within the above ranges, printed matters having excellent dryness and abrasion resistance can be obtained.

Further, it is preferable to introduce an aromatic ring structure into the pigment dispersing resin from the viewpoint of improving adsorption ability relative to the pigment and ensuring dispersion stability. Note that examples of the aromatic ring structure include a phenyl group, naphthyl group, anthryl group, tolyl group, xylyl group, mesityl group, and anisyl group, but the structure is not limited thereto. Thereamong, a phenyl group, naphthyl group, and tolyl group are preferable from the viewpoint of sufficiently ensuring dispersion stability.

The amount of the polymerizable monomer having an aromatic ring structure is preferably within a range from 20% to 80% by mass, more preferably from 25% to 60% by mass, relative to the total mass of the polymerizable monomer making up the pigment dispersing resin. By keeping the amount of the polymerizable monomer having an aromatic ring structure within the above ranges, the effect of improving adhesion and image quality using a $\pi$-cation interaction and the effect of ensuring and improving the storage stability in the aqueous inkjet ink containing a large amount of a water-soluble organic solvent are favorable.

Note that when a water-soluble resin is used as the pigment dispersing resin, it is preferable that acid groups in the resin be neutralized with a base in order to increase the solubility in the aqueous inkjet ink. Whether or not the amount added of the base is excessive can be confirmed, for example, by preparing a 10% by mass aqueous solution of the pigment dispersing resin and then measuring the pH of the aqueous solution. From the viewpoint of improving the dispersion stability of the aqueous inkjet ink, the pH of the aqueous solution is preferably within a range from 7 to 11, and more preferably within a range from 7.5 to 10.5.

Examples of the above base for neutralizing the pigment dispersing resin include an organic amine-based solvent such as monoethanolamine, diethanolamine, triethanolamine, N-methyldiethanolamine, dimethylaminoethanol, diethylaminoethanol, and aminomethylpropanol; ammonia water; an alkali metal hydroxide such as lithium hydroxide, sodium hydroxide, and potassium hydroxide; and an alkali metal carbonate such as lithium carbonate, sodium carbonate, sodium bicarbonate, and potassium carbonate, but they are not limited thereto.

When a water-soluble resin is used as the pigment dispersing resin, the weight average molecular weight is preferably within a range from 1,000 to 500,000, more preferably from 5,000 to 40,000, even more preferably from 10,000 to 35,000, and particularly preferably from 15,000 to 30,000. With the weight average molecular weight in these ranges, the pigment is stably dispersed in water, and it is easy to adjust the viscosity and the like when used in an aqueous inkjet ink. In particular, when the weight average molecular weight is 1,000 or more, the pigment dispersing resin is unlikely to dissolve in the water-soluble organic solvent added in the aqueous inkjet ink. Thus the adsorption of the pigment dispersing resin to the pigment is strengthened, and the dispersion stability is improved. When the weight average molecular weight is 50,000 or less, the viscosity at the time of dispersion is kept low, and the dispersion stability of the aqueous inkjet ink and the jetting stability from inkjet heads are improved, thereby enabling stable printing over a long period of time.

The blending amount of the pigment dispersing resin is preferably within a range from 1% to 80% by mass relative to the blending amount of the pigment. By making the blending amount of the pigment dispersing resin within the above range, the viscosity of the pigment dispersion is suppressed, and the dispersion stability and jetting stability of the aqueous inkjet ink are improved. The ratio of the pigment dispersing resin relative to the blending amount of the pigment is more preferably within a range from 2% to 60% by mass, even more preferably from 3% to 50% by mass, and particularly preferably from 4% to 45% by mass.

<Binder resin>

The aqueous inkjet ink of the present invention preferably contains a binder resin. The form of the binder resin may be either a water-soluble resin or resin particles, and a combination of two or more types may be used depending on properties required for the aqueous inkjet ink and printed matter. For example, with resin particles, the viscosity of the

aqueous inkjet ink can be reduced and a larger amount of resin can be blended, and thus resin particles are preferable for enhancing the adhesion, lamination suitability, abrasion resistance, water resistance, and the like of printed matter. Further, the aqueous inkjet ink using a water-soluble resin as a binder resin has excellent jetting stability, and excellent image quality of printed matter when combined with the pretreatment liquid of the present invention.

Note that when the aqueous inkjet ink contains a water-soluble resin as a pigment dispersing resin and a water-soluble resin is used as a binder resin, the method for discriminating between the pigment dispersing resin and the binder resin is, for example, a method described below which applies the method in JIS K 5101-1-4 mutatis mutandis.

An amount of 20 parts of carbon black having a primary particle size of 15 to 25 nm, a nitrogen adsorption specific surface area of 120 to 260 $m^2/g$, and a DBP absorption amount (particle shape) of 40 to 80 $cm^3/100g$, an amount of 10 parts of a water-soluble resin to be discriminated, and an amount of 70 parts of water are subjected to thorough mixing (premixing), and then dispersion is performed for 2 hours using a bead mill (for example, "Dyno-Mill" manufactured by SHINMARU ENTERPRISES CORPORATION) having a volume of 0.6 L filled with 1,800 parts of beads for grinding (for example, zirconia beads of 0.5 mm in diameter). Immediately after the dispersion, the viscosity of the obtained carbon black-dispersed solution at 25 °C is measured using an E-type viscometer (for example, a TVE25L type viscometer manufactured by Toki Sangyo Co., Ltd.), the carbon black-dispersed solution is then stored in a constant temperature machine at 70 °C for 1 week, and the viscosity is measured again. At this time, when the viscosity of the dispersed solution immediately after the dispersion is 100 mPa·s or less and the absolute value of the viscosity change rate of the carbon black-dispersed solution before and after the storage is 10% or less, the above water-soluble resin is determined to be a pigment dispersing resin.

The type of resin favorably usable as a binder resin is the same as that of the resin particles (A1) contained in the pretreatment liquid. In particular, it is preferable to use at least one type of resin selected from the group consisting of a urethane (urea) resin, urethane-(meth)acrylic resin, (meth)acrylic resin, and polyolefin resin from the viewpoint of the storage stability of the aqueous inkjet ink and the adhesion and abrasion resistance of printed matter when combined with the pretreatment liquid of the present invention. It is particularly preferable to use at least one type of resin selected from the group consisting of a urethane (urea) resin, urethane-(meth)acrylic resin, and (meth)acrylic resin.

When a water-soluble resin is used as the binder resin, from the viewpoint of achieving both: the jetting stability of the aqueous inkjet ink; and the adhesion, laminate strength, and abrasion resistance of printed matter, the weight average molecular weight of the water-soluble resin is preferably within a range from 5,000 to 80,000, more preferably from 8,000 to 60,000, and particularly preferably from 10,000 to 50,000.

For the same reason as in the case of the above weight average molecular weight, the acid value of the binder resin, regardless of whether it is a water-soluble resin or resin particles, is preferably within a range from 2 to 70 mgKOH/g, more preferably from 5 to 50 mgKOH/g, and particularly preferably from 10 to 40 mgKOH/g.

The amount of the binder resin contained in the total mass of the aqueous inkjet ink is, in terms of the solid fraction equivalent, preferably within a range from 1% to 20% by mass, more preferably from 2% to 15% by mass, and particularly preferably from 3% to 10% by mass, relative to the total mass of the aqueous inkjet ink.

<Water>

The amount of water contained in the aqueous inkjet ink of the present invention is, relative to the total mass of the aqueous inkjet ink, preferably within a range from 45% to 80% by mass, more preferably from 50% to 75% by mass, and even more preferably from 55% to 70% by mass.

<Other material>

Besides the above-described materials, a material such as a pH adjuster, a viscosity adjusting agent, and a preservative may be added as necessary to the aqueous inkjet ink of the present invention. Note that the specific examples and the favorable blending amount of the pH adjuster that can be used for the aqueous inkjet ink of the present invention are the same as those for the pretreatment liquid described above.

<Properties of aqueous inkjet ink>

It is preferable that the viscosity at 25 °C of the aqueous inkjet inks of the present invention be each adjusted to 3 to 20 mPa·s. In this viscosity range, not only a head having a frequency of 4 to 10KHz but also a head having a high frequency of 10 to 70 KHz exhibit stable jetting properties. In particular, by setting the viscosity at 25 °C to 4 to 10 mPa·s, stable jetting can be achieved even when used for an inkjet head having a design resolution of 600 dpi or more. Note that the above viscosity can be measured using an E-type viscometer (a TVE25L type viscometer manufactured by Toki Sangyo Co., Ltd.) using 1 ml of the aqueous inkjet ink.

Further, from the viewpoint of obtaining an aqueous inkjet ink that can be jetted stably and printed matter having

excellent image quality, the static surface tension at 25 °C of the aqueous inkjet inks of the present invention is each preferably within a range from 18 to 35 mN/m, and particularly preferably from 20 to 32 mN/m. In particular, when the aqueous recording liquid set of the present invention further includes the second aqueous inkjet ink, the difference in the static surface tension between the first aqueous inkjet ink and the second aqueous inkjet ink is preferably within a range from 0.5 to 5 mN/m, and more preferably from 1 to 3 mN/m. According to such an embodiment, color mixing caused by the mixed color of the first and second aqueous inkjet inks can be prevented and the image quality can be easily improved.

<Method for producing aqueous inkjet ink>

The aqueous inkjet ink of the present invention containing the above-described components is produced, for example, through the following process. However, the method for producing the aqueous inkjet ink is not limited to the following.

(1. Production of pigment dispersion)

When a pigment is used as a colorant and a water-soluble resin is used as a pigment dispersing resin, the water-soluble resin, water, and, as necessary, a water-soluble organic solvent are mixed and stirred to produce a pigment dispersing resin mixture. The pigment is added to the pigment dispersing resin mixture, subjected to mixing and stirring (pre-mixing), and then subjected to dispersion treatment using a dispersion device. Then, centrifugation, filtration, adjustment of the solid fraction concentration, and the like are performed as necessary, and a pigment dispersion is obtained.

Further, when a dispersion of a pigment coated with a water-insoluble resin is produced, a water-insoluble resin solution is produced by dissolving a water-insoluble resin in an organic solvent such as methyl ethyl ketone in advance and, as necessary, neutralizing the water-insoluble resin. The pigment and water are added to the water-insoluble resin solution, and the mixture is subjected to mixing and stirring (pre-mixing) and then subjected to dispersion treatment using a dispersion device. Then, the above organic solvent is distilled off through vacuum distillation, and centrifugation, filtration, and adjustment of the solid fraction concentration are performed as necessary, thereby obtaining the pigment dispersion.

For the dispersion device used during the dispersion treatment of the pigment, a generally used dispersion device can be optionally used. Examples thereof include a ball mill, roll mill, sand mill, bead mill, and nanomizer. Among the above, a bead mill is preferably used and specifically is commercially available under product names such as a Super Mill, Sand Grinder, Agitator Mill, Glen Mill, Dyno Mill, Pearl Mill, and Cobol Mill. Further, as the material of the grinding media, glass, zircon, zirconia, titania, and the like can be used.

(2. Preparation of aqueous inkjet ink)

Next, a water-soluble organic solvent, water, and as necessary, another water-soluble organic solvent, a surfactant, a binder resin, a pH adjuster, and another material are added to the above pigment dispersion, and the mixture is stirred and mixed. Note that stirring and mixing may be performed while the mixture is heated within a range from 40 to 100 °C as necessary.

(3. Removal of coarse particles)

The aqueous inkjet ink can be obtained by removing coarse particles contained in the above mixture through a method such as filtration separation or centrifugation. A known method may be used appropriately as the filtration separation method. The filter opening diameter is not particularly limited as long as it can remove coarse particles, dust, and the like, and is preferably within a range from 0.3 to 5 μm and more preferably from 0.5 to 3 μm. When filtration is performed, a single type of a filter may be used, or multiple types of filters may be used together.

<Method for producing printed matter>

One embodiment of the present invention includes printed matter produced using the aqueous recording liquid set of the present invention. As a method for producing printed matter using the aqueous recording liquid set of the present invention, a method (hereinafter also referred to as "first production method") is preferably used which includes step 1 of applying a pretreatment liquid on a recording medium, step 2 of printing a first aqueous inkjet ink using an inkjet printing method on the recording medium on which the pretreatment liquid has been applied, obtained in the above step 1, in such a manner that at least part of the first aqueous inkjet ink overlaps the area on which the pretreatment liquid has been applied, and step 3 of drying the recording medium on which the first aqueous inkjet ink has been printed, obtained in the above step 2. Note that the above steps are preferably performed in this order.

Further, when the aqueous recording liquid set of the present invention includes the second aqueous inkjet ink, as a method for producing printed matter, a method (hereinafter also referred to as "second production method") is preferably used which includes step 1 of applying a pretreatment liquid on a recording medium, step 2 of printing a first aqueous inkjet ink using an inkjet printing method on the recording medium on which the pretreatment liquid has been applied, obtained in the above step 1, in such a manner that at least part of the first aqueous inkjet ink overlaps the area on which the pretreatment liquid has been applied, step 3 of printing a second aqueous inkjet ink using the inkjet printing method on the recording medium on which the first aqueous inkjet ink has been printed, obtained in the above step 2, in such a manner that at least part of the second aqueous inkjet ink overlaps the area on which the first aqueous inkjet ink has been printed, and step 4 of drying the recording medium on which the second aqueous inkjet ink has been printed, obtained in the above step 3.

Note that the above steps are preferably performed in this order. Further, from the viewpoints of enhancing the visibility of printed matter and improving image quality, it is favorable that the first aqueous inkjet ink or the second aqueous inkjet ink include a white ink or a metallic ink, and it is particularly favorable that the first aqueous inkjet ink or the second aqueous inkjet ink include at least a white ink.

A method for producing printed matter using the aqueous recording liquid set of the present invention will be described in detail below.

<Application of pretreatment liquid>

In step 1 of the first production method and step 1 of the second production method, the pretreatment liquid of the present invention is applied to the recording medium. The application method may be a printing system that involves no contact with the recording medium such as inkjet printing, or a coating system that involves bringing the pretreatment liquid into contact with the recording medium. When a coating method in which the pretreatment liquid is brought into contact is selected as the method for applying the pretreatment liquid, a gravure coater, doctor coater, bar coater, blade coater, flexo coater, roll coater, and the like can be favorably used. Thereamong, a gravure coater or a flex coater is particularly favorable because application to a non-permeable substrate such as a plastic film can be easily performed, the amount of coating can be easily adjusted, and balancing among adhesion, image quality, and lamination suitability is easy.

In one embodiment, from the viewpoint of favorably achieving the effects of the present invention, it is preferable to adjust the application of the pretreatment liquid so that the mass of the pretreatment liquid layer after complete drying is within a range from 0.02 to 1 mg/inch$^2$. It is more preferable to apply the pretreatment liquid so that the above mass is within a range from 0.05 to 0.8 mg/inch$^2$, and it is particularly preferable to apply the pretreatment liquid so that the above mass is within a range from 0.08 to 0.6 mg/inch$^2$.

<Drying after applying pretreatment liquid>

The pretreatment liquid on the recording medium may be dried after step 1 and before step 2 in the first production method and after step 1 and before step 2 in the second production method. The degree of drying can be optionally set. In one embodiment, the aqueous inkjet ink may be printed after the pretreatment liquid has been completely dried. In another embodiment, the aqueous inkjet ink may be printed before the pretreatment liquid on a recording medium has been completely dried.

In one embodiment, it is preferable that the pretreatment liquid be completely dried before printing the aqueous inkjet ink, that is, liquid components in the pretreatment liquid be substantially removed. By printing the aqueous inkjet ink after the pretreatment liquid has been completely dried, the aqueous inkjet ink that lands later does not cause drying failure and printed matter having excellent lamination suitability and abrasion resistance can be obtained.

There are no particular limitations on the method for drying the pretreatment liquid. For example, conventional methods can be mentioned such as a heat drying method, hot air drying method, infrared drying method, microwave drying method, and drum drying method. The above drying methods may be used alone or in combination. The hot air drying method is preferably used to reduce damage to non-permeable substrates and to dry efficiently. Further, from the viewpoint of preventing damage to recording media and the sudden boiling of liquid components in the pretreatment liquid, when a heat drying method is employed, the drying temperature is preferably within a range from 35 to 100 °C. Further, when a hot air drying method is employed, the hot air temperature is preferably within a range from 50 to 150 °C.

<Printing of aqueous inkjet ink>

In step 2 of the first production method and steps 2 and 3 of the second production method, the aqueous inkjet ink of the present invention is printed on a recording medium. The first aqueous inkjet ink is preferably printed in such a manner that at least part thereof overlaps the area on which the pretreatment liquid has been applied. From the viewpoint of favorably achieving the above-described effects of the present invention, it is more preferable that the ink be printed only on

the area where the pretreatment liquid has been applied so as to overlap the pretreatment liquid. In contrast, the second aqueous inkjet ink is preferably printed in such a manner that at least part thereof overlaps the area on which the first aqueous inkjet ink has been printed. Further, when the second aqueous inkjet ink is printed on an area where the first aqueous inkjet ink has not been printed, it is preferable that the second aqueous inkjet ink be printed on the area where at least the pretreatment liquid has been applied so as to overlap the pretreatment liquid.

In one embodiment, the first aqueous inkjet ink and/or the second aqueous inkjet ink may each include multiple aqueous inkjet inks. For example, the first aqueous inkjet ink may include a cyan ink, magenta ink, yellow ink, and black ink, and the second aqueous inkjet ink may include a white ink. Further, for example, the first aqueous inkjet ink may include a white ink, and the second aqueous inkjet ink may include a cyan ink, magenta ink, yellow ink, and black ink.

Further, when the first aqueous inkjet ink includes multiple aqueous inkjet inks, for each of the multiple aqueous inkjet inks, the difference (SPT - SPB2) between the mixed SP value (SPT) of the carboxylic acid including multiple carboxylic acid ions and a hydrogen ion in the pretreatment liquid and the mixed SP value (SPB2) of multiple water-soluble organic solvents (B2) in the aqueous inkjet ink is preferably within a range from -1.0 to 1.0.

As the inkjet printing method used for printing the aqueous inkjet ink of the present invention, a single-pass system may be adopted in which the aqueous inkjet ink is jetted only once and recorded on a recording medium. As another method, a serial-type method may be adopted in which jetting and recording are performed while a short shuttle head is reciprocally scanned in a direction orthogonal to the transport direction of a recording medium.

Specific examples of the single-pass system include a system in which an inkjet head is scanned only once relative to a stopped recording medium, and a system in which a recording medium is made to pass only once under a fixed inkjet head for printing, either of which may be adopted in the aqueous inkjet ink of the present invention. However, in the case of the system in which an inkjet head is scanned, it is necessary to adjust jetting timing in consideration of the movement of the inkjet head, and the landing position is likely to shift. Thus, when the aqueous inkjet ink of the present invention is printed, from the viewpoint of improving image quality, a method in which a recording medium is made to pass under a fixed inkjet head is preferably used.

Note that the design resolution of the inkjet head used in the single-pass system is preferably 600 dpi (dots per inch) or more, and more preferably 720 dpi or more, from the viewpoint of obtaining images having excellent image quality.

<Drying after printing aqueous inkjet ink>

In step 3 of the first production method and step 4 of the second production method, the recording medium on which the aqueous inkjet ink has been printed is dried. Note that specific examples of usable drying methods are the same as those for the pretreatment liquid described above.

Further, after step 2 and before step 3 of the second production method, after the first aqueous inkjet ink has been printed on the recording medium, drying may be performed before the second aqueous inkjet ink is printed. The degree of drying at that time can be optionally set. For example, the second aqueous inkjet ink may be printed after the first aqueous inkjet ink has been completely dried. Alternatively, the second aqueous inkjet ink may be printed before the first aqueous inkjet ink on the recording medium has been completely dried.

Further, in the second production method, when the first aqueous inkjet ink includes multiple aqueous inkjet inks, after step 2 and before step 3, it is preferable to dry at least part of the multiple aqueous inkjet inks before printing the second aqueous inkjet ink, from the viewpoint of obtaining printed matter having excellent image quality.

<Amount applied of pretreatment liquid and aqueous inkjet ink>

From the viewpoint of favorably achieving the effects of the present invention, when the recording liquid set of the present invention is printed, the amount printed of the aqueous inkjet ink relative to the mass of the pretreatment liquid layer after complete drying is preferably within a range from 3 to 120, more preferably from 5 to 100, and particularly preferably from 7 to 85.

<Recording media>

The recording liquid set of the present invention can be favorably printed on a conventionally known recording medium. In one embodiment, since printed matter having excellent adhesion and lamination suitability can be obtained, it is favorable to use a non-permeable substrate as the recording medium. The term "non-permeable substrate" in the present invention represents a recording medium that does not allow water to permeate and to be absorbed. Note that even when the recording medium has unfilled spaces inside, in the case where water does not penetrate into the unfilled spaces (for example, when the surface of the recording medium is coated), the recording medium falls under the non-permeable substrate in the present invention.

Specific examples of non-permeable substrates include: thermoplastic resin substrates such as polyvinyl

chloride sheets, polyethylene terephthalate (PET) films, polypropylene films, polyethylene films, nylon films, and polystyrene films; metal substrates such as aluminum foils; and glass substrates. These substrates may have smooth surfaces or uneven surfaces, or may be transparent, translucent, or opaque. Further, a combination of two or more types of recording media listed above may be used, or a peeling adhesive layer or the like may be provided on the surface opposite to the printing surface of the pretreatment liquid and the aqueous inkjet ink.

Note that an adhesive layer or the like may be provided on the printing surface after the production of printed matter. Further, the shape of recording media used in the printing of the recording liquid set of the present invention may be a roll or a sheet. Furthermore, from the viewpoints of applying the pretreatment liquid of the present invention evenly and uniformly and of particularly improving the adhesion of printed matter, it is also preferable to apply a surface modification method such as corona treatment or plasma treatment to the non-permeable substrate exemplified as above.

In particular, the non-permeable substrate is preferably a thermoplastic resin substrate in order to sufficiently achieve the functions of the recording liquid set of the present invention. In one embodiment, it is particularly preferable to use one selected from a PET film, polypropylene film, polyethylene film, and nylon film as the thermoplastic resin substrate.

<Coating treatment>

The printed surface of printed matter produced using the recording liquid set of the present invention can be subjected to a coating treatment as necessary. Specific examples of the coating treatment include printing of a coating composition, and lamination processing using a dry lamination method, solvent-free lamination method, extrusion lamination method, or the like. Either of these techniques may be selected, or a combination of both may be used.

Note that when a coating treatment is performed on printed matter by coating or printing a coating composition, either of the following systems may be employed as the printing method: a system in which printing is performed on the recording medium in a non-contact manner as in an inkjet printing method; or a system in which the coating composition is brought into contact with the recording medium to perform printing.

When the system of printing the coating composition on the recording medium in a non-contact manner is selected, it is favorable to use, as the above coating composition, an ink (a clear ink) that contains substantially no pigment component, which is obtained by excluding the pigment (and the pigment dispersing resin if used) from the aqueous inkjet ink of the present invention.

In contrast, when lamination processing is performed on printed matter, it is preferable that an adhesive used for laminating a sealant substrate include a mixture of a polyol component and a polyisocyanate component. Further, examples of the sealant substrate used for the above lamination processing include polypropylene films and polyethylene films such as unstretched polypropylene (CPP) films and linear low density polyethylene films (LLDPE). Further, a film having a metal (oxide) vapor deposition layer such as aluminum oxide may be used.

EXAMPLES

The present invention is described below more concretely using examples and comparative examples. Note that in the following description, when "part" and "%" are used, they are based on mass, unless otherwise specified.

<Production of pigment dispersion>

(Production of black pigment dispersion)

An amount of 15 parts of carbon black ("PrinteX85" manufactured by Orion Engineered Carbons S.A.), 3 parts of a styrene-acrylic resin (a random polymer of styrene/acrylic acid/behenyl acrylate = 45/30/25 (mass ratio), all acid groups being neutralized with dimethylaminoethanol, acid value 230 mgKOH/g, weight average molecular weight 20,000), and 82 parts of water were put in a mixing container equipped with a stirrer, and premixing was performed for 1 hour.

Then, using a Dyno-Mill (capacity 0.6 L) manufactured by SHINMARU ENTERPRISES CORPORATION filled with 1,800 g of 0.5 mm diameter zirconia beads, a black pigment dispersion was produced by performing circulation dispersion until the 50% diameter of the carbon black reached about 100 nm. Note that the 50% diameter is a value measured using the same device and method as the 50% diameter of the resin particles (A1) described above.

(Production of cyan pigment dispersion, magenta pigment dispersion, and yellow pigment dispersion)

The following pigments were used as pigments and circulation dispersion was performed until the following 50% diameters were each achieved. Other than this, a cyan pigment dispersion, a magenta pigment dispersion, and a yellow pigment dispersion were produced using the same raw materials and methods as the above black pigment dispersion.

· Cyan pigment dispersion: LIONOL BLUE 7358G (C.I. Pigment Blue 15:3) manufactured by TOYOCOLOR Co., Ltd., 50% diameter = 150 nm

· Magenta pigment dispersion: Toshiki Red 150TR (C.I.Pigment Red 150) manufactured by TOKYO SHIKIZAI INDUSTRY CO., LTD., 50% diameter = 200 nm

· Yellow Pigment Dispersion: LIONOL YELLOW TT1405G (C.I. Pigment Yellow 14) manufactured by TOYOCOLOR Co., Ltd., 50% diameter = 150 nm

(Production of white pigment dispersions 1 and 2)

An amount of 50 parts of titanium oxide ("TIPAQUE CR-50" manufactured by ISHIHARA SANGYO KAISHA, LTD.), 12.5 parts of a water-based solution of a styrenemaleic acid resin ("BYK-190" manufactured by BYK Japan KK, solid fraction 40%, acid value 10 mgKOH/g), and 37.5 parts of water were put in a mixing container equipped with a stirrer, and premixing was performed for 1 hour. Then, using a Dyno-Mill (capacity 0.6 L) manufactured by SHINMARU ENTERPRISES CORPORATION filled with 1,800 g of 0.5 mm diameter zirconia beads, a white pigment dispersion 1 was produced by performing circulation dispersion until the 50% diameter of the titanium oxide reached about 270 nm.

An amount of 50 parts of titanium oxide ("TIPAQUE CR-60" manufactured by ISHIHARA SANGYO KAISHA, LTD.), 5 parts of a styrene-acrylic resin (a random polymer of styrene/acrylic acid/behenyl acrylate = 45/30/25 (mass ratio), all acid groups being neutralized with dimethylaminoethanol, acid value 230 mgKOH/g, weight average molecular weight 20,000), and 45 parts of water were used as raw materials, and the circulation dispersion was performed until the 50% diameter reached about 230 nm. Other than this, a white pigment dispersion 2 was produced using the same method as the white pigment dispersion 1 described above.

<Production and preparation of resin>

(Production of (meth)acrylic resins P1 to P6)

An amount of 124 parts of ion exchanged water and an amount of 1.2 parts of sodium polyoxyethylene lauryl ether sulfate ("LATEMUL E-150" manufactured by Kao Corporation) were put in a reaction container equipped with a gas inlet tube, a thermometer, a condenser, and a stirrer. Meanwhile, 39.8 parts of butyl acrylate, 60 parts of methyl methacrylate, 0.2 parts of acrylic acid, 64 parts of ion exchanged water, and 0.8 parts of sodium polyoxyethylene lauryl ether sulfate ("LATEMUL E-150" manufactured by Kao Corporation) were put in another mixing container equipped with a stirrer and subjected to thorough stirring and mixing, and an emulsion was produced.

An amount of 8 parts of the emulsion was separated and added into the above reaction container, and the inside was sufficiently flushed with nitrogen. Then, after raising the internal temperature of the reaction container to 80 °C, 4 parts of 5% aqueous solution of potassium persulfate and 8 parts of 1% aqueous solution of anhydrous sodium bisulfite were added, and a polymerization reaction was started. After starting the polymerization reaction, while keeping the internal temperature at 80 °C, the remainder of the above emulsion (156.8 parts), 1.2 parts of 5% aqueous solution of potassium persulfate, and 2.5 parts of 1% aqueous solution of anhydrous sodium bisulfite were added dropwise over a period of 1.5 hours. Stirring was continued after the dropwise addition, and the reaction was continued for 2 hours. Then, the internal temperature of the reaction container was cooled to 30 °C, and diethylaminoethanol was further added to make the pH of the mixture be 8.5. Then, the solid fraction was adjusted to 30% using ion exchanged water to make a water-based solution of a (meth)acrylic resin P1. Note that the (meth)acrylic resin P1 had an acid value of 1 mgKOH/g and a 50% diameter of 100 nm.

Further, water-based solutions of (meth)acrylic resins P2 to P6 (each with a solid fraction of 30%) were produced using the same raw materials and method as in the case of the above (meth)acrylic resin P1 except that raw materials used for the production of the emulsion were changed as shown in Table 1 below.

[Table 1]

Table 1

| | | | (Meth)acrylic resin P1 | (Meth)acrylic resin P2 | (Meth)acrylic resin P3 | (Meth)acrylic resin P4 | (Meth)acrylic resin P5 | (Meth)acrylic resin P6 |
|---|---|---|---|---|---|---|---|---|
| Amount used | Polymerizable monomer | AA | 0.2 | 1 | 2 | | 3.5 | 6 |
| | | MAA | | | | 2 | | |
| | | BA | 39.8 | 39 | 20 | | 18 | 16 |
| | | 2HEA | | | | 30 | | |
| | | MMA | 60 | 60 | 30 | 20 | 28 | 25 |
| | | BMA | | | 48 | 48 | 50.5 | 53 |
| | Others | Ion exchanged water | 64 | 64 | 64 | 64 | 64 | 64 |
| | | Sodium polyoxyethylene lauryl ether sulfate | 0.8 | 0.8 | 0.8 | 2 | 0.8 | 0.8 |
| Spec | | Acid value (mgKOH/g) | 1 | 7 | 16 | 14 | 29 | 48 |
| | | 50% diameters (nm) | 100 | 100 | 100 | 230 | 110 | 120 |

Note that the abbreviations in Table 1 have the following meanings. Further, Table 1 also describes the acid values and 50% diameters of the (meth)acrylic resins P1 to P6.

· AA: acrylic acid
· MAA: methacrylic acid
· BA: butyl acrylate
· 2HEA: 2-ethylhexyl acrylate
· MMA: methyl methacrylate
· BMA: butyl methacrylate

(Production of urethane (urea) resin P7)

A reaction container fitted with a gas inlet tube, a thermometer, a condenser, and a stirrer was charged with an amount of 70.2 parts of polyester polyol (HS2H-201AP manufactured by HOKOKU CORPORATION) pre-dehydrated under reduced pressure, 3.3 parts of dimethylolpropionic acid, 59.9 parts of methyl ethyl ketone, and 21.4 parts of m-tetramethylxylylene diisocyanate, and the inside was sufficiently flushed with nitrogen. The internal temperature of the reaction container was then raised to 80 °C, and the reaction was performed for 4 hours.

After that, the internal temperature of the reaction container was cooled to 40 °C, 20 parts of methyl ethyl ketone was further added for dilution, and then 2.2 parts of dimethylaminoethanol was added for neutralization, thereby obtaining a methyl ethyl ketone solution of a urethane prepolymer having isocyanate groups at terminals.

Then, while the above methyl ethyl ketone solution of the urethane prepolymer having isocyanate groups at terminals was stirred, 209.4 parts of ion exchanged water was gradually added to give an emulsion. Thereafter, 37.9 parts of an aqueous solution of polyamine (dissolution of 5.1 parts of m-tetramethylxylylenediamine in a mixture of 16.4 parts of isopropyl alcohol and 16.4 parts of ion exchanged water) was further added gradually, and a chain elongation reaction was performed. The water-based solution of urethane (urea) resin P7 was produced by removing methyl ethyl ketone and isopropyl alcohol under reduced pressure and adjusting the solid fraction to 30% using ion exchanged water. Note that the acid value of the urethane (urea) resin P7 was 15 mgKOH/g, and the 50% diameter was 100 nm.

(Preparation of commercial urethane (urea) resin)

"SUPERFLEX 460S" (50% diameter = 30 nm, solid fraction 38%) and "SUPERFLEX 650" (50% diameter = 10 nm, solid fraction 26%) manufactured by DKS Co. Ltd., which are water-based solutions of urethane (urea) resin particles, were each used directly as water-based solutions of a urethane (urea) resin.

(Preparation of urethane-(meth)acrylic resin P8)

Water was added to "ACRIT WEM-031U" (50% diameter = 100 nm) manufactured by Taisei Fine Chemical Co., Ltd., which was a water-based solution of urethane-(meth)acrylic resin particles, to adjust the solid fraction to 30%, and this was used as the water-based solution of a urethane-(meth)acrylic resin P8.

(Preparation of commercial polyolefin resin)

"Hitec E-6400" (50% diameter = 55 nm, solid fraction 35%) manufactured by TOHO Chemical Industry Co., Ltd., and "Arrowbase SB-1230N" (50% diameter = 85 nm, solid fraction 25%) manufactured by UNITIKA LTD., which are water-based solutions of polyolefin resin particles, were each used directly as water-based solutions of a polyolefin resin.

<Production of methacrylic resins I1 to I3>

A water-based solution of a methacrylic resin (solid fraction 30%) was produced using the same raw materials and method as the binder resin 8 produced in an example of JP 2020-180178, and used as a water-based solution of a methacrylic resin I1.

Further, a water-based solution of a methacrylic resin (solid fraction 30%) was produced using the same raw materials and method as the binder resin 16 produced in an example of the above publication, and used as a water-based solution of a methacrylic resin I2.

Further, a water-based solution of a methacrylic resin (solid fraction 30%) was produced using the same raw materials and method as the binder resin 28 produced in an example of the above publication, and used as a water-based solution of a methacrylic resin I3.

<Production of pretreatment liquid 1 to 49>

Each raw material was put in a mixing container equipped with a stirrer to obtain a blending formulation described in each column of Table 2 below. Thereafter, mixing was continued for 1 hour at room temperature (25 °C), and the mixture was warmed to 50 °C and mixed for another 1 hour. Then, after the mixture was cooled to room temperature, filtration was performed with a nylon mesh having a pore size of 100 μm, to produce pretreatment liquids 1 to 49. Note that while the mixture was stirred in the mixing container, each raw material was put therein. At such time, the order in which the raw materials were added was ion exchanged water, a carboxylic acid calcium salt, a magnesium carboxylate salt, a carboxylic acid, resin particles (A1), and other raw materials. However, when any of these components is not included, the following components were added by skipping the component, and for a component containing two or more types of raw materials, the order in which these are added within the component is discretionary.

[Table 2-1]

**Table 2**

| | | | | Pretreatment liquid No. | | 1 | 2 | 3 | 4 | 5 | 6 | 7 | 8 | 9 | 10 | 11 |
|---|---|---|---|---|---|---|---|---|---|---|---|---|---|---|---|---|
| Blending formulation | Resin particles (A1) | (Meth)acrylic | (Meth)acrylic resin P1 | Nv=30% | Acid value=1 | | 25 | | | | | | | | | |
| | | | (Meth)acrylic resin P2 | Nv=30% | Acid value=6 | | | 25 | | | | | | | | |
| | | | (Meth)acrylic resin P3 | Nv=30% | Acid value=16 | 25 | | | | | | | | 14.2 | 28.4 | 3.3 |
| | | | (Meth)acrylic resin P4 | Nv=30% | Acid value=14 | | | | | | | | 25 | | | |
| | | | (Meth)acrylic resin P5 | Nv=30% | Acid value=29 | | | | 25 | | | | | | | |
| | | | (Meth)acrylic resin P6 | Nv=30% | Acid value=48 | | | | | 25 | | | | | | |
| | | Urethane (urea) | urethane (urea) resin P7 | Nv=30% | Acid value=15 | | | | | | 25 | | | 14.2 | | |
| | | | SUPERFLEX 460S | Nv=38% | | | | | | | | | | | | |
| | | | SUPERFLEX 650 | Nv=26% | | | | | | | | | | | | |
| | | Urethane-(meth)acrylic | Urethane acrylic resin P8 | Nv=30% | Acid value=20 | | | | | | | 25 | | | | |
| | | Polyolefin | Hitec E-6400 | Nv=35% | | 2.9 | 2.9 | 2.9 | 2.9 | 2.9 | 2.9 | 2.9 | 2.9 | | | 21.4 |
| | | | Arrowbase SB-1230N | Nv=25% | | | | | | | | | | | | |
| | Carboxylic acid calcium salt | Non-hydroxycarboxylic acid calcium salt | Calcium benzoate | Solubility=2 | SPvalue=11.9 | | | | | | | | | | | |
| | | | Calcium formate | Solubility=17 | SPvalue=12.3 | 3 | 3 | 3 | 3 | 3 | 3 | 3 | 3 | 3 | 3 | 3 |
| | | | Calcium acetate | Solubility=28 | SPvalue=11.2 | | | | | | | | | | | |
| | | | Calcium propionate | Solubility=38 | SPvalue=10.7 | | | | | | | | | | | |
| | | Hydroxycarboxylic acid calcium salt | Calcium lactate | Solubility=3 | SPvalue=14.9 | 2 | 2 | 2 | 2 | 2 | 2 | 2 | 2 | 2 | 2 | 2 |
| | | | Calcium gluconate | Solubility=3 | SPvalue=18.8 | | | | | | | | | | | |
| | Magnesium carboxylate salt | | Magnesium formate | Solubility=14 | SPvalue=12.3 | | | | | | | | | | | |
| | | | Magnesium lactate | Solubility=4 | SPvalue=14.9 | | | | | | | | | | | |
| | Non-carboxylic acid calcium salt | | Calcium chloride | Solubility=75 | | | | | | | | | | | | |
| | Sycarbonic acid | | Lactic acid | | | | | | | | | | | | | |
| | Water-soluble organic solvent(B1) | | IPA | bp=83 | SPvalue=11.6 | 5 | 5 | 5 | 5 | 5 | 5 | 5 | 5 | 5 | 5 | 5 |
| | | | MP | bp=121 | SPvalue=11.3 | | | | | | | | | | | |
| | | | MB | bp=158 | SPvalue=10.9 | | | | | | | | | | | |
| | | | MMB | bp=173 | SPvalue=10.5 | | | | | | | | | | | |
| | | | 1,2-PD | bp=188 | SPvalue=13.5 | | | | | | | | | | | |
| | | | DEDG | bp=189 | SPvalue=8.0 | | | | | | | | | | | |
| | | | 1,3-BD | bp=208 | SPvalue=12.8 | | | | | | | | | | | |
| | | | 1,2-HD | bp=224 | SPvalue=11.8 | | | | | | | | | | | |
| | Surfactant (C1) | Acetylenediol-based | SF104 | SPvalue=10.4 | | | | | | | | | | | | |
| | | | SF440 | SPvalue=10.1 | | 1 | 1 | 1 | 1 | 1 | 1 | 1 | 1 | 1 | 1 | 1 |
| | | | SF465 | SPvalue=9.8 | | | | | | | | | | | | |
| | | | SF485 | SPvalue=9.6 | | | | | | | | | | | | |
| | | Siloxane-based | Siloxane compound 1 | SPvalue=8.1 | | | | | | | | | | | | |
| | | | Siloxane compound 2 | SPvalue=9.0 | | | | | | | | | | | | |
| | Others | Pigment dispersion | White pigment dispersion 1 | | | | | | | | | | | | | |
| | | Viscosity adjuster | ADEKA NOL UH-540 | Nv=30% | | | | | | | | | | | | |
| | | Preservative | BITaq | | | 1 | 1 | 1 | 1 | 1 | 1 | 1 | 1 | 1 | 1 | 1 |
| | Ion exchanged water | | | | | 60.1 | 60.1 | 60.1 | 60.1 | 60.1 | 60.1 | 60.1 | 60.1 | 59.6 | 59.6 | 63.3 |
| Spec | RD50 | 50% diameter of resin particles (A1) | | | | 100 | 100 | 100 | 110 | 110 | 100 | 100 | 230 | 110 | 100 | 80 |
| | R | Amount of resin particles (A1) | | | | 8.5 | 8.5 | 8.5 | 8.5 | 8.5 | 8.5 | 8.5 | 8.5 | 8.5 | 8.5 | 8.5 |
| | CA | Millimolar amount of calcium ion | | | | 32.2 | 32.2 | 32.2 | 32.2 | 32.2 | 32.2 | 32.2 | 32.2 | 32.2 | 32.2 | 32.2 |
| | A | Millimolar equivalent of carboxylic acid ion | | | | 64.4 | 64.4 | 64.4 | 64.4 | 64.4 | 64.4 | 64.4 | 64.4 | 64.4 | 64.4 | 64.4 |
| | SPT | Mixed SP value of carboxylic acid ions | | | | 13.3 | 13.3 | 13.3 | 13.3 | 13.3 | 13.3 | 13.3 | 13.3 | 13.3 | 13.3 | 13.3 |
| | SPB1 | (Mixed) SP value of water-soluble organic solvent (B1) | | | | 11.6 | 11.6 | 11.6 | 11.6 | 11.6 | 11.6 | 11.6 | 11.6 | 11.6 | 11.6 | 11.6 |
| | SPC1 | (Mixed) SP value of surfactant (C1) | | | | 10.1 | 10.1 | 10.1 | 10.1 | 10.1 | 10.1 | 10.1 | 10.1 | 10.1 | 10.1 | 10.1 |
| | | R/CA | | | | 0.26 | 0.26 | 0.26 | 0.26 | 0.26 | 0.26 | 0.26 | 0.26 | 0.26 | 0.26 | 0.26 |
| | | RD50/CA | | | | 3.1 | 3.1 | 3.1 | 3.4 | 3.4 | 3.1 | 3.1 | 7.1 | 3.4 | 3.1 | 2.5 |

[Table 2-2]

**Table 2 (continued 1)**

| | | | | | | 12 | 13 | 14 | 15 | 16 | 17 | 18 | 19 | 20 | 21 | 22 |
|---|---|---|---|---|---|---|---|---|---|---|---|---|---|---|---|---|
| | Pretreatment liquid No. | | | | | 12 | 13 | 14 | 15 | 16 | 17 | 18 | 19 | 20 | 21 | 22 |
| Blending formulation | Resin particles (A1) | (Meth)acrylic | (Meth)acrylic resin P1 | Nv=30% | Acid value=1 | | | | | | | | | | | |
| | | | (Meth)acrylic resin P2 | Nv=30% | Acid value=6 | | | | | | | | | | | |
| | | | (Meth)acrylic resin P3 | Nv=30% | Acid value=16 | 25 | 25 | 25 | 25 | 25 | 25 | 25 | 25 | 25 | 25 | 25 |
| | | | (Meth)acrylic resin P4 | Nv=30% | Acid value=14 | | | | | | | | | | | |
| | | | (Meth)acrylic resin P5 | Nv=30% | Acid value=29 | | | | | | | | | | | |
| | | | (Meth)acrylic resin P6 | Nv=30% | Acid value=48 | | | | | | | | | | | |
| | | Urethane (urea) | urethane (urea) resin P7 | Nv=30% | Acid value=15 | | | | | | | | | | | |
| | | | SUPERFLEX 460S | Nv=38% | | | | | | | | | | | | |
| | | | SUPERFLEX 650 | Nv=26% | | | | | | | | | | | | |
| | | Urethane-(meth)acrylic | Urethane acrylic resin P8 | Nv=30% | Acid value=20 | | | | | | | | | | | |
| | | Polyolefin | Hitec E-6400 | Nv=35% | | 2.9 | 2.9 | 2.9 | 2.9 | 2.9 | 2.9 | 2.9 | 2.9 | 2.9 | 2.9 | 2.9 |
| | | | Arrowbase SB-1230N | Nv=25% | | | | | | | | | | | | |
| | Carboxylic acid calcium salt | Non-hydroxycarboxylic acid calcium salt | Calcium benzoate | Solubility=2 | SPvalue=11.9 | 2.4 | | | | | | | | | | |
| | | | Calcium formate | Solubility=17 | SPvalue=12.3 | | | | 3.8 | 1.6 | 2 | 3.9 | 5.2 | 7.2 | 2 | 3 |
| | | | Calcium acetate | Solubility=28 | SPvalue=11.2 | | 3 | | | | | | | | 1 | |
| | | | Calcium propionate | Solubility=38 | SPvalue=10.7 | | | 3 | | | | | | | | |
| | | Hydroxycarboxylic acid calcium salt | Calcium lactate | Solubility=3 | SPvalue=14.9 | 2 | 2 | 2 | | 1.1 | 1.3 | 2.6 | 3.5 | 4.8 | 1.5 | 1.5 |
| | | | Calcium gluconate | Solubility=3 | SPvalue=18.8 | | | | 1.2 | | | | | | | |
| | Magnesium carboxylate salt | | Magnesium formate | Solubility=14 | SPvalue=12.3 | | | | | | | | | | | |
| | | | Magnesium lactate | Solubility=4 | SPvalue=14.9 | | | | | | | | | | | |
| | Non-carboxylic acid calcium salt | | Calcium chloride | Solubility=75 | | | | | | | | | | | | |
| | Sycarbonic acid | | Lactic acid | | | | | | | | | | | | | 1.5 |
| | Water-soluble organic solvent(B1) | | IPA | bp=83 | SPvalue=11.6 | 5 | 5 | 5 | 5 | 5 | 5 | 5 | 5 | 5 | 5 | 5 |
| | | | MP | bp=121 | SPvalue=11.3 | | | | | | | | | | | |
| | | | MB | bp=158 | SPvalue=10.9 | | | | | | | | | | | |
| | | | MMB | bp=173 | SPvalue=10.5 | | | | | | | | | | | |
| | | | 1,2-PD | bp=188 | SPvalue=13.5 | | | | | | | | | | | |
| | | | DEDG | bp=189 | SPvalue=8.0 | | | | | | | | | | | |
| | | | 1,3-BD | bp=208 | SPvalue=12.8 | | | | | | | | | | | |
| | | | 1,2-HD | bp=224 | SPvalue=11.8 | | | | | | | | | | | |
| | Surfactant (C1) | Acetylenediol-based | SF104 | SPvalue=10.4 | | | | | | | | | | | | |
| | | | SF440 | SPvalue=10.1 | | 1 | 1 | 1 | 1 | 1 | 1 | 1 | 1 | 1 | 1 | 1 |
| | | | SF465 | SPvalue=9.8 | | | | | | | | | | | | |
| | | | SF485 | SPvalue=9.6 | | | | | | | | | | | | |
| | | Siloxane-based | Siloxane compound 1 | SPvalue=8.1 | | | | | | | | | | | | |
| | | | Siloxane compound 2 | SPvalue=9.0 | | | | | | | | | | | | |
| | Others | Pigment dispersion | White pigment dispersion 1 | | | | | | | | | | | | | |
| | | Viscosity adjuster | ADEKA NOL UH-540 | Nv=30% | | | | | | | | | | | | |
| | | Preservative | BITaq | | | 1 | 1 | 1 | 1 | 1 | 1 | 1 | 1 | 1 | 1 | 1 |
| | Ion exchanged water | | | | | 60.7 | 60.1 | 60.1 | 60.1 | 62.4 | 61.8 | 58.6 | 56.4 | 53.1 | 60.6 | 59.1 |
| Spec | RD50 | 50% diameter of resin particles (A1) | | | | 100 | 100 | 100 | 100 | 100 | 100 | 100 | 100 | 100 | 100 | 100 |
| | R | Amount of resin particles (A1) | | | | 8.5 | 8.5 | 8.5 | 8.5 | 8.5 | 8.5 | 8.5 | 8.5 | 8.5 | 8.5 | 8.5 |
| | CA | Millimolar amount of calcium ion | | | | 17.7 | 28.1 | 25.3 | 31.7 | 17.3 | 21.3 | 41.9 | 56.0 | 77.3 | 28.6 | 29.9 |
| | A | Millimolar equivalent of carboxylic acid ion | | | | 35.3 | 56.3 | 50.6 | 63.4 | 34.7 | 42.7 | 83.8 | 112.0 | 154.7 | 57.1 | 76.5 |
| | SPT | Mixed SP value of carboxylic acid ions | | | | 13.3 | 12.6 | 12.3 | 13.9 | 13.4 | 13.3 | 13.3 | 13.3 | 13.3 | 12.9 | 13.9 |
| | SPB1 | (Mixed) SP value of water-soluble organic solvent (B1) | | | | 11.6 | 11.6 | 11.6 | 11.6 | 11.6 | 11.6 | 11.6 | 11.6 | 11.6 | 11.6 | 11.6 |
| | SPC1 | (Mixed) SP value of surfactant (C1) | | | | 10.1 | 10.1 | 10.1 | 10.1 | 10.1 | 10.1 | 10.1 | 10.1 | 10.1 | 10.1 | 10.1 |
| | R/CA | | | | | 0.48 | 0.30 | 0.34 | 0.27 | 0.49 | 0.40 | 0.20 | 0.15 | 0.11 | 0.30 | 0.28 |
| | RD50/CA | | | | | 5.7 | 3.6 | 4.0 | 3.2 | 5.8 | 4.7 | 2.4 | 1.8 | 1.3 | 3.5 | 3.3 |

[Table 2-3]

**Table 2 (continued 2)**

| | | | | | 23 | 24 | 25 | 26 | 27 | 28 | 29 | 30 | 31 | 32 | 33 |
|---|---|---|---|---|---|---|---|---|---|---|---|---|---|---|---|
| Pretreatment liquid No. | | | | | 23 | 24 | 25 | 26 | 27 | 28 | 29 | 30 | 31 | 32 | 33 |
| Blending formulation | Resin particles (A1) | (Meth)acrylic | (Meth)acrylic resin P1 | Nv=30% / Acid value=1 | | | | | | | | | | | |
| | | | (Meth)acrylic resin P2 | Nv=30% / Acid value=6 | | | | | | | | | | | |
| | | | (Meth)acrylic resin P3 | Nv=30% / Acid value=16 | 25 | 25 | 25 | 25 | 25 | 25 | 25 | 25 | 25 | 25 | 25 |
| | | | (Meth)acrylic resin P4 | Nv=30% / Acid value=14 | | | | | | | | | | | |
| | | | (Meth)acrylic resin P5 | Nv=30% / Acid value=29 | | | | | | | | | | | |
| | | | (Meth)acrylic resin P6 | Nv=30% / Acid value=48 | | | | | | | | | | | |
| | | Urethane (urea) | urethane (urea) resin P7 | Nv=30% / Acid value=15 | | | | | | | | | | | |
| | | | SUPERFLEX 460S | Nv=38% | | | | | | | | | | | |
| | | | SUPERFLEX 650 | Nv=26% | | | | | | | | | | | |
| | | Urethane-(meth)acrylic | Urethane acrylic resin P8 | Nv=30% / Acid value=20 | | | | | | | | | | | |
| | | Polyolefin | Hitec E-6400 | Nv=35% | 2.9 | 2.9 | 2.9 | 2.9 | 2.9 | 2.9 | 2.9 | 2.9 | 2.9 | 2.9 | 2.9 |
| | | | Arrowbase SB-1230N | Nv=25% | | | | | | | | | | | |
| | Carboxylic acid calcium salt | Non-hydroxycarboxylic acid calcium salt | Calcium benzoate | Solubility=2 / SPvalue=11.9 | | | | | | | | | | | |
| | | | Calcium formate | Solubility=17 / SPvalue=12.3 | 3 | 3 | 3 | 3 | 3 | 3 | 3 | 3 | 3 | 3 | 3 |
| | | | Calcium acetate | Solubility=28 / SPvalue=11.2 | | | | | | | | | | | |
| | | | Calcium propionate | Solubility=38 / SPvalue=10.7 | | | | | | | | | | | |
| | | Hydroxycarboxylic acid calcium salt | Calcium lactate | Solubility=3 / SPvalue=14.9 | 2 | 2 | 2 | 2 | 2 | 2 | 2 | 2 | 2 | 2 | 2 |
| | | | Calcium gluconate | Solubility=3 / SPvalue=18.8 | | | | | | | | | | | |
| | Magnesium carboxylate salt | Magnesium formate | | Solubility=14 / SPvalue=12.3 | | | | | | | | | | | |
| | | Magnesium lactate | | Solubility=4 / SPvalue=14.9 | | | | | | | | | | | |
| | Non-carboxylic acid calcium salt | Calcium chloride | | Solubility=75 | | | | | | | | | | | |
| | Sycarbonic acid | Lactic acid | | | | | | | | | | | | | |
| | Water-soluble organic solvent(B1) | IPA | | bp=83 / SPvalue=11.6 | | | | | | | | | 3 | 20 | 15 |
| | | MP | | bp=121 / SPvalue=11.3 | 5 | | | | | | | | | 10 | 15 |
| | | MB | | bp=158 / SPvalue=10.9 | | 5 | | | | | | 3.2 | | | |
| | | MMB | | bp=173 / SPvalue=10.5 | | | 5 | | | | | | | | |
| | | 1,2-PD | | bp=188 / SPvalue=13.5 | | | | 5 | | | | | | | 10 |
| | | DEDG | | bp=189 / SPvalue=8.0 | | | | | 5 | | | | | | |
| | | 1,3-BD | | bp=208 / SPvalue=12.8 | | | | | | 5 | | | | | |
| | | 1,2-HD | | bp=224 / SPvalue=11.8 | | | | | | | 5 | 1.8 | | | |
| | Surfactant (C1) | Acetylenediol-based | SF104 | SPvalue=10.4 | | | | | | | | | | | |
| | | | SF440 | SPvalue=10.1 | 1 | 1 | 1 | 1 | 1 | 1 | 1 | 1 | 1 | 1 | 1 |
| | | | SF465 | SPvalue=9.8 | | | | | | | | | | | |
| | | | SF485 | SPvalue=9.6 | | | | | | | | | | | |
| | | Siloxane-based | Siloxane compound 1 | SPvalue=8.1 | | | | | | | | | | | |
| | | | Siloxane compound 2 | SPvalue=9.0 | | | | | | | | | | | |
| | Others | Pigment dispersion | White pigment dispersion 1 | | | | | | | | | | | | |
| | | Viscosity adjuster | ADEKA NOL UH-540 | Nv=30% | | | | | | | | | | | |
| | | Preservative | | BITag | 1 | 1 | 1 | 1 | 1 | 1 | 1 | 1 | 1 | 1 | 1 |
| | Ion exchanged water | | | | 60.1 | 60.1 | 60.1 | 60.1 | 60.1 | 60.1 | 60.1 | 60.1 | 62.1 | 35.1 | 25.1 |
| Spec | RD50 | 50% diameter of resin particles (A1) | | | 100 | 100 | 100 | 100 | 100 | 100 | 100 | 100 | 100 | 100 | 100 |
| | R | Amount of resin particles (A1) | | | 8.5 | 8.5 | 8.5 | 8.5 | 8.5 | 8.5 | 8.5 | 8.5 | 8.5 | 8.5 | 8.5 |
| | CA | Millimolar amount of calcium ion | | | 32.2 | 32.2 | 32.2 | 32.2 | 32.2 | 32.2 | 32.2 | 32.2 | 32.2 | 32.2 | 32.2 |
| | A | Millimolar equivalent of carboxylic acid ion | | | 64.4 | 64.4 | 64.4 | 64.4 | 64.4 | 64.4 | 64.4 | 64.4 | 64.4 | 64.4 | 64.4 |
| | SPT | Mixed SP value of carboxylic acid ions | | | 13.3 | 13.3 | 13.3 | 13.3 | 13.3 | 13.3 | 13.3 | 13.3 | 13.3 | 13.3 | 13.3 |
| | SPB1 | (Mixed) SP value of water-soluble organic solvent (B1) | | | 11.3 | 10.9 | 10.5 | 13.5 | 8.0 | 12.8 | 11.8 | 11.2 | 11.6 | 11.5 | 11.9 |
| | SPC1 | (Mixed) SP value of surfactant (C1) | | | 10.1 | 10.1 | 10.1 | 10.1 | 10.1 | 10.1 | 10.1 | 10.1 | 10.1 | 10.1 | 10.1 |
| | R/CA | | | | 0.26 | 0.26 | 0.26 | 0.26 | 0.26 | 0.26 | 0.26 | 0.26 | 0.26 | 0.26 | 0.26 |
| | RD50/CA | | | | 3.1 | 3.1 | 3.1 | 3.1 | 3.1 | 3.1 | 3.1 | 3.1 | 3.1 | 3.1 | 3.1 |

[Table 2-4]

Table 2 (continued 3)

| | | | | | | 34 | 35 | 36 | 37 | 38 | 39 |
|---|---|---|---|---|---|---|---|---|---|---|---|
| Pretreatment liquid No. | | | | | | 34 | 35 | 36 | 37 | 38 | 39 |
| Blending formulation | Resin particles (A1) | (Meth)acrylic | (Meth)acrylic resin P1 | Nv=30% | Acid value=1 | | | | | | |
| | | | (Meth)acrylic resin P2 | Nv=30% | Acid value=6 | | | | | | |
| | | | (Meth)acrylic resin P3 | Nv=30% | Acid value=16 | 25 | 25 | 25 | 25 | 25 | 25 |
| | | | (Meth)acrylic resin P4 | Nv=30% | Acid value=14 | | | | | | |
| | | | (Meth)acrylic resin P5 | Nv=30% | Acid value=29 | | | | | | |
| | | | (Meth)acrylic resin P6 | Nv=30% | Acid value=48 | | | | | | |
| | | Urethane (urea) | urethane (urea) resin P7 | Nv=30% | Acid value=15 | | | | | | |
| | | | SUPERFLEX 460S | Nv=38% | | | | | | | |
| | | | SUPERFLEX 650 | Nv=26% | | | | | | | |
| | | Urethane-(meth)acrylic | Urethane acrylic resin P8 | Nv=30% | Acid value=20 | | | | | | |
| | | Polyolefin | Hitec E-6400 | Nv=35% | | 2.9 | 2.9 | 2.9 | 2.9 | 2.9 | 2.9 |
| | | | Arrowbase SB-1230N | Nv=25% | | | | | | | |
| | Carboxylic acid calcium salt | Non-hydroxy-carboxylic acid calcium salt | Calcium benzoate | Solubility=2 | SPvalue=11.9 | | | | | | |
| | | | Calcium formate | Solubility=17 | SPvalue=12.3 | 3 | 3 | 3 | 3 | 3 | 3 |
| | | | Calcium acetate | Solubility=28 | SPvalue=11.2 | | | | | | |
| | | | Calcium propionate | Solubility=38 | SPvalue=10.7 | | | | | | |
| | | Hydroxycarboxylic acid calcium salt | Calcium lactate | Solubility=3 | SPvalue=14.9 | 2 | 2 | 2 | 2 | 2 | 2 |
| | | | Calcium gluconate | Solubility=3 | SPvalue=18.8 | | | | | | |
| | Magnesium carboxylate salt | | Magnesium formate | Solubility=14 | SPvalue=12.3 | | | | | | |
| | | | Magnesium lactate | Solubility=4 | SPvalue=14.9 | | | | | | |
| | Non-carboxylic acid calcium salt | | Calcium chloride | Solubility=75 | | | | | | | |
| | Sycarbonic acid | | Lactic acid | | | | | | | | |
| | Water-soluble organic solvent(B1) | | IPA | bp=83 | SPvalue=11.6 | 5 | 5 | 5 | 5 | 5 | 5 |
| | | | MP | bp=121 | SPvalue=11.3 | | | | | | |
| | | | MB | bp=158 | SPvalue=10.9 | | | | | | |
| | | | MMB | bp=173 | SPvalue=10.5 | | | | | | |
| | | | 1,2-PD | bp=188 | SPvalue=13.5 | | | | | | |
| | | | DEDG | bp=189 | SPvalue=8.0 | | | | | | |
| | | | 1,3-BD | bp=208 | SPvalue=12.8 | | | | | | |
| | | | 1,2-HD | bp=224 | SPvalue=11.8 | | | | | | |
| | Surfactant (C1) | Acetylenediol-based | SF104 | SPvalue=10.4 | | 1 | | | | 0.5 | |
| | | | SF440 | SPvalue=10.1 | | | | | | | 1 |
| | | | SF465 | SPvalue=9.8 | | | | | | | |
| | | | SF485 | SPvalue=9.6 | | | 1 | | | | |
| | | Siloxane-based | Siloxane compound 1 | SPvalue=8.1 | | | | 1 | | 0.5 | |
| | | | Siloxane compound 2 | SPvalue=9.0 | | | | | 1 | | |
| | Others | Pigment dispersion | White pigment dispersion 1 | | | | | | | | 33.3 |
| | | Viscosity adjuster | ADEKA NOL UH-540 | Nv=30% | | | | | | | |
| | | Preservative | BITaq | | | 1 | 1 | 1 | 1 | 1 | 1 |
| | Ion exchanged water | | | | | 60.1 | 60.1 | 60.1 | 60.1 | 60.1 | 26.8 |
| Spec | RD50 | 50% diameter of resin particles (A1) | | | | 100 | 100 | 100 | 100 | 100 | 100 |
| | R | Amount of resin particles (A1) | | | | 8.5 | 8.5 | 8.5 | 8.5 | 8.5 | 8.5 |
| | CA | Millimolar amount of calcium ion | | | | 32.2 | 32.2 | 32.2 | 32.2 | 32.2 | 32.2 |
| | A | Millimolar equivalent of carboxylic acid ion | | | | 64.4 | 64.4 | 64.4 | 64.4 | 64.4 | 64.4 |
| | SPT | Mixed SP value of carboxylic acid ions | | | | 13.3 | 13.3 | 13.3 | 13.3 | 13.3 | 13.3 |
| | SPB1 | (Mixed) SP value of water-soluble organic solvent (B1) | | | | 11.6 | 11.6 | 11.6 | 11.6 | 11.6 | 11.6 |
| | SPC1 | (Mixed) SP value of surfactant (C1) | | | | 10.4 | 9.6 | 8.1 | 9.0 | 9.3 | 10.1 |
| | R/CA | | | | | 0.26 | 0.26 | 0.26 | 0.26 | 0.26 | 0.26 |
| | RD50/CA | | | | | 3.1 | 3.1 | 3.1 | 3.1 | 3.1 | 3.1 |

[Table 2-5]

**Table 2 (continued 4)**

| | | | Pretreatment liquid No. | | 40 | 41 | 42 | 43 | 44 | 45 | 46 | 47 | 48 | 49 |
|---|---|---|---|---|---|---|---|---|---|---|---|---|---|---|
| Blending formulation | Resin particles (A1) | (Meth)acrylic | (Meth)acrylic resin P1 | Nv=30% / Acid value=1 | | | | | | | | | | |
| | | | (Meth)acrylic resin P2 | Nv=30% / Acid value=6 | | | | | | | | | | |
| | | | (Meth)acrylic resin P3 | Nv=30% / Acid value=16 | 25 | 25 | 25 | | 8 | 35 | | | | |
| | | | (Meth)acrylic resin P4 | Nv=30% / Acid value=14 | | | | | | | | | | |
| | | | (Meth)acrylic resin P5 | Nv=30% / Acid value=29 | | | | | | | | | | |
| | | | (Meth)acrylic resin P6 | Nv=30% / Acid value=48 | | | | | | | | | | |
| | | Urethane (urea) | urethane (urea) resin P7 | Nv=30% / Acid value=15 | | | | | | | | | | |
| | | | SUPERFLEX 460S | Nv=38% | | | | | | | | 5.3 | | |
| | | | SUPERFLEX 650 | Nv=26% | | | | | | | 15 | | | |
| | | Urethane-(meth)acrylic | Urethane acrylic resin P8 | Nv=30% / Acid value=20 | | | | | | | | | | |
| | | Polyolefin | Hitec E-6400 | Nv=35% | 2.9 | 2.9 | 2.9 | | 2.9 | 2.9 | | | | |
| | | | Arrowbase SB-1230N | Nv=25% | | | | | | | | | 20 | 20 |
| | Carboxylic acid calcium salt | Non-hydroxycarboxylic acid calcium salt | Calcium benzoate | Solubility=2 / SPvalue=11.9 | | | | | | | | | | |
| | | | Calcium formate | Solubility=17 / SPvalue=12.3 | | 5 | 5 | 3 | 3 | 2 | | | 4 | 4 |
| | | | Calcium acetate | Solubility=28 / SPvalue=11.2 | | | | | | | | 2 | | 4 |
| | | | Calcium propionate | Solubility=38 / SPvalue=10.7 | | | 5 | | | | | | | |
| | | Hydroxycarboxylic acid calcium salt | Calcium lactate | Solubility=3 / SPvalue=14.9 | | | | 2 | 2 | 1.3 | | | 4 | 4 |
| | | | Calcium gluconate | Solubility=3 / SPvalue=18.8 | | | | | | | | | | |
| | Magnesium carboxylate salt | | Magnesium formate | Solubility=14 / SPvalue=12.3 | 3 | | | | | | | | | |
| | | | Magnesium lactate | Solubility=4 / SPvalue=14.9 | 2 | | | | | | | | | |
| | Non-carboxylic acid calcium salt | | Calcium chloride | Solubility=75 | | | | | | | 5 | | | |
| | Sycarbonic acid | | Lactic acid | | | | | | | | | | | |
| | Water-soluble organic solvent(B1) | | IPA | bp=83 / SPvalue=11.6 | 5 | 5 | 5 | 5 | 5 | 5 | | | 5 | 5 |
| | | | MP | bp=121 / SPvalue=11.3 | | | | | | | | | | |
| | | | MB | bp=158 / SPvalue=10.9 | | | | | | | | | | |
| | | | MMB | bp=173 / SPvalue=10.5 | | | | | | | | | | |
| | | | 1,2-PD | bp=188 / SPvalue=13.5 | | | | | | | | | | |
| | | | DEDG | bp=189 / SPvalue=8.0 | | | | | | | | | | |
| | | | 1,3-BD | bp=208 / SPvalue=12.8 | | | | | | | | | | |
| | | | 1,2-HD | bp=224 / SPvalue=11.8 | | | | | | | | | | |
| | Surfactant (C1) | Acetylenediol-based | SF104 | SPvalue=10.4 | | | | | | | | | | |
| | | | SF440 | SPvalue=10.1 | 1 | 1 | 1 | 1 | 1 | 1 | | | 0.5 | 0.5 |
| | | | SF465 | SPvalue=9.8 | | | | | | | | 0.5 | | |
| | | | SF485 | SPvalue=9.6 | | | | | | | | | | |
| | | Siloxane-based | Siloxane compound 1 | SPvalue=8.1 | | | | | | | | | | |
| | | | Siloxane compound 2 | SPvalue=9.0 | | | | | | | 1 | | | |
| | Others | Pigment dispersion | White pigment dispersion 1 | | | | | | | | | | | |
| | | Viscosity adjuster | ADEKA NOL UH-540 | Nv=30% | | | | | | | | | 4.5 | 4.5 |
| | | Preservative | BITaq | | 1 | 1 | 1 | 1 | 1 | 1 | 1 | 1 | 1 | 1 |
| | Ion exchanged water | | | | 60.1 | 60.1 | 55.1 | 88.0 | 77.1 | 51.8 | 78.0 | 91.2 | 61.0 | 57.0 |
| Spec | RD50 | | 50% diameter of resin particles (A1) | | 100 | 100 | 100 | --- | 90 | 100 | 20 | 40 | 85 | 85 |
| | R | | Amount of resin particles (A1) | | 8.5 | 8.5 | 8.5 | 0 | 3.4 | 11.5 | 3.9 | 2.0 | 5.0 | 5.0 |
| | CA | | Millimolar amount of calcium ion | | 0 | 38.4 | 65.3 | 32.2 | 32.2 | 21.3 | 45.1 | 12.6 | 49.1 | 74.4 |
| | A | | Millimolar equivalent of carboxylic acid ion | | 0 | 76.9 | 130.6 | 64.4 | 64.4 | 42.7 | 0 | 25.3 | 98.1 | 148.7 |
| | SPT | | Mixed SP value of carboxylic acid ions | | 13.3 | 12.3 | 11.5 | 13.3 | 13.3 | 13.3 | --- | 11.2 | 13.6 | 12.8 |
| | SPB1 | | (Mixed) SP value of water-soluble organic solvent (B1) | | 11.6 | 11.6 | 11.6 | 11.6 | 11.6 | 11.6 | --- | --- | 11.6 | 11.6 |
| | SPC1 | | (Mixed) SP value of surfactant (C1) | | 10.1 | 10.1 | 10.1 | 10.1 | 10.1 | 10.1 | 9.0 | 9.8 | 10.1 | 10.1 |
| | R/CA | | | | --- | 0.22 | 0.13 | --- | 0.106 | 0.54 | 0.09 | 0.16 | 0.10 | 0.07 |
| | RD50/CA | | | | --- | 2.6 | 1.5 | --- | 2.8 | 4.7 | 0.4 | 3.2 | 1.7 | 1.1 |

Details of materials in Table 2 that are not described above are as follows. The blending amounts of carboxylic acid calcium salts and magnesium carboxylate salts in Table 2 are all amounts as anhydrides.

- Calcium benzoate: salt solubility = 2 g/100 g $H_2O$ (20 °C), SP value of benzoic acid = 11.9 $(cal/cm^3)^{1/2}$
- Calcium formate: salt solubility = 17 g/100 g $H_2O$ (20 °C), SP value of formic acid = 12.3 $(cal/cm^3)^{1/2}$
- Calcium acetate: salt solubility = 28 g/100 g $H_2O$ (20 °C); SP value of acetic acid = 11.2 $(cal/cm^3)^{1/2}$
- Calcium propionate: salt solubility = 38 g/100 g $H_2O$ (20 °C); SP value of propionic acid = 10.7 $(cal/cm^3)^{1/2}$
- Calcium lactate: salt solubility = 3 g/100 g $H_2O$ (20 °C); SP value of lactic acid = 14.9 $(cal/cm^3)^{1/2}$
- Calcium gluconate: salt solubility = 3 g/100 g $H_2O$ (20 °C); SP value of gluconic acid = 18.8 $(cal/cm^3)^{1/2}$
- Magnesium formate: salt solubility = 14 g/100 g $H_2O$ (20 °C); SP value of formic acid = 12.3 $(cal/cm^3)^{1/2}$
- Magnesium lactate: salt solubility = 4 g/100 g $H_2O$ (20 °C); SP value of lactic acid = 14.9 $(cal/cm^3)^{1/2}$

· Calcium chloride: salt solubility = 75 g/100 g $H_2O$ (20 °C)
· Lactic acid: SP value = 14.9 $(cal/cm^3)^{1/2}$
· IPA: 2-propanol (boiling point at 1 atmosphere = 83 °C, SP value = 11.6 $(cal/cm^3)^{1/2}$
· MP: propylene glycol monomethyl ether (boiling point at 1 atmosphere = 121 °C, SP value = 11.3 $(cal/cm^3)^{1/2}$
· MB: 3-methoxybutanol (boiling point at 1 atmosphere = 158 °C, SP value = 10.9 $(cal/cm^3)^{1/2}$
· MMB: 3-methyl-3-methoxybutanol (boiling point at 1 atmosphere = 173 °C, SP value = 10.5 $(cal/cm^3)^{1/2}$
· 1,2-PD: 1,2-propanediol (boiling point at 1 atmosphere = 188 °C, SP value = 13.5 $(cal/cm^3)^{1/2}$
· DEDG: diethyleneglycol diethyl ether (boiling point at 1 atmosphere = 189 °C, SP value = 8.0 $(cal/cm^3)^{1/2}$
· 1,3-BD: 1,3-butanediol (boiling point at 1 atmosphere = 208 °C, SP value = 12.8 $(cal/cm^3)^{1/2}$
· 1,2-HD: 1,2-hexanediol (boiling point at 1 atmosphere = 224 °C, SP value = 11.8 $(cal/cm^3)^{1/2}$
· SF104: SURFYNOL 104 (acetylenediol-based surfactant manufactured by Air Products Limited, SP value = 10.4 $(cal/cm^3)^{1/2}$
· SF440: SURFYNOL 440 (acetylenediol-based surfactant manufactured by Air Products Limited, SP value = 10.1 $(cal/cm^3)^{1/2}$
· SF465: SURFYNOL 465 (acetylenediol-based surfactant manufactured by Air Products Limited, SP value = 9.8 $(cal/cm^3)^{1/2}$
· SF485: SURFYNOL 485 (acetylenediol-based surfactant manufactured by Air Products Limited, SP value = 9.6 $(cal/cm^3)^{1/2}$
· Siloxane compound 1: compound (SP value = 8.1 $(cal/cm^3)^{1/2}$) in which, in the above general formula 2, m = 2, n = 1, p = 3, q = 3, $R^1$= an ethylene group ($-CH_2CH_2-$), and $R^2$ = a methyl group
· Siloxane compound 2: compound (SP value = 9.0 $(cal/cm^3)^{1/2}$) in which, in general formula 2, m = 1, n = 0, p = 8, q = 3, $R^1$ = an ethylene group ($-CH_2CH_2-$), $R^2$ = a hydrogen atom
· ADEKA NOL UH-540: hydrophobically modified water-soluble urethane resin manufactured by ADEKA Corporation (solid fraction 30%)
· BITaq: 1% aqueous solution of 1,2-benzisothiazolin-3-one

Further, the pretreatment liquid 46 is a reproduction of the pretreatment liquid 9 described in an embodiment of Patent Document 2 above. The pretreatment liquid 47 is a reproduction of the pretreatment liquid (water-based primer composition) described in example 2 of Patent Document 3 above. The pretreatment liquids 48 and 49 are each a reproduction of the pretreatment liquids 75 and 77 described in an example of Patent Document 5 above. However, in the pretreatment liquid 47, "SUPERFLEX 460S" manufactured by DKS Co. Ltd., which has similar properties and physical properties, was used instead of "Impranil DLS" used in example 2 of Patent Document 3 above.

<Production of aqueous inkjet inks>

Aqueous inkjet inks described in Table 3 below were produced using combinations of a pigment dispersion with an aqueous inkjet ink blending formulation shown in Table 3. Note that the numbers of aqueous inkjet ink blending formulations described in Table 3 correspond to the numbers of aqueous inkjet ink blending formulations described in Table 4.

In the production of the aqueous inkjet inks, a mixing container equipped with a stirrer was charged with the required amount of ion exchanged water and then charged with a pigment dispersion, and further, raw materials were added in the mixing container in order from those listed in the upper row in each of the columns of Table 4. Note that each raw material was added while the mixture in the mixing container was stirred. Stirring was then continued until the mixture became sufficiently uniform, and then filtration was performed with a membrane filter having a pore size of 1.2 μm, thereby producing the aqueous inkjet inks.

[Table 3]

**Table 3**

| Inkjet ink No. | Pigment dispersion used | Inkjet ink blending formulation No. |
|---|---|---|
| 1K | Black pigment dispersion | 1 |
| 2K | Black pigment dispersion | 2 |
| 3K | Black pigment dispersion | 3 |
| 4K | Black pigment dispersion | 4 |

(continued)

| Inkjet ink No. | Pigment dispersion used | Inkjet ink blending formulation No. |
|---|---|---|
| 5K | Black pigment dispersion | 5 |
| 6K | Black pigment dispersion | 6 |
| 7K | Black pigment dispersion | 7 |
| 8K | Black pigment dispersion | 8 |
| 9K | Black pigment dispersion | 9 |
| 10K | Black pigment dispersion | 10 |
| 11K | Black pigment dispersion | 11 |
| 12K | Black pigment dispersion | 12 |
| 13K | Black pigment dispersion | 13 |
| 14K | Black pigment dispersion | 14 |
| 15K | Black pigment dispersion | 15 |
| 16K | Black pigment dispersion | 16 |
| 17K | Black pigment dispersion | 17 |
| 18K | Black pigment dispersion | 18 |
| 19K | Black pigment dispersion | 19 |
| 20K | Black pigment dispersion | 20 |
| 21K | Black pigment dispersion | 21 |
| 22K | Black pigment dispersion | 22 |
| 23K | Black pigment dispersion | 23 |
| 24K | Black pigment dispersion | 24 |
| 25K | Black pigment dispersion | 25 |
| 26K | Black pigment dispersion | 26 |
| 27K | Black pigment dispersion | 27 |
| 28K | Black pigment dispersion | 28 |
| 29K | Black pigment dispersion | 29 |
| 30K | Black pigment dispersion | 30 |
| 31K | Black pigment dispersion | 31 |
| 32K | Black pigment dispersion | 32 |
| 33K | Black pigment dispersion | 33 |
| 34K | Black pigment dispersion | 34 |
| 35K | Black pigment dispersion | 35 |
| 36K | Black pigment dispersion | 36 |
| 37K | Black pigment dispersion | 37 |
| 38K | Black pigment dispersion | 38 |
| 39K | Black pigment dispersion | 39 |
| 40K | Black pigment dispersion | 40 |
| 41K | Black pigment dispersion | 41 |
| 42K | Black pigment dispersion | 42 |
| 43K | Black pigment dispersion | 43 |

(continued)

| Inkjet ink No. | Pigment dispersion used | Inkjet ink blending formulation No. |
|---|---|---|
| 44K | Black pigment dispersion | 44 |
| 45K | Black pigment dispersion | 45 |
| 46K | Black pigment dispersion | 46 |
| 1C | Cyan pigment dispersion | 1 |
| 1M | Magenta pigment dispersion | 1 |
| 1Y | Yellow pigment dispersion | 1 |
| 7C | Cyan pigment dispersion | 7 |
| 7M | Magenta pigment dispersion | 7 |
| 7Y | Yellow pigment dispersion | 7 |
| 10C | Cyan pigment dispersion | 10 |
| 10M | Magenta pigment dispersion | 10 |
| 10Y | Yellow pigment dispersion | 10 |
| 21C | Cyan pigment dispersion | 21 |
| 21M | Magenta pigment dispersion | 21 |
| 21Y | Yellow pigment dispersion | 21 |
| 25C | Cyan pigment dispersion | 25 |
| 25M | Magenta pigment dispersion | 25 |
| 25Y | Yellow pigment dispersion | 25 |
| 1W | White pigment dispersion 2 | 1 |
| 2W | White pigment dispersion 2 | 2 |
| 3W | White pigment dispersion 2 | 3 |
| 4W | White pigment dispersion 2 | 4 |
| 26W | White pigment dispersion 2 | 26 |
| 27W | White pigment dispersion 2 | 27 |
| 28W | White pigment dispersion 2 | 28 |
| 29W | White pigment dispersion 2 | 29 |
| 30W | White pigment dispersion 2 | 30 |
| 31W | White pigment dispersion 2 | 31 |
| 32W | White pigment dispersion 2 | 32 |
| 33W | White pigment dispersion 2 | 33 |
| 34W | White pigment dispersion 2 | 34 |
| 35W | White pigment dispersion 2 | 35 |
| 36W | White pigment dispersion 2 | 36 |
| 37W | White pigment dispersion 2 | 37 |
| 38W | White pigment dispersion 2 | 38 |
| 39W | White pigment dispersion 2 | 39 |
| 40W | White pigment dispersion 2 | 40 |
| 41W | White pigment dispersion 2 | 41 |
| 42W | White pigment dispersion 2 | 42 |

[Table 4-1]

**Table 4**

| | | | | | | 1 | 2 | 3 | 4 | 5 | 6 | 7 | 8 | 9 | 10 | 11 | 12 |
|---|---|---|---|---|---|---|---|---|---|---|---|---|---|---|---|---|---|
| Inkjet ink blending formulation No. | | | | | | 1 | 2 | 3 | 4 | 5 | 6 | 7 | 8 | 9 | 10 | 11 | 12 |
| Blending formulation | Pigment dispersion (refer to Table 3 for types of pigment dispersion used) | | | | | 33.3 | 33.3 | 33.3 | 33.3 | 33.3 | 33.3 | 33.3 | 33.3 | 33.3 | 33.3 | 33.3 | 33.3 |
| | Water-soluble organic solvent(B2)/(B3) | Diol-based solvent | 1,2-PD | bp=188 | SPvalue=13.5 | 20 | | | | | | 20 | 20 | 20 | 20 | | |
| | | | 1,2-BD | bp=193 | SPvalue=12.8 | | 20 | | | | 15 | | | | | 23 | |
| | | | 1,3-BD | bp=208 | SPvalue=12.8 | | | 20 | | | | | | | | | |
| | | | 2,3-BD | bp=182 | SPvalue=12.6 | | | | 25 | | | | | | | | |
| | | | 1,2-PeD | bp=210 | SPvalue=12.2 | | | | | | 10 | | | | | | |
| | | | DPG | bp=231 | SPvalue=13.3 | | | | | 20 | | | | | | | 20 |
| | | Glycol monoalkyl ether-based solvent | MP | bp=121 | SPvalue=11.3 | 4 | 4 | 4 | 4 | 4 | 4 | | | | | | |
| | | | MB | bp=158 | SPvalue=10.9 | | | | | | | 4 | | | | | |
| | | | MMB | bp=173 | SPvalue=10.5 | | | | | | | | 4 | | | | |
| | | | MDP | bp=190 | SPvalue=10.4 | | | | | | | | | 4 | | | |
| | | | iPDG | bp=207 | SPvalue=10.6 | | | | | | | | | | 4 | | |
| | | Others | DEDG | bp=189 | SPvalue=8.0 | | | | | | | | | | | 2 | |
| | | | NMP | bp=202 | SPvalue=10.1 | | | | | | | | | | | | 5 |
| | Surfactant (C2)/(C3) | Acetylene diol-based | SF104 | SPvalue=10.4 | | 1 | 1 | 1 | 1 | 1 | 1 | 1 | 1 | 1 | 1 | 1 | 1 |
| | | | SF440 | SPvalue=10.1 | | | | | | | | | | | | | |
| | | | SF465 | SPvalue=9.8 | | | | | | | | | | | | | |
| | | | SF485 | SPvalue=9.6 | | 1 | 1 | 1 | 1 | 1 | 1 | 1 | 1 | 1 | 1 | 1 | 1 |
| | | Siloxane-based | Siloxane compound1 | SPvalue=8.1 | | 1.5 | 1.5 | 1.5 | 1.5 | 1.5 | 1.5 | 1.5 | 1.5 | 1.5 | 1.5 | 1.5 | 1.5 |
| | | | Siloxane compound2 | SPvalue=9.0 | | | | | | | | | | | | | |
| | | | Siloxane compound3 | SPvalue=8.8 | | | | | | | | | | | | | |
| | Binder resin | Methacrylic resin I1 | | Nv=30% | Acid value=13 | | | | | | | | | | | | |
| | | Methacrylic resin I2 | | Nv=30% | Acid value=46 | | | | | | | | | | | | |
| | | Methacrylic resin I3 | | Nv=30% | Acid value=29 | 13.4 | 13.4 | 13.4 | 13.4 | 13.4 | 13.4 | 13.4 | 13.4 | 13.4 | 13.4 | 13.4 | 13.4 |
| | | AW-36H | | Nv=25% | Acid value=62 | | | | | | | | | | | | |
| | Other (preservative) | BITaq | | | | 1 | 1 | 1 | 1 | 1 | 1 | 1 | 1 | 1 | 1 | 1 | 1 |
| | Ion exchanged water | | | | | 24.8 | 24.8 | 24.8 | 19.8 | 24.8 | 19.8 | 24.8 | 24.8 | 24.8 | 24.8 | 23.8 | 23.8 |
| Spec | SPB2 or SPB3 | (Mixed) SP value of water-soluble organic solvent | | | | 13.1 | 12.5 | 12.5 | 12.4 | 12.9 | 12.4 | 13.1 | 13.0 | 13.0 | 13.0 | 12.4 | 12.6 |
| | SPB2 or SPB3 | (Mixed) SP value of surfactant | | | | 9.2 | 9.2 | 9.2 | 9.2 | 9.2 | 9.2 | 9.2 | 9.2 | 9.2 | 9.2 | 9.2 | 9.2 |
| | Weighted average value of boiling points of water-soluble organic solvents | | | | | 177 | 181 | 194 | 174 | 213 | 189 | 183 | 186 | 188 | 191 | 193 | 225 |

[Table 4-2]

**Table 4 (continued 1)**

| | | | | | | 13 | 14 | 15 | 16 | 17 | 18 | 19 | 20 | 21 | 22 | 23 | 24 | 25 |
|---|---|---|---|---|---|---|---|---|---|---|---|---|---|---|---|---|---|---|
| Inkjet ink blending formulation No. | | | | | | 13 | 14 | 15 | 16 | 17 | 18 | 19 | 20 | 21 | 22 | 23 | 24 | 25 |
| Blending formulation | Pigment dispersion (refer to Table 3 for types of pigment dispersion used) | | | | | 33.3 | 33.3 | 33.3 | 33.3 | 33.3 | 33.3 | 33.3 | 33.3 | 33.3 | 33.3 | 33.3 | 33.3 | 33.3 |
| | Water-soluble organic solvent(B2)/(B3 | Diol-based solvent | 1,2-PD | bp=188 | SPvalue=13.5 | 12.6 | 18 | 20.4 | 21.8 | 15 | 18 | 5 | 32.5 | 40 | 20 | 20 | 20 | 20 |
| | | | 1,2-BD | bp=193 | SPvalue=12.8 | | | | | | | | | | | | | |
| | | | 1,3-BD | bp=208 | SPvalue=12.8 | | | | | | | | | | | | | |
| | | | 2,3-BD | bp=182 | SPvalue=12.6 | | | | | | | | | | | | | |
| | | | 1,2-PeD | bp=210 | SPvalue=12.2 | | | | | | | | | | | | | |
| | | | DPG | bp=231 | SPvalue=13.3 | | | | | 5 | 2 | | | | | | | |
| | | Glycol monoalkyl ether-based solvent | MP | bp=121 | SPvalue=11.3 | 11.4 | 6 | 3.6 | 2.2 | 4 | 4 | 1 | 6.5 | 8 | 4 | 4 | 4 | 4 |
| | | | MB | bp=158 | SPvalue=10.9 | | | | | | | | | | | | | |
| | | | MMB | bp=173 | SPvalue=10.5 | | | | | | | | | | | | | |
| | | | MDP | bp=190 | SPvalue=10.4 | | | | | | | | | | | | | |
| | | | iPDG | bp=207 | SPvalue=10.6 | | | | | | | | | | | | | |
| | | Others | DEDG | bp=189 | SPvalue=8.0 | | | | | | | | | | | | | |
| | | | NMP | bp=202 | SPvalue=10.1 | | | | | | | | | | | | | |
| | Surfactant (C2)/(C3) | Acetylene diol-based | SF104 | SPvalue=10.4 | | 1 | 1 | 1 | 1 | 1 | 1 | 1 | 1 | 1 | 1 | 1 | 1 | 1 |
| | | | SF440 | SPvalue=10.1 | | | | | | | | | | | | | | |
| | | | SF465 | SPvalue=9.8 | | | | | | | | | | | | | | |
| | | | SF485 | SPvalue=9.6 | | 1 | 1 | 1 | 1 | 1 | 1 | 1 | 1 | 1 | 1 | 1 | 1 | |
| | | Siloxane-based | Siloxane compound1 | SPvalue=8.1 | | 1.5 | 1.5 | 1.5 | 1.5 | 1.5 | 1.5 | 1.5 | 1.5 | 1.5 | 1.5 | 1.5 | 1.5 | |
| | | | Siloxane compound2 | SPvalue=9.0 | | | | | | | | | | | | | | 0.5 |
| | | | Siloxane compound3 | SPvalue=8.8 | | | | | | | | | | | | | | 1 |
| | Binder resin | | Methacrylic resin I1 | Nv=30% | Acid value=13 | | | | | | | | | | | 13.4 | | |
| | | | Methacrylic resin I2 | Nv=30% | Acid value=46 | | | | | | | | | | | | 13.4 | |
| | | | Methacrylic resin I3 | Nv=30% | Acid value=29 | 13.4 | 13.4 | 13.4 | 13.4 | 13.4 | 13.4 | 13.4 | 13.4 | 13.4 | | | | 13.4 |
| | | | AW-36H | Nv=25% | Acid value=62 | | | | | | | | | | 16.1 | | | |
| | Other (preservative) | | BITaq | | | 1 | 1 | 1 | 1 | 1 | 1 | 1 | 1 | 1 | 1 | 1 | 1 | 1 |
| | Ion exchanged water | | | | | 24.8 | 24.8 | 24.8 | 24.8 | 24.8 | 24.8 | 42.8 | 9.8 | 0.8 | 22.1 | 24.8 | 24.8 | 25.8 |
| Spec | SPB2 or SPB3 | (Mixed) SP value of water-soluble organic solvent | | | | 12.4 | 12.9 | 13.1 | 13.3 | 13.1 | 13.1 | 13.1 | 13.1 | 13.1 | 13.1 | 13.1 | 13.1 | 13.1 |
| | SPB2 or SPB3 | (Mixed) SP value of surfactant | | | | 9.2 | 9.2 | 9.2 | 9.2 | 9.2 | 9.2 | 9.2 | 9.2 | 9.2 | 9.2 | 9.2 | 9.2 | 9.5 |
| | Weighted average value of boiling points of water-soluble organic solvents | | | | | 156 | 171 | 178 | 182 | 186 | 180 | 177 | 177 | 177 | 177 | 177 | 177 | 177 |

[Table 4-3]

**Table 4 (continued 2)**

| | | | | | | 26 | 27 | 28 | 29 | 30 | 31 | 32 | 33 | 34 | 35 | 36 | 37 |
|---|---|---|---|---|---|---|---|---|---|---|---|---|---|---|---|---|---|
| Inkjet ink blending formulation No. | | | | | | 26 | 27 | 28 | 29 | 30 | 31 | 32 | 33 | 34 | 35 | 36 | 37 |
| Blending formulation | Pigment dispersion (refer to Table 3 for types of pigment dispersion used) | | | | | 33.3 | 33.3 | 33.3 | 33.3 | 33.3 | 33.3 | 33.3 | 33.3 | 33.3 | 33.3 | 33.3 | 33.3 |
| | Water-soluble organic solvent(B2)/(B3 | Diol-based solvent | 1,2-PD | bp=188 | SPvalue=13.5 | | | | | | | | | | | | |
| | | | 1,2-BD | bp=193 | SPvalue=12.8 | 20 | 20 | 20 | 20 | 20 | 20 | 20 | 20 | 20 | 20 | 20 | 20 |
| | | | 1,3-BD | bp=208 | SPvalue=12.8 | | | | | | | | | | | | |
| | | | 2,3-BD | bp=182 | SPvalue=12.6 | | | | | | | | | | | | |
| | | | 1,2-PeD | bp=210 | SPvalue=12.2 | | | | | | | | | | | | |
| | | | DPG | bp=231 | SPvalue=13.3 | | | | | | | | | | | | |
| | | Glycol monoalkyl ether-based solvent | MP | bp=121 | SPvalue=11.3 | 4 | 4 | 4 | 4 | 4 | 4 | 4 | 4 | 4 | 4 | 4 | 4 |
| | | | MB | bp=158 | SPvalue=10.9 | | | | | | | | | | | | |
| | | | MMB | bp=173 | SPvalue=10.5 | | | | | | | | | | | | |
| | | | MDP | bp=190 | SPvalue=10.4 | | | | | | | | | | | | |
| | | | iPDG | bp=207 | SPvalue=10.6 | | | | | | | | | | | | |
| | | Others | DEDG | bp=189 | SPvalue=8.0 | | | | | | | | | | | | |
| | | | NMP | bp=202 | SPvalue=10.1 | | | | | | | | | | | | |
| | Surfactant (C2)/(C3) | Acetylene diol-based | SF104 | | SPvalue=10.4 | | 1 | | | | 1 | | 1.5 | | | | |
| | | | SF440 | | SPvalue=10.1 | | | 1 | | | | 1 | | | | | |
| | | | SF465 | | SPvalue=9.8 | 1 | | | 1 | 1 | 1 | | | | | 1.4 | 0.8 |
| | | | SF485 | | SPvalue=9.6 | | | | | | | | | | | | |
| | | Siloxane-based | Siloxane compound1 | | SPvalue=8.1 | 1.5 | 1.5 | 1.5 | | | 1.5 | | | 2 | 1.3 | 2 | 1.2 |
| | | | Siloxane compound2 | | SPvalue=9.0 | | | | 1.5 | | | 0.5 | | | 0.7 | | |
| | | | Siloxane compound3 | | SPvalue=8.8 | | | | | 1.5 | | 1 | | | | | |
| | Binder resin | Methacrylic resin I1 | | Nv=30% | Acid value=13 | | | | | | | | | | | | |
| | | Methacrylic resin I2 | | Nv=30% | Acid value=46 | | | | | | | | | | | | |
| | | Methacrylic resin I3 | | Nv=30% | Acid value=29 | 13.4 | 13.4 | 13.4 | 13.4 | 13.4 | 13.4 | 13.4 | 13.4 | 13.4 | 13.4 | 13.4 | 13.4 |
| | | AW-36H | | Nv=25% | Acid value=62 | | | | | | | | | | | | |
| | Other (preservative ) | BITaq | | | | 1 | 1 | 1 | 1 | 1 | 1 | 1 | 1 | 1 | 1 | 1 | 1 |
| | Ion exchanged water | | | | | 25.8 | 25.8 | 25.8 | 25.8 | 25.8 | 24.8 | 25.8 | 26.8 | 26.3 | 26.3 | 24.9 | 26.3 |
| Spec | SPB2 or SPB3 | (Mixed) SP value of water-soluble organic solvent | | | | 12.5 | 12.5 | 12.5 | 12.5 | 12.5 | 12.5 | 12.5 | 12.5 | 12.5 | 12.5 | 12.5 | 12.5 |
| | SPB2 or SPB3 | (Mixed) SP value of surfactant | | | | 8.8 | 9.0 | 8.9 | 9.3 | 9.2 | 9.3 | 9.4 | 10.4 | 8.1 | 8.4 | 8.8 | 8.8 |
| | Weighted average value of boiling points of water-soluble organic solvents | | | | | 181 | 181 | 181 | 181 | 181 | 181 | 181 | 181 | 181 | 181 | 181 | 181 |

[Table 4-4]

**Table 4 (continued 3)**

| | | | | | 38 | 39 | 40 | 41 | 42 | 43 | 44 | 45 | 46 |
|---|---|---|---|---|---|---|---|---|---|---|---|---|---|
| Blending formulation | Pigment dispersion (refer to Table 3 for types of pigment dispersion used) | | | | 33.3 | 33.3 | 33.3 | 33.3 | 33.3 | 33.3 | 33.3 | 33.3 | 33.3 |
| Water-soluble organic solvent(B2)/(B3 | Diol-based solvent | 1,2-PD | bp=188 | SPvalue=13.5 | | | | | | 24 | | 11 | 20 |
| | | 1,2-BD | bp=193 | SPvalue=12.8 | 20 | 21.8 | 20 | 20 | 20 | | | | |
| | | 1,3-BD | bp=208 | SPvalue=12.8 | | | | | | | | | |
| | | 2,3-BD | bp=182 | SPvalue=12.6 | | | | | | | | | |
| | | 1,2-PeD | bp=210 | SPvalue=12.2 | | | | | | | | | |
| | | DPG | bp=231 | SPvalue=13.3 | | | | | | | | | |
| | Glycol monoalkyl ether-based solvent | MP | bp=121 | SPvalue=11.3 | 4 | 2.2 | 4 | 4 | 4 | | 24 | 13 | |
| | | MB | bp=158 | SPvalue=10.9 | | | | | | | | | |
| | | MMB | bp=173 | SPvalue=10.5 | | | | | | | | | |
| | | MDP | bp=190 | SPvalue=10.4 | | | | | | | | | |
| | | iPDG | bp=207 | SPvalue=10.6 | | | | | | | | | |
| | Others | DEDG | bp=189 | SPvalue=8.0 | | | | | | | | | |
| | | NMP | bp=202 | SPvalue=10.1 | | | | | | | | | |
| Surfactant (C2)/(C3) | Acetylene diol-based | SF104 | SPvalue=10.4 | | | | | | | 1 | 1 | 1 | |
| | | SF440 | SPvalue=10.1 | | | | | | | | | | |
| | | SF465 | SPvalue=9.8 | | 0.6 | 1 | 1 | 1 | 1 | | | | |
| | | SF485 | SPvalue=9.6 | | | | | | | 1 | 1 | 1 | |
| | Siloxane-based | Siloxane compound1 | SPvalue=8.1 | | 0.9 | 1.5 | 1.5 | 1.5 | 1.5 | 1.5 | 1.5 | 1.5 | 1 |
| | | Siloxane compound2 | SPvalue=9.0 | | | | | | | | | | |
| | | Siloxane compound3 | SPvalue=8.8 | | | | | | | | | | |
| Binder resin | Methacrylic resin I1 | | Nv=30% | Acid value=13 | | | | 13.4 | | | | | |
| | Methacrylic resin I2 | | Nv=30% | Acid value=46 | | | | | 13.4 | | | | |
| | Methacrylic resin I3 | | Nv=30% | Acid value=29 | 13.4 | 13.4 | | | | 13.4 | 13.4 | 13.4 | 22 |
| | AW-36H | | Nv=25% | Acid value=62 | | | 16.1 | | | | | | |
| Other (preservative) | BITaq | | | | 1 | 1 | 1 | 1 | 1 | 1 | 1 | 1 | 1 |
| Ion exchanged water | | | | | 26.8 | 25.8 | 23.1 | 25.8 | 25.8 | 24.8 | 24.8 | 24.8 | 22.7 |
| Spec | SPB2 or SPB3 | (Mixed) SP value of water-soluble organic solvent | | | 12.5 | 12.6 | 12.5 | 12.5 | 12.5 | 13.5 | 11.3 | 12.3 | 13.5 |
| | SPB2 or SPB3 | (Mixed) SP value of surfactant | | | 8.8 | 8.8 | 8.8 | 8.8 | 8.8 | 9.2 | 9.2 | 9.2 | 8.1 |
| | Weighted average value of boiling points of water-soluble organic solvents | | | | 181 | 186 | 181 | 181 | 181 | 188 | 121 | 152 | 188 |

Note that details of materials in Table 4 that are not described above and are not described in Table 2 are as follows.

- 1,2-BD: 1,2-butanediol (boiling point at 1 atmosphere = 193 °C, SP value = 12.8 $(cal/cm^3)^{1/2}$
- 2,3-BD: 2,3-butanediol (boiling point at 1 atmosphere = 182 °C, SP value = 12.6 $(cal/cm^3)^{1/2}$

· 1,2-PeD: 1,2-pentanediol (boiling point at 1 atmosphere = 210 °C, SP value = 12.2 $(cal/cm^3)^{1/2}$
· DPG: dipropylene glycol (boiling point at 1 atmosphere = 231 °C, SP value = 13.3 $(cal/cm^3)^{1/2}$
· MDP: dipropylene glycol monomethyl ether (boiling point at 1 atmosphere = 190 °C, SP value = 10.4 $(cal/cm^3)^{1/2}$
· iPDG: diethylene glycol isopropyl ether (boiling point at 1 atmosphere = 207 °C, SP value = 10.6 $(cal/cm^3)^{1/2}$
· NMP: N-methylpyrrolidone (boiling point at 1 atmosphere = 202 °C, SP value = 10.1 $(cal/cm^3)^{1/2}$
· Siloxane compound 3: a compound (SP value = 8.8 $(cal/cm^3)^{1/2}$) in which, in general formula 2, m = 1, n = 1, p = 6, q = 3, $R^1$ = an ethylene group ($-CH_2CH_2-$), and $R^2$ = a hydrogen atom
· AW-36H: acrylic resin varnish manufactured by SEIKO PMC CORPORATION

(solid fraction 25%, acid value of resin = 62 mgKOH/g)

Further, an aqueous inkjet ink blending formulation 46 in Table 4 is a reproduction of the inkjet ink set 1 described in an example of Patent Document 5 above. However, in the aqueous inkjet ink blending formulation 46, methacrylic resin I3 and siloxane compound 1 are respectively used instead of " JONCRYL 8211" and "KF-6015" used in the inkjet ink set 1 of Patent Document 5

<Production of film substrate on which pretreatment liquid is applied>

Using a non-wire bar coater 250-OSP-02 manufactured by OSG SYSTEM PRODUCTS Co., LTD, the above pretreatment liquid was applied to a biaxially-oriented polypropylene film "OPU-1" (20 μm thick) manufactured by Mitsui Chemicals Tosero Co., Ltd. in such a manner that the wet film thickness was 2.0 μm. After that, the coated film substrate was put into an air oven at 70 °C and dried for 2 minutes to produce a film substrate to which the pretreatment liquid had been applied.

<Production of printed matter I>

An inkjet ejector was prepared in which four inkjet heads KJ4B-1200 (design resolution 1,200 dpi, nozzle diameter 20 μm) manufactured by KYOCERA Corporation were installed side by side along the transport direction of recording media, and the above aqueous inkjet ink was filled in one inkjet head installed on the most downstream side in the conveying direction. Further, the above film substrate on which the pretreatment liquid is applied is fixed on the conveyor. After that, the conveyor was driven at a constant speed, and when the film substrate passes under the installation part of the inkjet heads, the aqueous inkjet ink was jetted at a drop volume of 2 pL, and the image was printed. Immediately after printing, the printed matter was put into an air oven at 70 °C and dried for 3 minutes to produce printed matter.

Note that two types of printing images were prepared: a solid image with a coverage rate of 100% (5 cm wide × 30 cm long); and an image with a coverage rate continuously changed between 10% and 100% (hereinafter also referred to as a "monochrome gradient image"), and each printed matter was produced.

[Examples 1 to 86, comparative examples 1 to 13]

The combinations of a pretreatment liquid and aqueous inkjet inks shown in Table 5 were evaluated as follows. Note that evaluation results are shown in Table 5.

<Evaluation 1: image quality evaluation>

(Evaluation 1A: evaluation of image quality (initial))

Based on the above "production of printed matter I", solid images and monochrome gradient images were printed at three types film substrate-transfer speeds (printing speeds) of 25 m/min, 50 m/min, and 75 m/min for each combination of a pretreatment liquid and an aqueous inkjet ink shown in Table 5 below. Further, in order to improve the visibility during evaluation, a white backing paper (black backing paper only in example 43) was attached to the non-printed surface of the obtained printed matter.

Thereafter, regarding the printed matter with solid images, the degree of voids was visually observed from the printing surface side, and regarding the printed matter with monochrome gradient images, the dot shape at a printing coverage of 10% to 20% was observed under magnification of 200 times from the printed surface side using an optical microscope. Then, the image quality was comprehensively determined from the degree of voids in the printed matter with solid images and the degree of dot shape of the printed matter with monochrome gradient images. The evaluation criteria were as follows, and ◎, ○, and △ were considered to be practically usable.

(Evaluation criteria)

◎: In the printed matter printed at 75 m/min, neither voids nor dot shape disturbance was observed.
○: In the printed matter printed at 75 m/min, voids and/or dot shape disturbance was observed, but in the printed matter printed at 50 m/min, neither voids nor dot shape disturbance was observed.
△: In the printed matter printed at 50 m/min, voids and/or dot shape disturbance was observed, but in the printed matter printed at 25 m/min, neither voids nor dot shape disturbance was observed.
×: In the printed matter printed at 25 m/min, voids and/or dot shape disturbance was observed.

(Evaluation 1B: evaluation of image quality (after aging of substrate))

After the production of a film substrate to which the pretreatment liquid had been applied, except that the film substrate was left standing in an air oven at 50 °C for 1 week and then used for production of printed matter, evaluation was performed using the same method and evaluation criteria as in the above evaluation 1A on the image quality when the film substrate to which the pretreatment liquid had been applied was aged.

(Evaluation 1C: evaluation of image quality (after aging of pretreatment liquid))

An amount of 10 kg of the pretreatment liquid was put in a 18-liter drum with a low-density polyethylene bag inside, the lid was closed, and then the drum was left standing in a large air oven at 50 °C for 1 week, thereby completing production of a treatment liquid after aging. Except for producing a pretreatment liquid applied-film substrate using this treatment liquid after aging and using the film substrate for production of printed matter, evaluation was performed using the same method and evaluation criteria as in the above evaluation 1A on the image quality when the pretreatment liquid was aged.

<Evaluation 2: evaluation of adhesion>

(Evaluation 2A: evaluation of adhesion (initial))

Based on the above "production of printed matter I", for each combination of a pretreatment liquid and an aqueous inkjet ink shown in Table 5 below, solid images were printed at a film substrate-transfer speed (printing speed) of 50 m/min. After that, a cellophane tape (18 mm wide) manufactured by Nichiban Co., Ltd. was firmly attached to the surface of the printed matter with solid images, and the edge of the cellophane tape was held and pulled off instantaneously while maintaining an angle of 60 degrees. Then, the adhesion was evaluated by visually observing the surface of the printed matter after the cellophane tape had been removed and the adhesive surface of the cellophane tape. The evaluation criteria were as follows, and ◎, ○, and △ were considered to be practically usable.

(Evaluation criteria)

◎: The area of a peeled part was less than 5% of the area of a part where the cellophane tape was attached.
○: The area of a peeled part was 5% or more and less than 10% of the area of a part where the cellophane tape was attached.
△: The area of a peeled part was 10% or more and less than 15% of the area of a part where the cellophane tape was attached.
×: The area of a peeled part was 15% or more of the area of a part where the cellophane tape was attached.

(Evaluation 2B: evaluation of adhesion (after aging of substrate))

After the production of a film substrate to which the pretreatment liquid had been applied, the film was left standing in an air oven at 50 °C for 1 week and then used for production of printed matter. Other than this, using the same method and evaluation criteria as in evaluation 2A above, evaluation was performed on the adhesion when the film substrate to which the pretreatment liquid had been applied was aged.

(Evaluation 2C: evaluation of adhesion (after aging of pretreatment liquid))

Using a treatment liquid after aging produced using the same method as in evaluation 1C above, a film substrate to which the pretreatment liquid had been applied was produced and used for production of printed matter. Other than this, using the same method and evaluation criteria as in evaluation 2A above, evaluation was performed on the adhesion when the pretreatment liquid was aged.

<Evaluation 3: evaluation of lamination suitability>

(Evaluation 3A: lamination suitability evaluation (initial))

Based on the above "production of printed matter I", solid images were printed at a film substrate-transfer speed (printing speed) of 50 m/min for each combination of a pretreatment liquid and an aqueous inkjet ink shown in Table 5 below. Then, a solvent-free laminating adhesive ("EA-N373A/B" manufactured by Toyo-Morton, Ltd.) was applied to the printing surface of printed matter with solid images under the condition of a temperature of 60 °C and a coating speed of 50 m/min (coating amount: 2 g/$m^2$) using a solvent-free test coater.

Further, a corona-treated surface of an unstretched polypropylene film "FHK2" (25 μm thick) manufactured by Futamura Chemical Co., Ltd. was layered on the surface coated with the laminating adhesive, and then was subjected to aging treatment for 1 day under an environment of 40 °C and 80%RH, thereby curing the solvent-free laminating adhesive to produce a laminated product. The obtained laminated product was cut to a width of 15 mm and a length of 30 cm so as to include an ink layer on the entire surface, and used as a test piece. After setting the test piece in an Instron-type tensile tester, the test piece was pulled under the condition of an environment of 25 °C and a peeling speed of 300 mm/min, and the T-type peeling strength (N) was measured. This test was performed five times, and the average value was calculated as the adhesive strength (laminate strength) to evaluate lamination suitability. The evaluation criteria were as follows, and ◎, ○, and △ were considered to be practically usable.

(Evaluation criteria)

◎: Laminate strength was 1.5 N or more.
○: Laminate strength was 1.0 N or more and less than 1.5 N.
△: Laminate strength was 0.5 N or more and less than 1.0 N
x: Laminate strength was less than 0.5 N

(Evaluation 3B: evaluation of lamination suitability (after aging of substrate))

After the production of a film substrate to which the pretreatment liquid had been applied, the film substrate was left standing in an air oven at 50 °C for 1 week and then used for production of printed matter. Other than this, using the same method and evaluation criteria as in evaluation 3A above, evaluation was performed on the lamination suitability when the film substrate to which the pretreatment liquid had been applied was aged.

(Evaluation 3C: evaluation of lamination suitability (after aging of pretreatment liquid))

Using a treatment liquid after aging produced using the same method as in evaluation 1C above, a film substrate to which the pretreatment liquid had been applied was produced and used for production of printed matter. Other than this, using the same method and evaluation criteria as in evaluation 3A above, evaluation was performed on the lamination suitability when the pretreatment liquid was aged.

[Table 5-1]

| Table 5 | | | | | | | | | | | | | |
|---|---|---|---|---|---|---|---|---|---|---|---|---|---|
| Example/ comparative example No. | Combination of pretreatment liquid and inkjet ink | | Spec | | Evaluation results | | | | | | | | |
| | | | | | Evaluation A | Evaluation1B | Evaluation1 C | Evaluation2A | Evaluation2B | Evaluation2C | Evaluation3A | Evaluation3B | Evaluation3C |
| | Pretreatment liquid | Inkjet ink | R/CA | SPT-SPB2 | Image quality (initial) | Image quality (after aging of substrate) | Image quality (after aging of pretreatment liquid) | Adhesion (initial) | Adhesion (after aging of substrate) | Adhesion (after aging of pretreatment liquid) | Lamination suitability (initial) | Lamination suitability (after aging of substrate) | **Lamination** suitability (after aging of pretreatment liquid) |
| Example 1 | 1 | 1K | 0.26 | 0.2 | ◎ | ◎ | ◎ | ◎ | ◎ | ◎ | ◎ | ◎ | ◎ |
| Example2 | 2 | 1K | 0.26 | 0.2 | ◎ | ◎ | ◎ | ○ | ○ | ○ | ◎ | ○ | ○ |
| Example3 | 3 | 1K | 0.26 | 0.2 | ◎ | ◎ | ◎ | ◎ | ◎ | ◎ | ◎ | ◎ | ◎ |
| Example4 | 4 | 1K | 0.26 | 0.2 | ◎ | ◎ | ◎ | ◎ | ○ | ○ | ◎ | ○ | ◎ |
| Example5 | 5 | 1K | 0.26 | 0.2 | ○ | △ | △ | ◎ | △ | ○ | ○ | △ | ○ |
| Example6 | 6 | 1K | 0.26 | 0.2 | ◎ | ◎ | ◎ | ◎ | ◎ | ◎ | ◎ | ◎ | ◎ |
| Example7 | 7 | 1K | 0.26 | 0.2 | ◎ | ◎ | ◎ | ◎ | ◎ | ◎ | ◎ | ◎ | ◎ |
| Example8 | 8 | 1K | 0.26 | 0.2 | ◎ | ◎ | ◎ | ○ | O | ○ | ○ | ○ | ○ |
| Example9 | 9 | 1K | 0.26 | 0.2 | ◎ | ◎ | ◎ | ◎ | ◎ | ◎ | ◎ | ◎ | ◎ |
| Example 10 | 10 | 1K | 0.26 | 0.2 | ◎ | ◎ | ◎ | ○ | O | ○ | ◎ | ◎ | ◎ |
| Example 11 | 11 | 1K | 0.26 | 0.2 | △ | △ | △ | O | O | ○ | △ | △ | △ |
| Example 12 | 12 | 1K | 0.48 | 0.1 | ○ | △ | O | ◎ | ◎ | ◎ | ◎ | ◎ | ◎ |
| Example 13 | 13 | 1K | 0.30 | -0.5 | ◎ | ◎ | ◎ | ◎ | ◎ | ◎ | ◎ | ◎ | ◎ |
| Example 14 | 14 | 1K | 0.34 | -0.8 | ○ | ○ | ○ | ◎ | ◎ | ◎ | ◎ | ○ | ◎ |
| Example 15 | 15 | 1K | 0.27 | 0.8 | ◎ | ○ | ◎ | ◎ | A | ◎ | ◎ | △ | ◎ |
| Example 16 | 16 | 1K | 0.49 | 0.3 | △ | △ | △ | ◎ | ◎ | ◎ | ◎ | ◎ | ◎ |
| Example17 | 17 | 1K | 0.40 | 0.2 | ◎ | ◎ | ◎ | ◎ | ◎ | ◎ | ◎ | ◎ | ◎ |
| Example 18 | 18 | 1K | 0.20 | 0.2 | ◎ | ◎ | ◎ | ○ | ○ | ○ | ◎ | ◎ | ◎ |

(continued)

**Table 5**

| Example/ comparative example No. | Combination of pretreatment liquid and inkjet ink | | Spec | | Evaluation results | | | | | | | | |
|---|---|---|---|---|---|---|---|---|---|---|---|---|---|
| | | | | | Evaluation A | Evaluation1B | Evaluation1 C | Evaluation2A | Evaluation2B | Evaluation2C | Evaluation3A | Evaluation3B | Evaluation3C |
| | Pretreatment liquid | Inkjet ink | R/CA | SPT-SPB2 | Image quality (initial) | Image quality (after aging of substrate) | Image quality (after aging of pretreatment liquid) | Adhesion (initial) | Adhesion (after aging of substrate) | Adhesion (after aging of pretreatment liquid) | Lamination suitability (initial) | Lamination suitability (after aging of substrate) | **Lamination** suitability (after aging of pretreatment liquid) |
| Example 19 | 19 | 1K | 0.15 | 0.2 | ○ | ○ | ○ | ○ | ○ | ○ | ◎ | ◎ | ○ |
| Example20 | 20 | 1K | 0.11 | 0.2 | △ | △ | △ | A | A | △ | O | ○ | ○ |
| Example21 | 21 | 1K | 0.30 | -0.2 | ◎ | ◎ | ◎ | ◎ | ◎ | ◎ | ◎ | ◎ | ◎ |
| Example22 | 22 | 1K | 0.28 | 0.8 | ◎ | ◎ | ◎ | ◎ | ◎ | ◎ | ◎ | ○ | ○ |
| Example23 | 23 | 1K | 0.26 | 0.2 | ◎ | ◎ | ◎ | ◎ | ◎ | ◎ | ◎ | ◎ | ◎ |
| Example24 | 24 | 1K | 0.26 | 0.2 | ◎ | ◎ | O | ◎ | ◎ | ◎ | ◎ | ◎ | ○ |
| Example25 | 25 | 1K | 0.26 | 0.2 | ○ | ○ | ○ | ◎ | ◎ | ◎ | ○ | ○ | ○ |
| Example26 | 26 | 1K | 0.26 | 0.2 | ◎ | ◎ | ◎ | ◎ | ◎ | ◎ | ◎ | ◎ | ◎ |
| Example27 | 27 | 1K | 0.26 | 0.2 | △ | △ | △ | ◎ | ◎ | ◎ | ○ | ○ | ○ |
| Example28 | 28 | 1K | 0.26 | 0.2 | ○ | ○ | ○ | ○ | ◎ | ○ | ◎ | ◎ | ◎ |
| Example29 | 29 | 1K | 0.26 | 0.2 | ○ | ○ | ○ | ○ | ○ | ○ | ○ | ○ | ○ |
| Example30 | 30 | 1K | 0.26 | 0.2 | ◎ | ◎ | ◎ | ◎ | ◎ | ◎ | ◎ | ◎ | ◎ |
| Example31 | 31 | 1K | 0.26 | 0.2 | ◎ | ◎ | ◎ | ◎ | ◎ | ◎ | ◎ | ◎ | ◎ |
| Example32 | 32 | 1K | 0.26 | 0.2 | ◎ | ◎ | ◎ | ◎ | ◎ | ◎ | ◎ | ◎ | ◎ |
| Example33 | 33 | 1K | 0.26 | 0.2 | ○ | ◎ | ○ | ○ | ◎ | ○ | ○ | ○ | ○ |

[Table 5-2]

**Table 5 (continued 1)**

| Example/ comparative example No. | Combination of pretreatment liquid and inkjet ink | | Spec | | Evaluation results | | | | | | | | |
|---|---|---|---|---|---|---|---|---|---|---|---|---|---|
| | Pretreatment liquid | Inkjet ink | R/CA | SPT-SPB2 | Evaluation1A Image quality (initial) | Evaluation1B Image quality (after aging of substrate) | Evaluation 1C Image quality (after aging of pretreatment liquid) | Evaluation2A Adhesion (initial) | Evaluation2B Adhesion (after aging of substrate) | Evaluation2C Adhesion (after aging of pretreatment liquid) | Evaluation3A Lamination suitability (initial) | Evaluation3B Lamination suitability (after aging of substrate) | Evaluation3C Lamination suitability (after aging of pretreatment liquid) |
| Example34 | 34 | 1K | 0.26 | 0.2 | ◎ | ◎ | ◎ | ◎ | ◎ | ◎ | ◎ | ◎ | ◎ |
| Example35 | 35 | 1K | 0.26 | 0.2 | ◎ | ◎ | ◎ | ◎ | ◎ | ◎ | ◎ | ◎ | ◎ |
| Example36 | 36 | 1K | 0.26 | 0.2 | ◎ | ◎ | ◎ | ○ | ○ | ○ | ○ | ○ | ○ |
| Example37 | 37 | 1K | 0.26 | 0.2 | ◎ | ◎ | ◎ | ◎ | ◎ | ◎ | ◎ | ◎ | ◎ |
| Example38 | 38 | 1K | 0.26 | 0.2 | ◎ | ◎ | ◎ | ◎ | ◎ | ◎ | ◎ | ◎ | ◎ |
| Example39 | 39 | 1K | 0.26 | 0.2 | ◎ | ◎ | ○ | ◎ | ◎ | ○ | ◎ | ◎ | ○ |
| Com. Ex.1 | 40 | 1K | --- | 0.2 | × | × | × | ◎ | ◎ | ◎ | ◎ | ◎ | ◎ |
| Com. Ex.2 | 41 | 1K | 0.22 | -0.8 | × | × | × | ○ | ○ | △ | △ | △ | △ |
| Com. Ex.3 | 42 | 1K | 0.13 | -1.6 | ○ | ○ | × | △ | △ | × | × | × | × |
| Com. Ex.4 | 43 | 1K | --- | 0.2 | ◎ | ◎ | ◎ | × | × | × | × | × | × |
| Com. Ex.5 | 44 | 1K | 0.106 | 0.2 | △ | × | △ | ○ | △ | × | △ | △ | △ |
| Com. Ex.6 | 45 | 1K | 0.54 | 0.2 | × | × | × | ◎ | ◎ | ◎ | ○ | ○ | ○ |
| Com. Ex.7 | 46 | 1K | 0.09 | --- | ○ | ○ | ○ | △ | × | △ | × | × | × |
| Com. Ex.8 | 47 | 1K | 0.16 | -2.0 | × | × | × | △ | △ | × | △ | △ | △ |
| Com. Ex.9 | 48 | 46K | 0.10 | 0.1 | ◎ | ◎ | ○ | ◎ | O | × | △ | △ | × |
| Com. Ex.10 | 49 | 46K | 0.07 | -0.7 | ◎ | ◎ | ◎ | ◎ | △ | × | × | × | × |
| Example40 | 1 | 1C | 0.26 | 0.2 | ◎ | ◎ | ◎ | ◎ | ◎ | ◎ | ◎ | ◎ | ◎ |
| Example41 | 1 | 1M | 0.26 | 0.2 | ◎ | ◎ | ◎ | ◎ | ◎ | ◎ | ◎ | ◎ | ◎ |
| Example42 | 1 | 1Y | 0.26 | 0.2 | ◎ | ◎ | ◎ | ◎ | ◎ | ◎ | ◎ | ◎ | ◎ |
| Example43 | 1 | 1W | 0.26 | 0.2 | ◎ | ◎ | ◎ | ◎ | ○ | ◎ | ◎ | ○ | ◎ |

(continued)

**Table 5 (continued 1)**

| Example/ comparative example No. | Combination of pretreatment liquid and inkjet ink | | Spec | | Evaluation results | | | | | | | | |
|---|---|---|---|---|---|---|---|---|---|---|---|---|---|
| | | | | | Evaluation1A | Evaluation1B | Evaluation 1C | Evaluation2A | Evaluation2B | Evaluation2C | Evaluation3A | Evaluation3B | Evaluation3C |
| | Pretreatment liquid | Inkjet ink | R/CA | SPT-SPB2 | Image quality (initial) | Image quality (after aging of substrate) | Image quality (after aging of pretreatment liquid) | Adhesion (initial) | Adhesion (after aging of substrate) | Adhesion (after aging of pretreatment liquid) | Lamination suitability (initial) | Lamination suitability (after aging of substrate) | Lamination suitability (after aging of pretreatment liquid) |
| Example44 | | 2K | 0.26 | 0.8 | ○ | ○ | ○ | ◎ | ◎ | ◎ | ◎ | ◎ | ◎ |
| Example45 | 1 | 3K | 0.26 | 0.8 | △ | ○ | △ | ◎ | ◎ | ◎ | ◎ | ◎ | ○ |
| Example46 | 1 | 4K | 0.26 | 1.0 | ○ | ○ | ○ | ◎ | ◎ | ◎ | ◎ | ◎ | ◎ |
| Example47 | 1 | 5K | 0.26 | 0.4 | △ | △ | △ | ◎ | ◎ | ◎ | △ | △ | △ |
| Example48 | 1 | 6K | 0.26 | 1.0 | O | O | O | ◎ | ◎ | ◎ | ◎ | ◎ | ◎ |
| Example49 | 1 | 7K | 0.26 | 0.3 | ◎ | ◎ | ◎ | ◎ | ◎ | ◎ | ◎ | ◎ | ◎ |
| Example50 | 1 | 8K | 0.26 | 0.4 | ◎ | ◎ | ◎ | ◎ | ◎ | ◎ | ◎ | ◎ | ◎ |
| Example51 | 1 | 9K | 0.26 | 0.4 | ◎ | ◎ | ◎ | ◎ | ◎ | ◎ | ◎ | ◎ | ◎ |
| Example52 | 1 | 10K | 0.26 | 0.3 | ○ | ◎ | ○ | ◎ | ◎ | ◎ | ◎ | ◎ | ○ |
| Example53 | 1 | 11K | 0.26 | 1.0 | ○ | ○ | ○ | ○ | ○ | ○ | ◎ | ◎ | ○ |
| Example54 | 1 | 12K | 0.26 | 0.7 | △ | △ | △ | ○ | ○ | ○ | ○ | ○ | ○ |
| Example55 | 1 | 13K | 0.26 | 0.9 | △ | △ | △ | ◎ | ◎ | ○ | ◎ | ◎ | ◎ |
| Example56 | 1 | 14K | 0.26 | 0.4 | ◎ | ◎ | ◎ | ◎ | ◎ | ◎ | ◎ | ◎ | ◎ |
| Example57 | 1 | 15K | 0.26 | 0.2 | ◎ | ◎ | ◎ | ◎ | ◎ | ○ | ◎ | ◎ | ◎ |
| Example58 | 1 | 16K | 0.26 | 0.1 | ◎ | ○ | ○ | ○ | ○ | ○ | ◎ | ◎ | ◎ |

[Table 5-3]

**Table 5 (continued 2)**

| Example/ comparative example No. | Combination of pretreatment liquid and inkjet ink | | Spec | | Evaluation results | | | | | | | | |
|---|---|---|---|---|---|---|---|---|---|---|---|---|---|
| | | | | | Evaluation1A | Evaluation1 B | Evaluation1 C | Evaluation2A | Evaluation2B | Evaluation2C | Evaluation3A | Evaluation3B | Evaluation3C |
| | Pretreatment liquid | Inkjet ink | R/CA | SPT-SPB2 | Image quality (initial) | Image quality (after aging of substrate) | Image quality (after aging of pretreatment liquid) | Adhesion (initial) | Adhesion (after aging of substrate) | Adhesion (after aging of pretreatment liquid) | Lamination suitability (initial) | Lamination suitability (after aging of substrate) | Lamination suitability (after aging of pretreatment liquid) |
| Example59 | 1 | 17K | 0.26 | 0.3 | ◎ | ◎ | ◎ | ◎ | ◎ | ◎ | ◎ | ◎ | ◎ |
| Example60 | 1 | 18K | 0.26 | 0.2 | ◎ | ◎ | ◎ | ◎ | ◎ | ◎ | ◎ | ◎ | ◎ |
| Example61 | 1 | 19K | 0.26 | 0.2 | ◎ | ◎ | ◎ | ◎ | ◎ | ◎ | ◎ | ◎ | ◎ |
| Example62 | 1 | 20K | 0.26 | 0.2 | ◎ | ◎ | ◎ | ◎ | ◎ | ◎ | ◎ | ◎ | ◎ |
| Example63 | 1 | 21K | 0.26 | 0.2 | ○ | ○ | ○ | ◎ | ◎ | ◎ | ◎ | ◎ | ◎ |
| Example64 | 1 | 22K | 0.26 | 0.2 | ◎ | ◎ | ◎ | ◎ | ◎ | ◎ | ○ | ○ | ○ |
| Example65 | 1 | 23K | 0.26 | 0.2 | ◎ | ◎ | ◎ | ◎ | ◎ | ◎ | ◎ | ◎ | ◎ |
| Example66 | 1 | 24K | 0.26 | 0.2 | ◎ | ◎ | ◎ | ◎ | ◎ | ◎ | ◎ | ◎ | ◎ |
| Example67 | 1 | 25K | 0.26 | 0.2 | ◎ | ◎ | ◎ | ◎ | ◎ | ◎ | ◎ | ◎ | ◎ |
| Example68 | 1 | 26K | 0.26 | 0.8 | ○ | ○ | ○ | ◎ | ◎ | ◎ | ◎ | ◎ | ◎ |
| Example69 | 1 | 27K | 0.26 | 0.8 | ○ | ○ | ○ | ◎ | ◎ | ◎ | ◎ | ◎ | ◎ |
| Example70 | 1 | 28K | 0.26 | 0.8 | ○ | ○ | ○ | ◎ | ◎ | ◎ | ◎ | ◎ | ◎ |
| Example71 | 1 | 29K | 0.26 | 0.8 | ○ | ○ | ○ | ◎ | ◎ | ◎ | ◎ | ◎ | ◎ |
| Example72 | 1 | 30K | 0.26 | 0.8 | ○ | ○ | ○ | ◎ | ◎ | ◎ | ◎ | ◎ | ◎ |
| Example73 | 1 | 31K | 0.26 | 0.8 | ○ | ○ | ○ | ◎ | ◎ | ◎ | ◎ | ◎ | ◎ |
| Example74 | 1 | 32K | 0.26 | 0.8 | ○ | ○ | ○ | ◎ | ◎ | ◎ | ◎ | ◎ | ◎ |
| Example75 | 1 | 33K | 0.26 | 0.8 | ○ | ○ | ○ | ◎ | ○ | ◎ | ◎ | ○ | ◎ |
| Example76 | 1 | 34K | 0.26 | 0.8 | △ | △ | △ | △ | △ | △ | △ | △ | △ |
| Example77 | 1 | 35K | 0.26 | 0.8 | △ | △ | △ | △ | ○ | △ | ○ | ◎ | ○ |
| Example78 | 1 | 36K | 0.26 | 0.8 | ○ | ○ | ○ | ◎ | ◎ | ◎ | ◎ | ◎ | ◎ |

(continued)

**Table 5 (continued 2)**

| Example/ comparative example No. | Combination of pretreatment liquid and inkjet ink | | Spec | | Evaluation results | | | | | | | | |
|---|---|---|---|---|---|---|---|---|---|---|---|---|---|
| | Pretreatment liquid | Inkjet ink | R/CA | SPT-SPB2 | Evaluation1A | Evaluation1 B | Evaluation1 C | Evaluation2A | Evaluation2B | Evaluation2C | Evaluation3A | Evaluation3B | Evaluation3C |
| | | | | | Image quality (initial) | Image quality (after aging of substrate) | Image quality (after aging of pretreatment liquid) | Adhesion (initial) | Adhesion (after aging of substrate) | Adhesion (after aging of pretreatment liquid) | Lamination suitability (initial) | Lamination suitability (after aging of substrate) | Lamination suitability (after aging of pretreatment liquid) |
| Example79 | 1 | 37K | 0.26 | 0.8 | ○ | ○ | ○ | ◎ | ◎ | ◎ | ◎ | ◎ | ◎ |
| Example80 | 1 | 38K | 0.26 | 0.8 | ○ | ○ | ○ | ◎ | ◎ | ◎ | ◎ | ◎ | ◎ |
| Example81 | 1 | 39K | 0.26 | 0.7 | ◎ | ◎ | ◎ | ○ | ○ | ○ | ○ | ○ | ○ |
| Example82 | 1 | 40K | 0.26 | 0.8 | ○ | ○ | ○ | ◎ | ◎ | ◎ | ○ | ○ | ○ |
| Example83 | 1 | 41K | 0.26 | 0.8 | ○ | ○ | ○ | ◎ | ◎ | ◎ | ◎ | ◎ | ◎ |
| Example84 | 1 | 42K | 0.26 | 0.8 | ○ | ○ | ○ | ◎ | ◎ | ◎ | ◎ | ◎ | ◎ |
| Example85 | 36 | 34K | 0.26 | 0.8 | ○ | ○ | ○ | ○ | ○ | ○ | ○ | ○ | ○ |
| Example86 | 36 | 32K | 0.26 | 0.8 | ○ | ○ | ○ | ○ | ○ | ○ | ○ | ○ | ○ |
| Com. Ex.11 | 1 | 43K | 0.26 | -0.1 | △ | × | × | △ | △ | △ | ○ | ○ | ○ |
| Com. Ex.12 | 1 | 44K | 0.26 | 2.1 | × | × | × | ◎ | ○ | ○ | ◎ | ◎ | ◎ |
| Com. Ex.13 | 1 | 45K | 0.26 | 1.1 | △ | × | × | ◎ | ○ | ○ | ◎ | ◎ | ◎ |

As is clear from Table 5, in examples 1 to 86 satisfying the conditions of the invention of the present application, it was possible to obtain printed matter having excellent image quality, adhesion, and lamination suitability regardless of the storage conditions of the pretreatment liquid and the film substrate to which the pretreatment liquid had been applied.

In contrast, the pretreatment liquid 40 used in comparative example 1 did not contain a calcium ion, resulting in printed matter greatly inferior in image quality. Further, it was confirmed that even when a calcium ion was contained, when hydroxycarboxylic acid ions were not contained, the image quality of printed matter deteriorated as in the case of the pretreatment liquid 41 used in comparative example 2, or lamination suitability, and quality when the aged pretreatment liquid was used deteriorated as in the case of the pretreatment liquid 42 used in comparative example 3. As described above, by containing a certain amount of a hydroxycarboxylic acid in the pretreatment liquid, it is thought to be possible to realize: the improvement of image quality due to the improvement of affinity with the aqueous inkjet ink to be printed later; and the improvement of lamination suitability due to the crosslinking formation of solid components in the aqueous inkjet ink via hydroxyl groups.

In contrast, the pretreatment liquid 43 used in comparative example 4 is a system that does not contain resin particles (A1), and the adhesion and lamination suitability did not reach the actual usable level. Further, even when resin particles (A1) are contained, when the ratio (R/CA) between the amount contained of the resin particles (A1) and the millimolar amount of the calcium ion contained in the pretreatment liquid is not within a range from 0.11 to 0.50, deterioration in image quality and adhesion occurred depending on the conditions of use (comparative examples 5 and 6). It is though that the excessive presence of the calcium ion in the case of comparative example 5 (pretreatment liquid 44) and resin particles (A1) in the case of comparative example 6 (pretreatment liquid 45) on the pretreatment liquid layer after drying led to the deterioration of the above properties.

Note that as described above, the pretreatment liquids 46 to 49 used in comparative examples 7 to 10 are reproductions of pretreatment liquids described in examples of Patent Documents 2, 3, and 5 above. As is clear from Table 5, in comparative examples 7 to 10, one or more of the above evaluations are at the level of "x", and it was confirmed that these pretreatment liquids have not achieved the effects of the present invention.

Meanwhile, the aqueous inkjet inks 43K and 44K used in comparative examples 11 to 12 contain only one type of water-soluble organic solvent (B2), and the image quality deteriorated in both cases. Further, comparative example 13 is a system where the difference (SPT - SPB2) between the mixed SP value (SPT) of a carboxylic acid including multiple carboxylic acid ions and a hydrogen ion in the pretreatment liquid 1 and the mixed SP value (SPB2) of multiple water-soluble organic solvents (B2) in the aqueous inkjet ink 45K is 1.06, and the deterioration of image quality was also confirmed. It is thought that the large difference in the SP values delayed the release of the calcium ion from the pretreatment liquid layer, which led to the deterioration of image quality such as dot shape disturbance.

<Production of printed matter II>

An inkjet ejector was prepared in which two inkjet heads KJ4B-1200 (design resolution 1,200 dpi, nozzle diameter 20 μm) manufactured by KYOCERA Corporation were installed side by side along the transport direction of printing substrates, and two types of aqueous inkjet inks were filled in the order shown in Table 6, starting from the inkjet head on the upstream side in the transfer direction. Further, the above film substrate on which the pretreatment liquid is applied is fixed on the conveyor. Then, the conveyor was driven at a constant speed, and when the film substrate passed under the installation part of inkjet heads, an aqueous inkjet ink was jetted only from the upstream inkjet head at a drop volume of 2 pL, and an image was printed.

Then, the undried image printed matter was quickly fixed on the conveyor again, and the conveyor was driven at a constant speed. When the printed matter passes under the installation part of the inkjet heads, an aqueous inkjet ink is jetted only from the downstream inkjet head at a drop volume of 2 pL, and a solid image (15 cm wide × 30 cm long) with a coverage rate of 100% is printed. Note that in this printing, the solid image was printed so as to completely overlap the first printed image. Immediately after printing, the printed matter was put into an air oven at 70 °C and dried for 3 minutes to produce printed matter.

Note that as the image printed with the aqueous inkjet ink filled in the inkjet head on the upstream side, two types of printing images were prepared: a solid image with a coverage rate of 100% (5 cm wide × 30 cm long, hereinafter referred to as "layered solid images"); and an image with a coverage rate continuously changed between 5% and 80% (hereinafter also referred to as a "layered monochrome gradient image"), and each type of printed matter was produced.

[Examples 87 to 145]

The combinations of pretreatment liquids and aqueous inkjet inks shown in Table 6 were evaluated as follows. Note that evaluation results are shown in Table 6.

<Evaluation 4: evaluation of image quality of layered printed matter>

(Evaluation 4A: evaluation of image quality of layered printed matter (initial))

Based on the above "production of printed matter II", layered solid images and layered gradient images were printed at three types film substrate-transfer speeds (printing speeds) of 25 m/min, 50 m/min, and 75 m/min for each combination of pretreatment liquids and aqueous inkjet inks shown in Table 6 below. Using printed matter with layered solid images and layered gradient images thus obtained, image observation was performed from the non-printing surface side of the printed matter. Otherwise, the image quality of the layered printed matter was evaluated using the same method and evaluation criteria as in evaluation 1A above.

(Evaluation 4B: evaluation of image quality of layered printed matter (after aging of substrate))

After the production of a film substrate to which the pretreatment liquid had been applied, the film substrate was left standing in an air oven at 50 °C for 1 week and then used for production of printed matter. Other than this, using the same method and evaluation criteria as in evaluation 4A above, evaluation was performed on the image quality of the layered printed matter when the film substrate to which the pretreatment liquid had been applied was aged.

(Evaluation 4C: evaluation of image quality of layered printed matter (after aging of pretreatment liquid))

Using a treatment liquid after aging produced using the same method as in evaluation 1C above, a film substrate to which the pretreatment liquid had been applied was produced and used for production of printed matter. Other than this, using the same method and evaluation criteria as in evaluation 4A above, evaluation was performed on the image quality of the layered printed matter when the pretreatment liquid was aged.

<Evaluation 5: evaluation of adhesion of layered printed matter>

(Evaluation 5A: evaluation of adhesion of layered printed matter (initial))

Based on the above "production of printed matter II", for each combination of a pretreatment liquid and aqueous inkjet inks shown in Table 6 below, layered solid images were printed at a film substrate-transfer speed (printing speed) of 50 m/min. Evaluation was performed using printed matter with these layered solid images and using a part including the aqueous inkjet ink layer printed later. Other than this, using the same method and evaluation criteria as in evaluation 2A above, evaluation was performed on the adhesion of layered printed matter.

(Evaluation 5B: evaluation of adhesion of layered printed matter (after aging of substrate))

After the production of the film substrate to which the pretreatment liquid had been applied, the film substrate was left standing in an air oven at 50 °C for 1 week and then used for production of printed matter. Other than this, using the same method and evaluation criteria as in evaluation 5A above, evaluation was performed on the adhesion of the layered printed matter when the film substrate to which the pretreatment liquid had been applied was aged.

(Evaluation 5C: evaluation of adhesion of layered printed matter (after aging of pretreatment liquid))

Except for producing a pretreatment liquid applied-film substrate using a treatment liquid after aging produced with the same method as in evaluation 1C above and using the substrate for production of printed matter, evaluation was performed using the same method and evaluation criteria as in the above evaluation 5A on the adhesion of layered printed matter when the pretreatment liquid was aged.

<Evaluation 6: evaluation of lamination suitability of layered printed matter>

(Evaluation 6A: evaluation of lamination suitability of layered printed matter (initial))

Based on the above "production of printed matter II", for each combination of a pretreatment liquid and aqueous inkjet inks shown in Table 6 below, layered solid images were printed at a film substrate-transfer speed (printing speed) of 50 m/min. Evaluation was performed using printed matter with these layered solid images and using a part including the aqueous inkjet ink layer printed later. Other than this, using the same method and evaluation criteria as evaluation 3A above, evaluation was performed on the lamination suitability of layered printed matter.

(Evaluation 6B: evaluation of lamination suitability (after aging of substrate))

After the production of a film substrate to which the pretreatment liquid had been applied, the film substrate was left standing in an air oven at 50 °C for 1 week and then used for production of printed matter. Other than this, using the same method and evaluation criteria as in evaluation 6A above, evaluation was performed on the lamination suitability when the film substrate to which the pretreatment liquid had been applied was aged.

(Evaluation 6C: evaluation of lamination suitability (after aging of pretreatment liquid))

Except for producing a pretreatment liquid applied-film substrate using a treatment liquid after aging produced with the same method as in evaluation 1C above and using the substrate for printing, evaluation was performed using the same method and evaluation criteria as in evaluation 6A above on the lamination suitability when the pretreatment liquid was aged.

[Table 6-1]

Table 6

| Example/ comparative example No. | Combination of pretreatment liquid and inkjet inks | | | Spec | | | | | | Evaluation results | | | | | | | | |
|---|---|---|---|---|---|---|---|---|---|---|---|---|---|---|---|---|---|---|
| | | | | | | | | | | Evaluation4A | Evaluation4B | Evaluation4C | Evaluation5A | Evaluation5B | Evaluation5C | Evaluation6A | Evaluation6B | Evaluation6C |
| | Pretreatment liquid | First inkjet ink (filled upstream/ printed first) | Second inkjet ink (filled downstream /printed later) | R/C-A | SPT-SP-B2 | SPT-SP-B3 | SP-B2-SPB3 | SP-C1-SPC3 | SP-C2-SPC3 | Image quality of layered printed matter (initial) | Image quality of layered printed matter (after aging of substrate) | Image quality of layered printed matter (after aging of pretreatment liquid) | Adhesion of layered printed matter (initial) | Adhesion of layered printed matter (after aging of substrate) | Adhesion of layered printed matter (after aging of pretreatment liquid) | Lamination suitability of layered printed matter (initial) | Lamination suitability of layered printed matter (after aging of substrate) | Lamination suitability of layered printed matter (after aging of pretreatment liquid) |
| Example87 | 1 | 1K | 26W | 0.26 | 0.2 | 0.8 | 0.6 | 1.3 | 0.4 | ◎ | ◎ | ◎ | ◎ | ◎ | ◎ | ◎ | ◎ | ◎ |
| Example88 | 2 | 1K | 26W | 0.26 | 0.2 | 0.8 | 0.6 | 1.3 | 0.4 | ◎ | ◎ | ◎ | △ | △ | △ | ○ | ○ | ○ |
| Example89 | 3 | 1K | 26W | 0.26 | 0.2 | 0.8 | 0.6 | 1.3 | 0.4 | ◎ | ◎ | ◎ | ◎ | ◎ | ◎ | ◎ | ◎ | ◎ |
| Example90 | 4 | 1K | 26W | 0.26 | 0.2 | 0.8 | 0.6 | 1.3 | 0.4 | ◎ | ◎ | ◎ | ◎ | ○ | ○ | ◎ | ○ | ◎ |
| Example91 | 5 | 1K | 26W | 0.26 | 0.2 | 0.8 | 0.6 | 1.3 | 0.4 | ○ | △ | △ | ◎ | △ | ○ | ◎ | △ | ○ |
| Example92 | 6 | 1K | 26W | 0.26 | 0.2 | 0.8 | 0.6 | 1.3 | 0.4 | ◎ | ◎ | ◎ | ◎ | ◎ | ◎ | ◎ | ◎ | ◎ |
| Example93 | 7 | 1K | 26W | 0.26 | 0.2 | 0.8 | 0.6 | 1.3 | 0.4 | ◎ | ◎ | ◎ | ◎ | ◎ | ◎ | ◎ | ◎ | ◎ |
| Example94 | 8 | 1K | 26W | 0.26 | 0.2 | 0.8 | 0.6 | 1.3 | 0.4 | ◎ | ◎ | ◎ | ○ | ○ | ○ | ○ | ○ | ○ |
| Example95 | 9 | 1K | 26W | 0.26 | 0.2 | 0.8 | 0.6 | 1.3 | 0.4 | ◎ | ◎ | ◎ | ◎ | ◎ | ◎ | ◎ | ◎ | ◎ |

(continued)

**Table 6**

| Example/ comparative example No. | Combination of pretreatment liquid and inkjet inks | | | Spec | | | | | | Evaluation results | | | | | | | | |
|---|---|---|---|---|---|---|---|---|---|---|---|---|---|---|---|---|---|---|
| | | | | | | | | | | Evaluation4A | Evaluation4B | Evaluation4C | Evaluation5A | Evaluation5B | Evaluation5C | Evaluation6A | Evaluation6B | Evaluation6C |
| | Pretreatment liquid | First inkjet ink (filled upstream/ printed first) | Second inkjet ink (filled downstream /printed later) | R/C-A | SPT-SP-B2 | SPT-SP-B3 | SP-B2-SPB3 | SP-C1-SPC3 | SP-C2-SPC3 | Image quality of layered printed matter (initial) | Image quality of layered printed matter (after aging of substrate) | Image quality of layered printed matter (after aging of pretreatment liquid) | Adhesion of layered printed matter (initial) | Adhesion of layered printed matter (after aging of substrate) | Adhesion of layered printed matter (after aging of pretreatment liquid) | Lamination suitability of layered printed matter (initial) | Lamination suitability of layered printed matter (after aging of substrate) | Lamination suitability of layered printed matter (after aging of pretreatment liquid) |
| Example96 | 10 | 1K | 26W | 0.26 | 0.2 | 0.8 | 0.6 | 1.3 | 0.4 | ◎ | ◎ | ◎ | ○ | ○ | ○ | ◎ | ◎ | ◎ |
| Example97 | 11 | 1K | 26W | 0.26 | 0.2 | 0.8 | 0.6 | 1.3 | 0.4 | △ | △ | △ | △ | △ | △ | △ | △ | △ |
| Example98 | 12 | 1K | 26W | 0.48 | 0.1 | 0.8 | 0.6 | 1.3 | 0.4 | △ | △ | △ | ◎ | ◎ | ◎ | ◎ | ◎ | ◎ |
| Example99 | 13 | 1K | 26W | 0.30 | -0.5 | 0.1 | 0.6 | 1.3 | 0.4 | ○ | ○ | ○ | ◎ | ◎ | ◎ | ◎ | ◎ | ◎ |
| Example100 | 14 | 1K | 26W | 0.34 | -0.8 | -0.2 | 0.6 | 1.3 | 0.4 | △ | △ | △ | ◎ | ○ | ◎ | ◎ | ○ | ◎ |
| Example101 | 15 | 1K | 26W | 0.27 | 0.8 | 1.4 | 0.6 | 1.3 | 0.4 | ◎ | ◎ | ◎ | ◎ | ◎ | ◎ | ◎ | ◎ | ◎ |
| Example102 | 16 | 1K | 26W | 0.49 | 0.3 | 0.9 | 0.6 | 1.3 | 0.4 | △ | △ | △ | ◎ | ◎ | ◎ | ◎ | ◎ | ◎ |
| Example103 | 17 | 1K | 26W | 0.40 | 0.2 | 0.8 | 0.6 | 1.3 | 0.4 | ◎ | ◎ | ◎ | ◎ | ◎ | ◎ | ◎ | ◎ | ◎ |
| Example104 | 18 | 1K | 26W | 0.20 | 0.2 | 0.8 | 0.6 | 1.3 | 0.4 | ◎ | ◎ | ◎ | ○ | ○ | ○ | ○ | ○ | ○ |
| Example105 | 19 | 1K | 26W | 0.15 | 0.2 | 0.8 | 0.6 | 1.3 | 0.4 | ◎ | ◎ | ◎ | △ | △ | △ | △ | △ | △ |

(continued)

**Table 6**

| Example/ comparative example No. | Combination of pretreatment liquid and inkjet inks | | | Spec | | | | | | Evaluation results | | | | | | | | |
|---|---|---|---|---|---|---|---|---|---|---|---|---|---|---|---|---|---|---|
| | Pretreat ment liquid | First inkjet ink (filled upstream/ printed first) | Second inkjet ink (filled down-stream /printed later) | R/C-A | SPT-SP-B2 | SPT-SP-B3 | SP-B2-SPB3 | SP-C1-SPC3 | SP-C2-SPC3 | Evaluation4A | Evaluation4B | Evaluation4C | Evaluation5A | Evaluation5B | Evaluation5C | Evaluation6A | Evaluation6B | Evaluation6C |
| | | | | | | | | | | Image quality of layered printed matter (initial) | Image quality of layered printed matter (after aging of substrate) | Image quality of layered printed matter (after aging of pretreatment liquid) | Adhesion of layered printed matter (initial) | Adhesion of layered printed matter (after aging of substrate) | Adhesion of layered printed matter (after aging of pretreatment liquid) | Lamination suitability of layered printed matter (initial) | Lamination suitability of layered printed matter (after aging of substrate) | Lamination suitability of layered printed matter (after aging of pretreatment liquid) |
| Example106 | 20 | 1K | 26W | 0.11 | 0.2 | 0.8 | 0.6 | 1.3 | 0.4 | ○ | ○ | ○ | △ | △ | △ | △ | △ | △ |
| Example107 | 21 | 1K | 26W | 0.30 | -0.2 | 0.4 | 0.6 | 1.3 | 0.4 | ◎ | ◎ | ◎ | ◎ | ◎ | ◎ | ◎ | ◎ | ◎ |
| Example108 | 22 | 1K | 26W | 0.28 | 0.8 | 1.4 | 0.6 | 1.3 | 0.4 | ○ | ○ | ○ | ◎ | ◎ | ◎ | ◎ | ◎ | ◎ |
| Example109 | 23 | 1K | 26W | 0.26 | 0.2 | 0.8 | 0.6 | 1.3 | 0.4 | ◎ | ◎ | ◎ | ◎ | ◎ | ◎ | ◎ | ◎ | ◎ |
| Example110 | 24 | 1K | 26W | 0.26 | 0.2 | 0.8 | 0.6 | 1.3 | 0.4 | ◎ | ◎ | ○ | ◎ | ◎ | ◎ | ○ | ○ | ○ |
| Example111 | 25 | 1K | 26W | 0.26 | 0.2 | 0.8 | 0.6 | 1.3 | 0.4 | ○ | ○ | ○ | ◎ | ◎ | ◎ | ○ | ○ | △ |
| Example112 | 26 | 1K | 26W | 0.26 | 0.2 | 0.8 | 0.6 | 1.3 | 0.4 | ◎ | ◎ | ◎ | ◎ | ◎ | ◎ | ◎ | ◎ | ◎ |
| Example113 | 27 | 1K | 26W | 0.26 | 0.2 | 0.8 | 0.6 | 1.3 | 0.4 | △ | △ | △ | ◎ | ◎ | ◎ | △ | △ | △ |
| Example114 | 28 | 1K | 26W | 0.26 | 0.2 | 0.8 | 0.6 | 1.3 | 0.4 | △ | ○ | △ | ○ | ◎ | ○ | ○ | ◎ | ○ |
| Example115 | 29 | 1K | 26W | 0.26 | 0.2 | 0.8 | 0.6 | 1.3 | 0.4 | △ | △ | △ | △ | ○ | △ | ○ | ○ | ○ |

(continued)

**Table 6**

| Example/ comparative example No. | Combination of pretreatment liquid and inkjet inks | | | Spec | | | | | | Evaluation results | | | | | | | | |
|---|---|---|---|---|---|---|---|---|---|---|---|---|---|---|---|---|---|---|
| | | | | | | | | | | Evaluation4A | Evaluation4B | Evaluation4C | Evaluation5A | Evaluation5B | Evaluation5C | Evaluation6A | Evaluation6B | Evaluation6C |
| | Pretreatment liquid | First inkjet ink (filled upstream/ printed first) | Second inkjet ink (filled downstream /printed later) | R/C-A | SPT-SP-B2 | SPT-SP-B3 | SP-B2-SPB3 | SP-C1-SPC3 | SP-C2-SPC3 | Image quality of layered printed matter (initial) | Image quality of layered printed matter (after aging of substrate) | Image quality of layered printed matter (after aging of pretreatment liquid) | Adhesion of layered printed matter (initial) | Adhesion of layered printed matter (after aging of substrate) | Adhesion of layered printed matter (after aging of pretreatment liquid) | Lamination suitability of layered printed matter (initial) | Lamination suitability of layered printed matter (after aging of substrate) | Lamination suitability of layered printed matter (after aging of pretreatment liquid) |
| Example116 | 30 | 1K | 26W | 0.26 | 0.2 | 0.8 | 0.6 | 1.3 | 0.4 | ◎ | ◎ | ◎ | ◎ | ◎ | ◎ | ◎ | ◎ | ◎ |

[Table 6-2]

**Table 6 (continued 1)**

| Example/ comparative example No. | Combination of pretreatment liquid and inkjet inks | | | Spec | | | | | | Evaluation results | | | | | | | | |
|---|---|---|---|---|---|---|---|---|---|---|---|---|---|---|---|---|---|---|
| | Pretreatment liquid | First inkjet ink (filled upstream/ printed first) | Second inkjet ink (filled downstream /printed later) | R/C-A | SPT-SP-B2 | SPT-SP-B3 | SP-B2-SPB3 | SP-C1-SPC3 | SP-C2-SPC3 | Evaluation4A Image quality of layered printed matter (initial) | Evaluation4B Image quality of layered printed matter (after aging of substrate) | Evaluation4C Image quality of layered printed matter (after aging of pretreatment liquid) | Evaluation5A Adhesion of layered printed matter (initial) | Evaluation5B Adhesion of layered printed matter (after aging of substrate) | Evaluation5C Adhesion of layered printed matter (after aging of pretreatment liquid) | Evaluation6A Lamination suitability of layered printed matter (initial) | Evaluation6B Lamination suitability of layered printed matter (after aging of substrate) | Evaluation6C Lamination suitability of layered printed matter (after aging of pretreatment liquid) |
| Example117 | 31 | 1K | 26W | 0.26 | 0.2 | 0.8 | 0.6 | 1.3 | 0.4 | ◎ | ◎ | ◎ | ◎ | ◎ | ◎ | ◎ | ◎ | ◎ |
| Example118 | 32 | 1K | 26W | 0.26 | 0.2 | 0.8 | 0.6 | 1.3 | 0.4 | ◎ | ◎ | ◎ | ◎ | ◎ | ◎ | ◎ | ◎ | ◎ |
| Example119 | 33 | 1K | 26W | 0.26 | 0.2 | 0.8 | 0.6 | 1.3 | 0.4 | △ | ○ | △ | ○ | ◎ | ○ | ○ | ○ | ○ |
| Example120 | 34 | 1K | 26W | 0.26 | 0.2 | 0.8 | 0.6 | 1.7 | 0.4 | ◎ | ○ | ○ | ◎ | ◎ | ◎ | ◎ | ◎ | ◎ |
| Example121 | 35 | 1K | 26W | 0.26 | 0.2 : | 0.8 | 0.6 | 0.8 : | 0.4 | ◎ | ◎ | ◎ | ◎ | ◎ | ◎ | ◎ | ◎ | ◎ |
| Example122 | 36 | 1K | 26W | 0.26 | 0.2 : | 0.8 | 0.6 | -0.7 : | 0.4 | ◎ | ◎ | ◎ | ○ | ○ | ○ | | △ | △ |
| Example123 | 37 | 1K | 26W | 0.26 | 0.2 : | 0.8 | 0.6 | 0.2 : | 0.4 | ◎ | ◎ | ◎ | ◎ | ◎ | ◎ | ◎ | ◎ | ◎ |
| Example124 | 38 | 1K | 26W | 0.26 | 0.2 : | 0.8 | 0.6 | 0.5 : | 0.4 | ◎ | ◎ | ◎ | ◎ | ◎ | ◎ | ◎ | ◎ | ◎ |
| Example 125 | 1 | 1K | 2W | 0.26 | 0.2 | 0.8 | 0.6 | 0.9 : | 0.0 | △ | △ | △ | ○ | | ○ | ○ | ○ | ○ |
| Example 126 | 1 | 1K | 3W | 0.26 | 0.2 | 1.0 | 0.7 | 0.9 | 0.0 | △ | △ | △ | ○ | ○ | ○ | △ | △ | △ |

(continued)

**Table 6 (continued 1)**

| Example/ comparative example No. | Combination of pretreatment liquid and inkjet inks | | | Spec | | | | | | Evaluation results | | | | | | | | |
|---|---|---|---|---|---|---|---|---|---|---|---|---|---|---|---|---|---|---|
| | Pretreatment liquid | First inkjet ink (filled upstream/ printed first) | Second inkjet ink (filled downstream /printed later) | R/C-A | SPT-SP-B2 | SPT-SP-B3 | SP-B2-SPB3 | SP-C1-SPC3 | SP-C2-SPC3 | Evaluation4A<br>Image quality of layered printed matter (initial) | Evaluation4B<br>Image quality of layered printed matter (after aging of substrate) | Evaluation4C<br>Image quality of layered printed matter (after aging of pretreatment liquid) | Evaluation5A<br>Adhesion of layered printed matter (initial) | Evaluation5B<br>Adhesion of layered printed matter (after aging of substrate) | Evaluation5C<br>Adhesion of layered printed matter (after aging of pretreatment liquid) | Evaluation6A<br>Lamination suitability of layered printed matter (initial) | Evaluation6B<br>Lamination suitability of layered printed matter (after aging of substrate) | Evaluation6C<br>Lamination suitability of layered printed matter (after aging of pretreatment liquid) |
| Example 127 | 1 | 1K | 4W | 0.26 | 0.2 | 0.4 | 0.2 | 0.9 | 0.0 | △ | △ | △ | ○ | ○ | ○ | ○ | ○ | ○ |
| Example 128 | 1 | 1K | 27W | 0.26 | 0.2 | 0.8 | 0.6 | 1.0 | 0.1 | ◎ | ◎ | ◎ | ◎ | ◎ | ◎ | ◎ | ◎ | ◎ |
| Example 129 | 1 | 1K | 28W | 0.26 | 0.2 | 0.8 | 0.6 | 1.2 | 0.3 | ◎ | ◎ | ◎ | ◎ | ◎ | ◎ | ◎ | ◎ | ◎ |
| Example 130 | 1 | 1K | 29W | 0.26 | 0.2 | 0.8 | 0.6 | 0.7 | -0.1 | ◎ | ◎ | ◎ | ◎ | ◎ | ◎ | ◎ | ◎ | ◎ |
| Example131 | 1 | 1K | 30W | 0.26 | 0.2 | 0.8 | 0.6 | 0.9 | 0.0 | △ | △ | △ | ◎ | ◎ | ◎ | ◎ | ◎ | ◎ |
| Example 132 | 1 | 1K | 31W | 0.26 | 0.2 | 0.8 | 0.6 | 0.8 | -0.1 | △ | △ | △ | ○ | ○ | ○ | ○ | ○ | ○ |
| Example 133 | 1 | 1K | 32W | 0.26 | 0.2 | 0.8 | 0.6 | 0.7 | -0.2 | ◎ | ◎ | ◎ | ◎ | ◎ | ◎ | ◎ | ◎ | ◎ |
| Example 134 | 1 | 1K | 33W | 0.26 | 0.2 | 0.8 | 0.6 | -0.4 | -1.3 | ○ | ○ | ○ | ○ | ◎ | ○ | ○ | ○ | ○ |
| Example 135 | 1 | 1K | 34W | 0.26 | 0.2 | 0.8 | 0.6 | 2.0 | 1.1 | ○ | ○ | ○ | ○ | ○ | ○ | ○ | ○ | ○ |
| Example 136 | 1 | 1K | 35W | 0.26 | 0.2 | 0.8 | 0.6 | 1.7 | 0.8 | ○ | ○ | ○ | ○ | ◎ | ○ | ◎ | ◎ | ◎ |

(continued)

**Table 6 (continued 1)**

| Example/ comparative example No. | Combination of pretreatment liquid and inkjet inks | | | Spec | | | | | | Evaluation results | | | | | | | | |
|---|---|---|---|---|---|---|---|---|---|---|---|---|---|---|---|---|---|---|
| | Pretreat ment liquid | First inkjet ink (filled upstream/ printed first) | Second inkjet ink (filled down-stream /printed later) | R/C-A | SPT-SP-B2 | SPT-SP-B3 | SP-B2-SPB3 | SP-C1-SPC3 | SP-C2-SPC3 | Evaluation4A<br>Image quality of layered printed matter (initial) | Evaluation4B<br>Image quality of layered printed matter (after aging of substrate) | Evaluation4C<br>Image quality of layered printed matter (after aging of pretreatment liquid) | Evaluation5A<br>Adhesion of layered printed matter (initial) | Evaluation5B<br>Adhesion of layered printed matter (after aging of substrate) | Evaluation5C<br>Adhesion of layered printed matter (after aging of pretreatment liquid) | Evaluation6A<br>Lamination suitability of layered printed matter (initial) | Evaluation6B<br>Lamination suitability of layered printed matter (after aging of substrate) | Evaluation6C<br>Lamination suitability of layered printed matter (after aging of pretreatment liquid) |
| Example 137 | 1 | 1K | 36W | 0.26 | 0.2 : | 0.8 | 0.6 | 1.3 | 0.4 | ○ | ○ | ○ | ◎ | ◎ | ◎ | ◎ | ◎ | ◎ |
| Example 138 | 1 | 1K | 37W | 0.26 | 0.2 : | 0.8 | 0.6 | 1.3 | 0.4 | ◎ | ◎ | ◎ | ◎ | ◎ | ◎ | ◎ | ◎ | ◎ |
| Example 139 | 1 | 1K | 38W | 0.26 | 0.2 : | 0.8 | 0.6 | 1.3 | 0.4 | ◎ | ◎ | ◎ | ○ | ◎ | ○ | ◎ | ◎ | ◎ |
| Example 140 | 1 | 1K | 39W | 0.26 | 0.2 : | 0.7 | 0.5 | 1.3 | 0.4 | ◎ | ◎ | ◎ | ○ | ◎ | ○ | ○ | ◎ | ○ |
| Example 141 | 36 | 1K | 29W | 0.26 | 0.2 | 0.8 | 0.6 | -1.2 | -0.1 | ◎ | ◎ | ◎ | ○ | ○ | ○ | △ | △ | △ |
| Example 142 | 36 | 1K | 32W | 0.26 | 0.2 : | 0.8 | 0.6 | -1.3 : | -0.2 | ◎ | ◎ | ◎ | ○ | ○ | ○ | △ | △ | △ |
| Example 143 | 1 | 22K | 40W | 0.26 | 0.2 : | 0.8 | 0.6 | 1.3 | 0.4 | ◎ | ◎ | ◎ | ◎ | ○ | ◎ | ○ | ○ | ○ |
| Example 144 | 1 | 23K | 41W | 0.26 | 0.2 : | 0.8 | 0.6 | 1.3 | 0.4 | ◎ | ◎ | ◎ | ◎ | ◎ | ◎ | ◎ | ◎ | ◎ |
| Example 145 | 1 | 24K | 42W | 0.26 | 0.2 | 0.8 | 0.6 | 1.3 | 0.4 | ◎ | ◎ | ◎ | ◎ | ◎ | ◎ | ◎ | ◎ | ◎ |

As is clear from Table 6, in examples 87 to 143 satisfying the conditions of the invention of the present application, it was possible to obtain printed matter having excellent image quality, adhesion, and lamination suitability regardless of the storage conditions of the pretreatment liquid and the film substrate to which the pretreatment liquid had been applied.

Note that in examples 125, and 128 to 133, the pretreatment liquid and first aqueous inkjet ink used are all the same. Further, all of the second aqueous inkjet inks contain an acetylene diol-based surfactant and a siloxane-based surfactant, and the types and amounts of materials other than the surfactants are the same. Meanwhile, it was confirmed that all the evaluations of examples 128 to 130, and 133 have the level of ◎, particularly excellent quality. As shown in Table 6, in these examples, the difference between the mixed SP value (SPC2) of the surfactant (C2) contained in the first aqueous inkjet ink and the mixed SP value (SPC3) of the surfactant (C3) contained in the second aqueous inkjet ink is within a range from -1 to -0.1, or from 0.1 to 1, and it is thought that the affinity between the two aqueous inkjet inks has been improved, resulting in particularly improved image quality, adhesion, and lamination suitability.

<Production of printed matter III>

Using the same inkjet ejector used in production of printed matter I, four types of aqueous inkjet inks were filled in the order described in Table 7, starting from the inkjet head on the upstream side in the transfer direction. Further, the film substrate to which the above pretreatment liquid had been applied was fixed on the conveyor. Then, the conveyor was driven at a constant speed, and when the film substrate passed under the installation part of the inkjet heads, each aqueous inkjet ink was jetted at a drop volume of 2 pL, and a natural image N1 (portrait) of JIS X 9201 high-definition color digital standard image data (CMYK/SCID) was printed. Immediately after printing, the printed matter was put into an air oven at 70 °C and dried for 3 minutes, and the printed matter with a portrait image was produced. Next, the aqueous inkjet ink filled in the inkjet head on the most upstream side of the transport direction was replaced with the aqueous inkjet ink described in Table 7. Then, the dried portrait image printed matter was fixed on the conveyor again, and the conveyor was driven at a constant speed. When the portrait image printed matter passed under the installation part of inkjet heads, the aqueous inkjet ink was ejected only from the inkjet head on the most upstream side at a drop volume of 2 pL, and a solid image with a coverage rate of 100% was printed. Note that at this time, the solid image was printed so as to completely overlap the portrait image. Immediately after printing, the printed matter was put into an air oven at 70 °C and dried for 3 minutes to produce printed matter with the layered portrait image.

[Examples 146 to 152]

The combinations of a pretreatment liquid and aqueous inkjet inks shown in Table 7 below were evaluated as follows. Note that the evaluation results were as shown in Table 7.

<Evaluation 7: evaluation of image quality of layered portrait printed matter>

Based on the above "production of printed matter III", a layered portrait image was printed at three types film substrate-transfer speeds (printing speeds) of 25 m/min, 50 m/min, and 75 m/min for each combination of a pretreatment liquid and aqueous inkjet inks shown in Table 7 below. Then, the degree of voids, the degree of dot shape, and the presence or absence of mixed color in the layered portrait image were magnified at 200 times from the non-printing surface side of printed matter using an optical microscope, and image quality was comprehensively determined. The evaluation criteria were as follows, and ◎, ○, and Δ were considered to be practically usable.

(Evaluation criteria)

◎: In the printed matter printed at 75 m/min, neither voids nor dot shape disturbance was observed, nor was there any mixed color.
○: In the printed matter printed at 75 m/min, one or more of voids, dot shape disturbance, and mixed color were observed, but in the printed matter printed at 50 m/min, neither voids nor dot shape disturbance was observed, nor was there any mixed color.
△: In the printed matter printed at 50 m/min, one or more of voids, dot shape disturbance, and mixed color were observed, but in the printed matter printed at 25 m/min, neither voids nor dot shape disturbance was observed, nor was there any mixed color.
x: In the printed matter printed at 25 m/min, one or more of voids, dot shape disturbance, and mixed color were observed.

<Evaluation 8: evaluation of adhesion of layered portrait printed matter>

Based on the above "production of printed matter III", for each combination of a pretreatment liquid and aqueous inkjet inks shown in Table 7 below, a layered portrait image was printed at a film substrate-transfer speed (printing speed) of 50 m/min. Adhesion of the layered portrait printed matter was evaluated using the same method and evaluation criteria as in evaluation 2A above except that the central part of the layered portrait image was used for evaluation.

[Table 7]

**Table 7**

| **Example** No. | Combination of pretreatment liquid and inkjet inks | | | | | | Evaluation results | |
|---|---|---|---|---|---|---|---|---|
| | Pretreatment liquid | Inkjet inks | | | | | Evaluation7 | Evaluation8 |
| | | Printed first (first inkjet ink) | | | | Printed later (second inkjet ink) | Image quality of layered portrait printed matter | Adhesion of layered portrait printed matter |
| | | Filled furthest upstream | Filled second furthest upstream | Filled third furthest upstream | Filled furthest downstream | | | |
| Example 146 | 1 | 1K | 1C | 1M | 1Y | 26W | ◎ | ◎ |
| Example147 | 1 | 7K | 7C | 7M | 7Y | 26W | ◎ | ◎ |
| Example 148 | 1 | 10K | 10C | 10M | 10Y | 26W | ○ | △ |
| Example 149 | 1 | 21K | 21C | 21M | 21Y | 26W | △ | ○ |
| Example 150 | 1 | 25K | 25C | 25M | 25Y | 26W | ◎ | ◎ |
| Example 1 51 | 13 | 1K | 1C | 1M | 1Y | 26W | ◎ | ◎ |
| Example152 | 36 | 1K | 1C | 1M | 1Y | 26W | ○ | ○ |

As is clear from Table 7, even when the first aqueous ink includes multiple aqueous inkjet inks, the recording liquid set satisfying the conditions of te invention of the present application can obtain printed matter having excellent image qulity and adhesion.

## Claims

1. An aqueous recording liquid set, comprising: a pretreatment liquid; and a first aqueous inkjet ink, wherein

   the pretreatment liquid includes resin particles (A1), a calcium ion, a plurality of carboxylic acid ions, and water, one or more of the plurality of carboxylic acid ions are a hydroxycarboxylic acid ion,
   when an amount of the resin particles (A1) contained in 100 g of the pretreatment liquid is set as R (g) and a millimolar amount of the calcium ion contained in 100 g of the pretreatment liquid is set as CA (mmol), a ratio (R/CA) between a value of R and a value of CA is within a range from 0.11 to 0.50,
   the first aqueous inkjet ink contains a pigment, a plurality of water-soluble organic solvents (B2), and water, and when a mixed SP value of a carboxylic acid including the plurality of carboxylic acid ions and a hydrogen ion is set as SPT and a mixed SP value of the plurality of water-soluble organic solvents (B2) is set as SPB2, a difference between the SPT and the SPB2 (SPT - SPB2) is within a range from -1.0 to 1.0, wherein $(cal/cm^3)^{1/2}$ is used as the unit of the SP value.

2. The aqueous recording liquid set according to claim 1, wherein the R/CA is within a range from 0.20 to 0.40.

3. The aqueous recording liquid set according to claim 1 or 2, wherein the plurality of water-soluble organic solvents (B2) includes a diol-based solvent and a glycol monoalkyl ether-based solvent.

4. The aqueous recording liquid set according to any one of claims 1 to 3, further comprising a second aqueous inkjet ink, wherein

   the second aqueous inkjet ink includes a pigment, a plurality of water-soluble organic solvents (B3), and water, when a mixed SP value of the plurality of water-soluble organic solvents (B3) is set as SPB3, a difference between the SPT and the SPB3 (SPT - SPB3) is within a range from -0.7 to 1.5 and a difference between the SPB2 and the SPB3 (SPB2 - SPB3) is 0.3 or more.

5. The aqueous recording liquid set according to claim 4, wherein
   the plurality of water-soluble organic solvents (B3) includes a diol-based solvent and a glycol monoalkyl ether-based solvent.

6. The aqueous recording liquid set according to claim 4 or 5, wherein the first aqueous inkjet ink or the second aqueous inkjet ink is a white ink.

7. A method for producing printed matter using the aqueous recording liquid set including the pretreatment liquid and the first aqueous inkjet ink according to any one of claims 1 to 3, the method comprising, in this order:

   step 1 of applying the pretreatment liquid on a recording medium;
   step 2 of printing the first aqueous inkjet ink using an inkjet printing method on the recording medium on which the pretreatment liquid has been applied, obtained in the step 1, in such a manner that at least part of the first aqueous inkjet ink overlaps an area on which the pretreatment liquid has been applied; and
   step 3 of drying the recording medium on which the first aqueous inkjet ink has been printed, obtained in the step 2.

8. A method for producing printed matter using the aqueous recording liquid set including the pretreatment liquid, the first aqueous inkjet ink, and the second aqueous inkjet ink according to any one of claims 4 to 6, the method comprising, in this order:

   step 1 of applying the pretreatment liquid on a recording medium;
   step 2 of printing the first aqueous inkjet ink using an inkjet printing method on the recording medium to which the pretreatment liquid has been applied, obtained in the step 1, in such a manner that at least a part of the first aqueous inkjet ink overlaps an area on which the pretreatment liquid has been applied;
   step 3 of printing the second aqueous inkjet ink using an inkjet printing method on the recording medium on which

the first aqueous inkjet ink has been printed, obtained in the step 2, in such a manner that at least a part of the second aqueous inkjet ink overlaps an area on which the first aqueous inkjet ink has been printed; and
step 4 of drying the recording medium on which the second aqueous inkjet ink has been printed, obtained in the step 3.

**Patentansprüche**

1. Wässriges Aufzeichnungsflüssigkeitsset, umfassend: eine Vorbehandlungsflüssigkeit; und eine erste wässrige Tintenstrahltinte, wobei

   die Vorbehandlungsflüssigkeit Harzpartikel (A1), ein Calciumion, eine Vielzahl von Carbonsäureionen und Wasser enthält,
   eines oder mehrere der Vielzahl von Carbonsäureionen ein Hydroxycarbonsäureion sind,
   wenn eine Menge der in 100 g der Vorbehandlungsflüssigkeit enthaltenen Harzpartikel (A1) als R (g) und eine Millimolarmenge des in 100 g der Vorbehandlungsflüssigkeit enthaltenen Calciumions als CA (mmol) festgelegt wird, ein Verhältnis (R/CA) zwischen einem Wert von R und einem Wert von CA in einem Bereich von 0,11 bis 0,50 liegt,
   die erste wässrige Tintenstrahltinte ein Pigment, eine Vielzahl von wasserlöslichen organische Lösungsmitteln (B2) und Wasser enthält, und
   wenn ein gemischter SP-Wert einer Carbonsäure, die die Vielzahl von Carbonsäureionen und ein Wasserstoffion enthält, als SPT und ein gemischter SP-Wert der Vielzahl von wasserlöslichen organischen Lösungsmitteln (B2) als SPB2 festgelegt wird, eine Differenz zwischen SPT und SPB2 (SPT - SPB2) in einem Bereich von -1,0 bis 1,0 liegt, wobei $(cal/cm^3)^{1/2}$ als Einheit des SP-Werts verwendet wird.

2. Wässriges Aufzeichnungsflüssigkeitsset gemäß Anspruch 1, wobei der R/CA-Wert in einem Bereich von 0,20 bis 0,40 liegt.

3. Wässriges Aufzeichnungsflüssigkeitsset gemäß Anspruch 1 oder 2, wobei die Vielzahl von wasserlöslichen organischen Lösungsmittel (B2) ein Lösungsmittel auf Diolbasis und ein Lösungsmittel auf Glykolmonoalkyletherbasis umfasst.

4. Wässriges Aufzeichnungsflüssigkeitsset gemäß einem der Ansprüche 1 bis 3, die ferner eine zweite wässrige Tintenstrahltinte umfasst, wobei

   die zweite wässrige Tintenstrahltinte ein Pigment, eine Vielzahl von wasserlöslichen organischen Lösungsmitteln (B3) und Wasser umfasst,
   wenn ein gemischter SP-Wert der Vielzahl von wasserlöslichen organischen Lösungsmitteln (B3) als SPB3 festgelegt wird, eine Differenz zwischen dem SPT und dem SPB3 (SPT - SPB3) in einem Bereich von -0,7 bis 1,5 liegt und eine Differenz zwischen dem SPB2 und dem SPB3 (SPB2 - SPB3) 0,3 oder mehr beträgt.

5. Wässriges Aufzeichnungsflüssigkeitsset gemäß Anspruch 4, wobei
   die Vielzahl von wasserlöslichen organischen Lösungsmitteln (B3) ein Lösungsmittel auf Diolbasis und ein Lösungsmittel auf Glykolmonoalkyletherbasis umfassen.

6. Wässriges Aufzeichnungsflüssigkeitsset gemäß Anspruch 4 oder 5, wobei die erste wässrige Tintenstrahltinte oder die zweite wässrige Tintenstrahltinte eine weiße Tinte ist.

7. Verfahren zur Herstellung von Druckerzeugnissen unter Verwendung des wässrigen Aufzeichnungsflüssigkeitssets, umfassend die Vorbehandlungsflüssigkeit und die erste wässrige Tintenstrahltinte, gemäß einem der Ansprüche 1 bis 3, wobei das Verfahren in dieser Reihenfolge umfasst:

   Schritt 1 des Aufbringens der Vorbehandlungsflüssigkeit auf ein Aufzeichnungsmedium;
   Schritt 2 des Druckens der ersten wässrigen Tintenstrahltinte unter Verwendung eines Tintenstrahldruckverfahrens auf das Aufzeichnungsmedium, auf das die Vorbehandlungsflüssigkeit aufgebracht wurde, erhalten in Schritt 1, derart, dass mindestens ein Teil der ersten wässrigen Tintenstrahltinte einen Bereich überlappt, auf den die Vorbehandlungsflüssigkeit aufgebracht wurde; und
   Schritt 3 des Trocknens des Aufzeichnungsmediums, auf das die erste wässrige Tintenstrahltinte aufgedruckt

wurde, erhalten in Schritt 2.

8. Verfahren zur Herstellung von Druckerzeugnissen unter Verwendung des wässrigen Aufzeichnungsflüssigkeitssets, umfassend die Vorbehandlungsflüssigkeit, die erste wässrige Tintenstrahltinte und die zweite wässrige Tintenstrahltinte, gemäß einem der Ansprüche 4 bis 6, wobei das Verfahren in dieser Reihenfolge umfasst:

Schritt 1 des Aufbringens der Vorbehandlungsflüssigkeit auf ein Aufzeichnungsmedium;
Schritt 2 des Druckens der ersten wässrigen Tintenstrahltinte unter Verwendung eines Tintenstrahldruckverfahrens auf das Aufzeichnungsmedium, auf das die Vorbehandlungsflüssigkeit aufgebracht wurde, erhalten in Schritt 1, derart, dass mindestens ein Teil der ersten wässrigen Tintenstrahltinte einen Bereich überlappt, auf den die Vorbehandlungsflüssigkeit aufgebracht wurde;
Schritt 3 des Druckens der zweiten wässrigen Tintenstrahltinte unter Verwendung eines Tintenstrahldruckverfahrens auf das Aufzeichnungsmedium, auf das die erste wässrige Tintenstrahltinte gedruckt wurde, erhalten in Schritt 2, derart, dass mindestens ein Teil der zweiten wässrigen Tintenstrahltinte einen Bereich überlappt, auf den die erste wässrige Tintenstrahltinte gedruckt wurde; und
Schritt 4 des Trocknens des Aufzeichnungsmediums, auf das die zweite wässrige Tintenstrahltinte aufgedruckt wurde, erhalten in Schritt 3.

## Revendications

1. Ensemble de liquides d'impression aqueux, comprenant : un liquide de prétraitement et une première encre aqueuse pour jet d'encre ; dans lequel

le liquide de prétraitement comprend des particules de résine (A1), un ion calcium, une pluralité d'ions d'acide carboxylique et de l'eau,
un ou plusieurs ions de la pluralité d'ions d'acide carboxylique consistant en un ion d'acide hydroxycarboxylique,
lorsque la quantité de particules de résine (A1) contenues dans 100 g du liquide de prétraitement est représentée par R (g) et que la quantité millimolaire de l'ion calcium contenu dans 100 g du liquide de prétraitement est représentée par CA (mmol), le rapport (R/CA) entre la valeur de R et la valeur de CA se situe dans une plage allant de 0,11 à 0,50,
la première encre aqueuse pour jet d'encre contient un pigment, une pluralité de solvants organiques hydrosolubles (B2) et de l'eau, et
lorsqu'une valeur SP mixte d'un acide carboxylique comprenant la pluralité d'ions d'acide carboxylique et un ion hydrogène est représentée par SPT et qu'une valeur SP mixte de la pluralité de solvants organiques hydrosolubles (B2) est représentée par SPB2, la différence entre SPT et SPB2 (SPT - SPB2) se situe dans une plage allant de -1,0 à 1,0, $(cal/cm^3)^{1/2}$ étant l'unité employée pour la valeur SP.

2. Ensemble de liquides d'impression aqueux selon la revendication 1, dans lequel le rapport R/CA se situe dans une plage allant de 0,20 à 0,40.

3. Ensemble de liquides d'impression aqueux selon la revendication 1 ou 2, dans lequel la pluralité de solvants organiques hydrosolubles (B2) comprend un solvant à base de diol et un solvant à base de monoalkyléther de glycol.

4. Ensemble de liquides d'impression aqueux selon l'une quelconque des revendications 1 à 3, comprenant en outre une deuxième encre aqueuse pour jet d'encre ; dans lequel

la deuxième encre aqueuse pour jet d'encre contient un pigment, une pluralité de solvants organiques hydrosolubles (B3) et de l'eau,
lorsque la valeur SP mixte de la pluralité de solvants organiques hydrosolubles (B3) est représentée par SPB3, la différence entre SPT et SPB3 (SPT - SPB3) se situe dans une plage allant de -0,7 à 1,5 et la différence entre SPB2 et SPB3 (SPB2 - SPB3) est supérieure ou égale à 0,3.

5. Ensemble de liquides d'impression aqueux selon la revendication 4, dans lequel
la pluralité de solvants organiques hydrosolubles (B3) comprend un solvant à base de diol et un solvant à base de monoalkyléther de glycol.

6. Ensemble de liquides d'impression aqueux selon la revendication 4 ou 5, dans lequel la première encre aqueuse pour

jet d'encre ou la deuxième encre aqueuse pour jet d'encre est une encre blanche.

**7.** Procédé de production d'imprimés à l'aide de l'ensemble de liquides d'impression aqueux comprenant le liquide de prétraitement et la première encre aqueuse pour jet d'encre selon l'une quelconque des revendications 1 à 3, le procédé comprenant, dans cet ordre :

l'étape 1 consistant à appliquer le liquide de prétraitement sur un support d'impression,
l'étape 2 consistant à imprimer la première encre aqueuse pour jet d'encre à l'aide d'un procédé d'impression à jet d'encre sur le support d'impression sur lequel le liquide de prétraitement a été appliqué, obtenu à l'étape 1, de façon qu'au moins une partie de la première encre aqueuse pour jet d'encre recouvre une région sur laquelle le liquide de prétraitement a été appliqué, et
l'étape 3 consistant à faire sécher le support d'impression sur lequel la première encre aqueuse pour jet d'encre a été imprimée, obtenu à l'étape 2.

**8.** Procédé de production d'imprimés à l'aide de l'ensemble de liquides d'impression aqueux comprenant le liquide de prétraitement, la première encre aqueuse pour jet d'encre et la deuxième encre aqueuse pour jet d'encre selon l'une quelconque des revendications 4 à 6, le procédé comprenant, dans cet ordre :

l'étape 1 consistant à appliquer le liquide de prétraitement sur un support d'impression,
l'étape 2 consistant à imprimer la première encre aqueuse pour jet d'encre à l'aide d'un procédé d'impression à jet d'encre sur le support d'impression sur lequel le liquide de prétraitement a été appliqué, obtenu à l'étape 1, de façon qu'au moins une partie de la première encre aqueuse pour jet d'encre recouvre une région sur laquelle le liquide de prétraitement a été appliqué,
l'étape 3 consistant à imprimer la deuxième encre aqueuse pour jet d'encre à l'aide d'un procédé d'impression à jet d'encre sur le support d'impression sur lequel la première encre aqueuse pour jet d'encre a été imprimée, obtenu à l'étape 2, de façon qu'au moins une partie de la deuxième encre aqueuse pour jet d'encre recouvre une région sur laquelle la première encre aqueuse pour jet d'encre a été imprimée, et
l'étape 4 consistant à faire sécher le support d'impression sur lequel la deuxième encre aqueuse pour jet d'encre a été imprimée, obtenu à l'étape 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013159619 A
- JP 2019163349 A
- JP 2020075954 A
- JP 2020189439 A
- JP 2020075436 A
- JP 2021156305 A
- JP 2020 A
- JP 180178 A


### Non-patent literature cited in the description


- Polymer Engineering & Science. *R. F. Fedors*, 1974, vol. 14 (2), 147-154